# EUROPEAN PATENT APPLICATION

(11) **EP 3 412 530 A1**
(43) Date of publication of application: **12.12.2018**
(21) Application number: 17747470.7
(22) Date of filing: 01.02.2017
(51) Int. Cl.: B60W 10/04, B60K 6/485, B60W 10/06, B60W 10/08, B60W 10/101, B60W 20/00, B62J 99/00, B62K 11/00, F16H 61/02, F16H 61/662, F16H 63/50

(54) **LEANING VEHICLE**

(30) Priority: 04.02.2016 JP 2016019983
(71) Applicant: Yamaha Hatsudoki Kabushiki Kaisha, Iwata-shi, Shizuoka 438-8501 (JP)
(72) Inventor: SEKIGUCHI, Naoki, Iwata-shi Shizuoka 438-8501 (JP); MURAYAMA, Takuji, Iwata-shi Shizuoka 438-8501 (JP); NISHIMURA, Tetsuhiko, Iwata-shi Shizuoka 438-8501 (JP)
(74) Representative: Zimmermann, Tankred Klaus
(86) International application number: PCT/JP2017/003641
(87) International publication number: WO 2017/135315

(57) **Abstract**

A leaning vehicle including an electric-motor-driven automatic-controlled transmission, which has improved followability of the driving force in response to an operation of the accelerator by the rider while the leaning vehicle decelerates or accelerates, is provided.

In a leaning vehicle (1), an upstream rotating electric machine (90) is provided upstream of an electric-motor-driven automatic-controlled transmission (50) on a power transmission path from a crankshaft (21) to a driving wheel (3). While the leaning vehicle (1) accelerates or decelerates, a controller (105) is able to perform both transmission control of changing a transmission ratio by controlling an electric motor (71) of the electric-motor-driven automatic-controlled transmission (50) and rotating electric machine control of changing a torque applied to the upstream of the electric-motor-driven automatic-controlled transmission (50) on the power transmission path by controlling the upstream rotating electric machine (90). In the rotating electric machine control while the leaning vehicle (1) accelerates, the torque in the positive rotational direction of the crankshaft (21) imparted to the upstream of the electric-motor-driven automatic-controlled transmission (50) on the power transmission path is changed by controlling the upstream rotating electric machine (90). In the rotating electric machine control when the leaning vehicle (1) decelerates, the torque in the reverse rotational direction of the crankshaft (21) imparted to the upstream of the electric-motor-driven automatic-controlled transmission (50) on the power transmission path is changed by controlling the upstream rotating electric machine (90).

## Description

### [Technical Field]

The present teaching relates to a leaning vehicle.

### [Background Art]

A leaning vehicle such as a motorcycle is configured to generate a driving force which is transmitted from the vehicle to the road surface. The leaning vehicle runs while controlling the posture of the vehicle by controlling the driving force. The leaning vehicle is a vehicle which includes a vehicle body frame structured to lean rightward of the vehicle when turning right and lean leftward of the vehicle when turning left.

A motorcycle is proposed by Patent Literature 1 as a type of leaning vehicle such as the one described above. The motorcycle of Patent Literature 1 includes an electric-motor-driven automatic-controlled transmission. The transmission ratio of the electric-motor-driven automatic-controlled transmission is changed by an electric motor.

### [Citation List]

### [Patent Literatures]

[Patent Literature 1] Japanese Unexamined Patent Publication No. 2012-225443

### [Summary of Invention]

### [Technical Problem]

A leaning vehicle is controlled in such a way that, while decelerating, the rider operates an accelerator grip to decrease the opening degree of the accelerator so as to decrease the opening degree of a throttle valve. For example, when the throttle valve is controlled to be fully closed, no sucked air is introduced into a combustion chamber of an engine main body unit. In other words, the engine main body unit does not generate engine power. Furthermore, engine loss such as a pumping loss is generated. A negative driving force is therefore generated in the leaning vehicle. An amount of the negative driving force is calculated by multiplying the torque generated by the engine loss by the transmission ratio. This negative driving force is equivalent to a so-called braking force. In this connection, the electric-motor-driven automatic-controlled transmission of Patent Literature 1 sets the transmission ratio based on the opening degree of the accelerator when the throttle valve is fully closed. In other words, the electric-motor-driven automatic-controlled transmission of Patent Literature 1 generates a negative driving force based on the transmission ratio which is set in accordance with an operation of the accelerator.

In connection with the leaning vehicle with the electric-motor-driven automatic-controlled transmission, improvement in the followability of the driving force in response to an operation of the accelerator by the rider has been demanded. As a result of repeated experimentations in deceleration and acceleration by using the leaning vehicle of Patent Literature 1, it was found that the followability of the driving force in response to an operation of the accelerator could be further improved.

An object of the present teaching is to provide a leaning vehicle including an electric-motor-driven automatic-controlled transmission, which has improved followability of the driving force in response to an operation of the accelerator by the rider while the leaning vehicle decelerates or accelerates.

### [Solution to Problem]

The inventors of the subject application repeatedly carried out experimentations in deceleration and acceleration of a leaning vehicle by using the leaning vehicle of Patent Literature 1 with the electric-motor-driven automatic-controlled transmission. As a result of this, it was found that the followability of the driving force in response to an operation of the accelerator could be further improved. In the electric-motor-driven automatic-controlled transmission, there is a long time lag from the output of a transmission instruction based on the transmission ratio set in accordance with an accelerator operation to the actual change of the transmission ratio. To put it differently, when the transmission ratio is controlled by the electric-motor-driven automatic-controlled transmission, there is a long time lag from the output of a transmission instruction based on the transmission ratio set in accordance with an accelerator operation to the control of the driving force. The inventors of the subject application considered that the followability of the driving force to an accelerator operation could be further improved if this time lag was shortened.

In the electric-motor-driven automatic-controlled transmission, however, it was difficult to shorten the time lag due to constraints of the electric motor or the like. The inventors of the subject application therefore conceived providing, in a leaning vehicle, a rotating electric machine which was controllable with higher responsiveness than the electric-motor-driven automatic-controlled transmission. In other words, the inventors found that the followability of the driving force in response to an accelerator operation could be improved by generating engine power or engine loss by the rotating electric machine with higher responsiveness than the electric-motor-driven automatic-controlled transmission. The inventors further found that, in a leaning vehicle, the followability of the driving force in response to an accelerator operation could be improved by providing an upstream rotating electric machine generating engine power or engine loss, at a position upstream of the electric-motor-driven automatic-controlled transmission in the power transmission direction. When the engine power or engine loss generated by the upstream rotating electric machine is transmitted to a driving wheel, the torque which is a multiplication of the torque of the upstream rotating electric machine by the transmission ratio is transmitted to the driving wheel. It is therefore possible to significantly change the driving force by a small change in engine power or engine loss generated by the upstream rotating electric machine provided upstream of the electric-motor-driven automatic-controlled transmission in the power transmission direction. As a result of this, it is unnecessary to frequently change the transmission ratio or an amount of change in the transmission ratio is reduced, by the electric-motor-driven automatic-controlled transmission. It is therefore possible to eliminate or shorten the time lag until the electric-motor-driven automatic-controlled transmission changes the transmission ratio. In other words, the followability of the driving force in response to an operation of the accelerator by the rider is improved. To put it differently, the followability of the driving force in response to an operation of the accelerator can be improved by providing, upstream of the electric-motor-driven automatic-controlled transmission in the power transmission direction, an upstream rotating electric machine which is controllable with a higher responsiveness than the electric-motor-driven automatic-controlled transmission.

As compared to four-wheel vehicles such as automobiles, a leaning vehicle is arranged such that the length in the left-right direction is shorter than the length in the front-rear direction. In consideration of the followability of the driving force in response to an operation of the accelerator, the controllability of the leaning vehicle is preferably improved in the left-right direction. For this reason, in the leaning vehicle, a heavy load is preferably provided at around the center of the leaning vehicle. Power from the crankshaft to the driving wheel is transmitted via a power transmission path. Therefore, an engine main body unit including the crankshaft is provided upstream in the power transmission direction. The driving wheel is provided downstream in the power transmission direction. The engine main body unit which is a heavy load is provided at around the center of the leaning vehicle. Meanwhile, the driving wheel is provided at an end portion of the leaning vehicle. In this connection, the rotating electric machine is also a heavy load. The rotating electric machine is provided at around the center of the leaning vehicle when the machine is upstream of the electric-motor-driven automatic-controlled transmission in the power transmission direction, as compared to a case where the machine is provided downstream. The controllability of the leaning vehicle in the left-right direction is therefore improved when the upstream rotating electric machine can be provided upstream of the electric-motor-driven automatic-controlled transmission in the power transmission direction.

As compared to four-wheel vehicles such as automobiles, a leaning vehicle is small in size. In consideration of the followability of the driving force in response to an operation of the accelerator of the leaning vehicle, increase in size of the vehicle is not desirable. The size of the rotating electric machine is therefore preferably small. Furthermore, in the leaning vehicle, the upstream rotating electric machine provided upstream of the electric-motor-driven automatic-controlled transmission in the power transmission direction may rotate at a higher rotation speed than a downstream rotating electric machine provided downstream of the electric-motor-driven automatic-controlled transmission in the power transmission direction. The efficiency of a motor depends on its rotation speed. In the upstream rotating electric machine provided upstream of the electric-motor-driven automatic-controlled transmission in the power transmission direction may be more efficient as a motor than the downstream rotating electric machine provided downstream of the electric-motor-driven automatic-controlled transmission in the power transmission direction. Typically, a larger rotating electric machine outputs higher power. On this account, when the upstream rotating electric machine provided upstream of the electric-motor-driven automatic-controlled transmission in the power transmission direction is more efficient as a motor than the downstream rotating electric machine provided downstream of the electric-motor-driven automatic-controlled transmission in the power transmission direction, the upstream rotating electric machine can be smaller in size than the downstream rotating electric machine but produce the same power. The increase in size of the vehicle may therefore be restrained by providing an upstream rotating electric machine upstream of the electric-motor-driven automatic-controlled transmission in the power transmission direction.

The upstream rotating electric machine includes a battery. While the leaning vehicle accelerates, the upstream rotating electric machine cannot impart torque if the battery runs out while the upstream rotating electric machine is imparting torque in the positive rotational direction of the crankshaft to the upstream of the electric-motor-driven automatic-controlled transmission in the power transmission direction. When the upstream rotating electric machine no longer imparts torque, the followability of the driving force in response to an operation of the accelerator by the rider is decreased. Meanwhile, while the leaning vehicle decelerates, the upstream rotating electric machine cannot impart torque if the battery is fully charged while the upstream rotating electric machine is imparting torque in the reverse rotational direction of the crankshaft to the upstream of the electric-motor-driven automatic-controlled transmission in the power transmission direction. When the upstream rotating electric machine no longer imparts torque, the followability in response to an operation of the accelerator by the rider is decreased. In the electric-motor-driven automatic-controlled transmission, there is a long time lag from the output of a transmission instruction based on the transmission ratio set in accordance with an accelerator operation to the actual control of the driving force. On this account, when the upstream rotating electric machine is provided in the leaning vehicle with the electric-motor-driven automatic-controlled transmission, the followability of the driving force in response to an operation of the accelerator by the rider is further decreased when the upstream rotating electric machine can no longer impart torque. Therefore, the upstream rotating electric machine is unlikely to be provided in the leaning vehicle with the electric-motor-driven automatic-controlled transmission. The inventors of the subject application, however, focused on a difference in responsiveness between the electric-motor-driven automatic-controlled transmission and the upstream rotating electric machine. The inventors then found that, by utilizing the difference in responsiveness between the electric-motor-driven automatic-controlled transmission and the upstream rotating electric machine, transmission ratio control of changing the transmission ratio by controlling the electric motor and rotating electric machine control of changing the torque imparted to the upstream of the electric-motor-driven automatic-controlled transmission on the power transmission path by controlling the upstream rotating electric machine were both performed by a controller. With this arrangement, the delay in the followability of the driving force in response to an operation of the accelerator by the rider may be prevented even when the upstream rotating electric machine cannot impart torque.

According to one aspect of the present teaching, a leaning vehicle includes a vehicle body frame which is structured to lean rightward of the leaning vehicle when turning right and to lean leftward of the leaning vehicle when turning left; an engine main body unit which includes a crankshaft; an electric-motor-driven automatic-controlled transmission which is connected to the crankshaft and is configured to transmit power of the engine main body unit at a transmission ratio set by an electric motor; at least one driving wheel which is connected to the electric-motor-driven automatic-controlled transmission and is configured to generate a driving force by the power transmitted from the electric-motor-driven automatic-controlled transmission; an upstream rotating electric machine which is a rotating electric machine provided upstream of the electric-motor-driven automatic-controlled transmission on a power transmission path on which the power is transmitted from the crankshaft to the at least one driving wheel, and which is configured to impart a torque in a reverse rotational direction of the crankshaft and to impart a torque in a positive rotational direction of the crankshaft, to the upstream of the electric-motor-driven automatic-controlled transmission on the power transmission path; and a controller which is configured to be able to perform both transmission control of changing the transmission ratio by controlling the electric motor of the electric-motor-driven automatic-controlled transmission and rotating electric machine control of changing the torque imparted to the upstream of the electric-motor-driven automatic-controlled transmission on the power transmission path by controlling the upstream rotating electric machine, while the leaning vehicle accelerates or decelerates, wherein (1) while the leaning vehicle accelerates, the controller is configured to perform either acceleration transmission control of changing the transmission ratio by controlling the electric motor of the electric-motor-driven automatic-controlled transmission or acceleration rotating electric machine control of changing a torque in a positive rotational direction of the crankshaft imparted to the upstream of the electric-motor-driven automatic-controlled transmission on the power transmission path by controlling the upstream rotating electric machine, or (2) while the leaning vehicle decelerates, the controller is configured to perform either deceleration transmission control of changing the transmission ratio by controlling the electric motor of the electric-motor-driven automatic-controlled transmission or deceleration rotating electric machine control of changing the torque in the reverse rotational direction of the crankshaft imparted to the upstream of the electric-motor-driven automatic-controlled transmission on the power transmission path by controlling the upstream rotating electric machine.

According to this arrangement, the leaning vehicle includes the engine main body unit, the electric-motor-driven automatic-controlled transmission, the driving wheel, the upstream rotating electric machine, and the controller. The leaning vehicle includes a vehicle body frame which is structured to lean rightward of the vehicle when turning right and lean leftward of the vehicle when turning left. The engine main body unit generates engine power while the leaning vehicle accelerates. Furthermore, the engine main body unit generates engine loss while the leaning vehicle decelerates. The engine main body unit includes the crankshaft. The electric-motor-driven automatic-controlled transmission is connected to the crankshaft. The electric-motor-driven automatic-controlled transmission is configured to transmit the power of the engine main body unit at a transmission ratio set by an electric motor. In other words, power is transmitted via the crankshaft to the electric-motor-driven automatic-controlled transmission. The power is either engine power or engine loss. The transmission ratio is, for example, determined by the accelerator opening degree and the vehicle speed. At least one driving wheel is connected to the electric-motor-driven automatic-controlled transmission. The at least one driving wheel generates driving force by means of the power transmitted from the electric-motor-driven automatic-controlled transmission. The electric-motor-driven automatic-controlled transmission is configured to control the driving force of the driving wheel by changing the transmission ratio by controlling the electric motor. The upstream rotating electric machine is a rotating electric machine provided upstream of the electric-motor-driven automatic-controlled transmission on a power transmission path on which power is transmitted from the crankshaft to the driving wheel. The upstream rotating electric machine imparts torque in the reverse rotational direction of the crankshaft to the upstream of the electric-motor-driven automatic-controlled transmission on the power transmission path, while the leaning vehicle decelerates. The upstream rotating electric machine imparts torque in the positive rotational direction of the crankshaft to the upstream of the electric-motor-driven automatic-controlled transmission on the power transmission path, while the leaning vehicle decelerates. The upstream rotating electric machine generates engine loss by imparting torque in the reverse rotational direction of the crankshaft to the upstream of the electric-motor-driven automatic-controlled transmission on the power transmission path, while the leaning vehicle decelerates. The upstream rotating electric machine increases the engine power by adding torque in the positive rotational direction of the crankshaft to the upstream of the electric-motor-driven automatic-controlled transmission on the power transmission path, while the leaning vehicle accelerates. As the torque in the positive rotational direction of the crankshaft increases, a positive driving force increases. As the torque in the reverse rotational direction of the crankshaft is generated, a negative driving force increases. The upstream rotating electric machine controls the driving force by imparting torque in the reverse rotational direction of the crankshaft or in the positive rotational direction of the crankshaft. The electric-motor-driven automatic-controlled transmission includes the electric motor and other mechanisms. To put it differently, in the control of changing the transmission ratio by the electric-motor-driven automatic-controlled transmission, there is a constraint due to the mechanism of the electric-motor-driven automatic-controlled transmission including the electric motor. In the electric-motor-driven automatic-controlled transmission, there is a time lag from the control of changing the transmission ratio based on the transmission ratio set in accordance with an accelerator operation to the actual control of the driving force of the driving wheel. Meanwhile, in the upstream rotating electric machine, there is no or a small number of mechanisms provided between the machine and the crankshaft. For this reason, in the upstream rotating electric machine, there is little time lag from the control of changing the torque imparted to the upstream of the electric-motor-driven automatic-controlled transmission on the power transmission path by controlling the upstream rotating electric machine to the actual control of the driving force of the driving wheel. As such, the electric-motor-driven automatic-controlled transmission and the upstream rotating electric machine are different from each other in responsiveness regarding the control of the driving force. The controller is configured to be able to perform both the transmission control and the rotating electric machine control while the leaning vehicle accelerates or decelerates. The transmission control is a control of changing the transmission ratio by controlling the electric motor of the electric-motor-driven automatic-controlled transmission. The rotating electric machine control is a control of changing torque imparted to the upstream of the electric-motor-driven automatic-controlled transmission on the power transmission path by controlling the upstream rotating electric machine. The controller is configured to perform acceleration transmission control or acceleration rotating electric machine control while the leaning vehicle accelerates. The acceleration transmission control is a control of changing the transmission ratio by controlling the electric motor of the electric-motor-driven automatic-controlled transmission. The acceleration rotating electric machine control is a control of changing torque in the positive rotational direction of the crankshaft imparted to the upstream of the electric-motor-driven automatic-controlled transmission on the power transmission path by controlling the upstream rotating electric machine. The controller is configured to perform deceleration transmission control or deceleration rotating electric machine control while the leaning vehicle decelerates. The deceleration transmission control is a control of changing the transmission ratio by controlling the electric motor of the electric-motor-driven automatic-controlled transmission. The deceleration rotating electric machine control is a control of changing torque in the reverse rotational direction of the crankshaft imparted to the upstream of the electric-motor-driven automatic-controlled transmission on the power transmission path by controlling the upstream rotating electric machine.

When the controller carries out the acceleration rotating electric machine control or the deceleration rotating electric machine control, the upstream rotating electric machine imparts torque to the upstream of the electric-motor-driven automatic-controlled transmission on the power transmission path. The driving force which is equal to the multiplication of the torque of the upstream rotating electric machine by the transmission ratio is transmitted to the driving wheel. As a result of this, it is unnecessary to frequently change the transmission ratio by the electric-motor-driven automatic-controlled transmission, or an amount of change in the transmission ratio is reduced. It is therefore possible to eliminate or shorten the time lag until the electric-motor-driven automatic-controlled transmission changes the transmission ratio. In other words, the followability of the driving force in response to an operation of the accelerator by the rider can be improved. To put it differently, the followability of the driving force in response to an operation of the accelerator can be improved by providing, upstream of the electric-motor-driven automatic-controlled transmission in the power transmission direction, the upstream rotating electric machine which is controllable with higher responsiveness than the electric-motor-driven automatic-controlled transmission. It is therefore possible to change the driving force by a change in small engine power or engine loss generated by the upstream rotating electric machine. As such, in the leaning vehicle of the present teaching, the followability of the driving force in response to an operation of the accelerator by the rider can be improved in deceleration or acceleration.

As compared to four-wheel vehicles such as automobiles, a leaning vehicle is arranged such that the length in the left-right direction is shorter than the length in the front-rear direction. In consideration of the followability of the driving force in response to an operation of the accelerator, the controllability of the leaning vehicle is preferably improved in the left-right direction. For this reason, in the leaning vehicle, a heavy load is preferably provided at around the center of the leaning vehicle. Power from the crankshaft to the driving wheel is transmitted via a power transmission path. Therefore, an engine main body unit including the crankshaft is provided upstream in the power transmission direction. The driving wheel is provided downstream in the power transmission direction. The engine main body unit which is a heavy load is provided at around the center of the leaning vehicle. Meanwhile, the driving wheel is provided at an end portion of the leaning vehicle. In this connection, the rotating electric machine is also a heavy load. The rotating electric machine is provided at around the center of the leaning vehicle when the machine is upstream of the electric-motor-driven automatic-controlled transmission in the power transmission direction, as compared to a case where the machine is provided downstream. The controllability of the leaning vehicle in the left-right direction is therefore further improved when the upstream rotating electric machine is provided upstream of the electric-motor-driven automatic-controlled transmission in the power transmission direction.

As compared to four-wheel vehicles such as automobiles, a leaning vehicle is small in size. In consideration of the followability of the driving force in response to an operation of the accelerator of the leaning vehicle, increase in size of the vehicle is not desirable. The size of the rotating electric machine is therefore preferably small. Furthermore, in the leaning vehicle, the upstream rotating electric machine provided upstream of the electric-motor-driven automatic-controlled transmission in the power transmission direction may rotate at a higher rotation speed than a downstream rotating electric machine provided downstream of the electric-motor-driven automatic-controlled transmission in the power transmission direction. The efficiency of a motor depends on its rotation speed. In the upstream rotating electric machine provided upstream of the electric-motor-driven automatic-controlled transmission in the power transmission direction may be more efficient as a motor than the downstream rotating electric machine provided downstream of the electric-motor-driven automatic-controlled transmission in the power transmission direction. Typically, a larger rotating electric machine outputs higher power. On this account, when the upstream rotating electric machine provided upstream of the electric-motor-driven automatic-controlled transmission in the power transmission direction is more efficient as a motor than the downstream rotating electric machine provided downstream of the electric-motor-driven automatic-controlled transmission in the power transmission direction, the upstream rotating electric machine can be smaller in size than the downstream rotating electric machine but produce the same power. The increase in size of the leaning vehicle may therefore be restrained by providing an upstream rotating electric machine upstream of the electric-motor-driven automatic-controlled transmission in the power transmission direction.

According to another aspect of the present teaching, the leaning vehicle is arranged such that, the controller is configured to (1) perform the acceleration transmission control and the acceleration rotating electric machine control in a switching manner or simultaneously performs the acceleration transmission control and the acceleration rotating electric machine control, while the leaning vehicle accelerates, and (2) perform the deceleration transmission control and the deceleration rotating electric machine control in a switching manner or simultaneously performs the deceleration transmission control and the deceleration rotating electric machine control, while the leaning vehicle decelerates.

According to this arrangement, the controller is configured to perform acceleration transmission control or acceleration rotating electric machine control in a switching manner while the leaning vehicle accelerates. In other words, while the leaning vehicle accelerates, the controller is configured to perform only one of the acceleration transmission control and the acceleration rotating electric machine control, performs the acceleration rotating electric machine control after the acceleration transmission control, or performs the acceleration transmission control after the acceleration rotating electric machine control. Furthermore, the controller is configured to simultaneously perform the acceleration transmission control and the acceleration rotating electric machine control while the leaning vehicle accelerates. The controller performs deceleration transmission control or deceleration rotating electric machine control in a switching manner while the leaning vehicle decelerates. In other words, while the leaning vehicle decelerates, the controller is configured to perform only one of the deceleration transmission control and the deceleration rotating electric machine control, performs the deceleration rotating electric machine control after the deceleration transmission control, or performs the deceleration transmission control after the deceleration rotating electric machine control. Furthermore, the controller is configured to simultaneously perform the deceleration transmission control and the deceleration rotating electric machine control while the leaning vehicle decelerates. The controller is able to perform control in accordance with the responsiveness of the control of the driving force by switching between the control of the electric-motor-driven automatic-controlled transmission and the control of the upstream rotating electric machine. This makes it possible to improve the responsiveness of the control of the driving force. Furthermore, the controller is configured to be able to improve the responsiveness of the control of the driving force by simultaneously performing the control of the electric-motor-driven automatic-controlled transmission and the control of the upstream rotating electric machine. As such, in the leaning vehicle of the present teaching, the followability of the driving force in response to an operation of the accelerator by the rider can be improved in deceleration or acceleration.

According to another aspect of the present teaching, the leaning vehicle is arranged such that the electric-motor-driven automatic-controlled transmission is a continuously variable transmission including a primary pulley which includes two primary sheaves and is arranged to change the widths of the two primary sheaves by the electric motor, a secondary pulley, and a dry belt which is wound onto the primary pulley and the secondary pulley and has a slide portion which is a part in contact with the primary pulley and the secondary pulley and not lubricated by lubricant, and the controller changes the transmission ratio by changing the widths of the two primary sheaves by controlling the electric motor.

According to this arrangement, the electric-motor-driven automatic-controlled transmission is a continuously variable transmission using a dry belt. The continuously variable transmission includes the primary pulley, the secondary pulley, the dry belt, and the dry belt casing. The primary pulley includes the two primary sheaves. The primary pulley is arranged so that the widths of the two primary sheaves are changed by the electric motor. The dry belt is wound onto the primary pulley and the secondary pulley. In the dry belt, the slide portion in contact with the primary pulley and the secondary pulley is not lubricated by lubricant. The controller changes the transmission ratio by changing the widths of the two primary sheaves by controlling the electric motor. In the continuously variable transmission employing the dry belt in which the slide portion is not lubricated by lubricant, friction occurs at the slide portion. Meanwhile, in the continuously variable transmission employing a wet belt in which the slide portion is lubricated by lubricant, friction is unlikely to occur at the slide portion. On this account, responsiveness of control of the driving force is low in the continuously variable transmission employing the dry belt, as compared to the transmission employing the wet belt. For this reason, in the continuously variable transmission employing the dry belt, there is a long time lag from the control of changing the transmission ratio based on the transmission ratio set in accordance with an accelerator operation to the actual control of the driving force. Because the controller is configured to be able to perform both the transmission control and the rotating electric machine control, the responsiveness of the control of the driving force is improved. As such, in the leaning vehicle of the present teaching, the followability of the driving force in response to an operation of the accelerator by the rider can be improved in deceleration or acceleration.

According to another aspect of the present teaching, the leaning vehicle is arranged such that the electric-motor-driven automatic-controlled transmission is a stepped gearbox including an actuator driven by the electric motor and transmission gears selectable by the actuator, and the controller is configured to select one of the transmission gears by controlling the actuator by the electric motor, so as to change the transmission ratio.

According to this arrangement, the electric-motor-driven automatic-controlled transmission is a stepped gearbox including the actuator and the transmission gears. The actuator is driven by the electric motor. The transmission gears are arranged to be selectable by the actuator. The controller controls the actuator by the electric motor to select one of the transmission gears so as to set the transmission ratio. Furthermore, when a change of the transmission ratio is controlled by the electric-motor-driven automatic-controlled transmission, connection and disconnection of the clutch are performed by the actuator. There is a constraint due to the mechanism of the electric-motor-driven automatic-controlled transmission including the actuator driven by the electric motor. On this account, in the stepped gearbox, there is a time lag from the control of changing the transmission ratio based on the transmission ratio set in accordance with an accelerator operation to the actual control of the driving force. Because the controller is configured to be able to perform both the transmission control and the rotating electric machine control, the responsiveness of the control of the driving force is improved. As such, in the leaning vehicle of the present teaching, the followability of the driving force in response to an operation of the accelerator by the rider can be improved in deceleration or acceleration.

According to another aspect of the present teaching, the leaning vehicle is arranged such that a rotating electric machine rotational axis which is a rotational axis of the upstream rotating electric machine is provided on the same linear line as a crankshaft rotational axis which is a rotational axis of the crankshaft, and the upstream rotating electric machine is connected to the crankshaft.

According to this arrangement, the rotating electric machine rotational axis which is the rotational axis of the upstream rotating electric machine is provided on the same linear line as the crankshaft rotational axis which is the rotational axis of the crankshaft. The upstream rotating electric machine is able to directly apply the torque to the crankshaft upstream of the electric-motor-driven automatic-controlled transmission on the power transmission path. In other words, the upstream rotating electric machine is able to improve the responsiveness of the control of the driving force. As such, in the leaning vehicle of the present teaching, the followability of the driving force in response to an operation of the accelerator by the rider can be improved in deceleration or acceleration.

According to another aspect of the present teaching, the leaning vehicle is arranged such that a rotating electric machine rotational axis which is a rotational axis of the upstream rotating electric machine is provided to be parallel to a crankshaft rotational axis which is a rotational axis of the crankshaft, and the upstream rotating electric machine is connected to the crankshaft via a power transmission mechanism which is configured to transmit the power.

According to this arrangement, the rotating electric machine rotational axis which is the rotational axis of the upstream rotating electric machine is provided to be parallel to the crankshaft rotational axis which is the rotational axis of the crankshaft. The upstream rotating electric machine is connected to the crankshaft via the power transmission mechanism. The upstream rotating electric machine is able to directly apply the torque to the crankshaft upstream of the electric-motor-driven automatic-controlled transmission on the power transmission path, via the power transmission mechanism. In other words, the upstream rotating electric machine is able to improve the responsiveness of the control of the driving force. As such, in the leaning vehicle of the present teaching, the followability of the driving force in response to an operation of the accelerator by the rider can be improved in deceleration or acceleration. The power transmission mechanism is a gear, a chain, etc.

According to another aspect of the present teaching, the leaning vehicle is arranged such that, while the leaning vehicle accelerates or decelerates, the controller is configured to calculate the torque imparted by the upstream rotating electric machine based on at least one of an engine rotation speed which is a rotation speed of the crankshaft, an upstream rotating electric machine rotation speed which is a rotation speed of the upstream rotating electric machine, and the transmission ratio of the electric-motor-driven automatic-controlled transmission.

According to this arrangement, while the leaning vehicle accelerates or decelerates, the controller is configured to calculate the torque imparted by the upstream rotating electric machine based on at least one of the engine rotation speed, the upstream rotating electric machine rotation speed, and the transmission ratio. The engine rotation speed is rotation speed of the crankshaft. The upstream rotating electric machine rotation speed is a rotation speed of the upstream rotating electric machine. The transmission ratio is a transmission ratio set by the electric-motor-driven automatic-controlled transmission. The leaning vehicle of the present teaching is able to calculate the torque applied by the upstream rotating electric machine based on the state of the leaning vehicle. On this account, when the state of the leaning vehicle is the same, the leaning vehicle is able to run in the same manner. To put it differently, in the leaning vehicle, while the leaning vehicle accelerates or decelerates, the reproducibility is improved and hence the followability of the driving force in response to an operation of the accelerator by the rider is improved.

According to another aspect of the present teaching, the leaning vehicle is arranged such that, while the leaning vehicle accelerates or decelerates, the controller is configured to calculate the transmission ratio changed by the electric-motor-driven automatic-controlled transmission, based on at least one of an operation amount of an accelerator grip and the speed of the leaning vehicle.

According to this arrangement, the controller is configured to calculate the transmission ratio changed by the electric-motor-driven automatic-controlled transmission, based on at least one of an operation amount of the accelerator grip and the speed of the vehicle. The leaning vehicle of the present teaching is therefore able to calculate the transmission ratio changed by the electric-motor-driven automatic-controlled transmission based on the state of the leaning vehicle. On this account, when the state of the leaning vehicle is the same, the leaning vehicle is able to run in the same manner. To put it differently, in the leaning vehicle, while the leaning vehicle accelerates or decelerates, the reproducibility is improved and hence the followability of the driving force in response to an operation of the accelerator by the rider is improved.

According to another aspect of the present teaching, the leaning vehicle is arranged such that the controller includes a transmission control unit configured to perform the transmission control and a rotating electric machine control unit configured to perform the rotating electric machine control, and the transmission control unit and the rotating electric machine control unit are formed in a single apparatus.

According to this arrangement, the controller includes the transmission control unit configured to perform the transmission control and the rotating electric machine control unit configured to perform the rotating electric machine control. The transmission control unit and the rotating electric machine control unit are formed in a single apparatus. The single apparatus indicates an apparatus which is a physically single apparatus. This makes it possible to downsize the controller. The increase in size of the leaning vehicle is therefore restrained.

According to another aspect of the present teaching, the leaning vehicle is arranged such that the controller includes a transmission control unit configured to perform the transmission control and a rotating electric machine control unit configured to perform the rotating electric machine control, and the transmission control unit and the rotating electric machine control unit are formed in two different apparatuses, respectively.

According to this arrangement, the controller includes the transmission control unit configured to perform the transmission control and the rotating electric machine control unit configured to perform the rotating electric machine control. The transmission control unit and the rotating electric machine control unit are formed in two different apparatuses respectively electrically connected to each other. The two different apparatuses are two physical apparatuses electrically connected to each other. With these arrangements, the layout of the controller is less constrained. The increase in size of the leaning vehicle is therefore restrained.

According to another aspect of the present teaching, the leaning vehicle is arranged such that the upstream rotating electric machine includes a battery and the upstream rotating electric machine is electrically connected to the battery.

According to this arrangement, in the leaning vehicle, the upstream rotating electric machine includes the battery. The upstream rotating electric machine is electrically connected to the battery. The battery is therefore able to supply power to the upstream rotating electric machine, and hence the torque in the positive rotational direction of the crankshaft can be imparted. Furthermore, the battery makes it possible to impart the torque in the reverse rotational direction of the crankshaft to the upstream rotating electric machine so as to store the power generated by the upstream rotating electric machine.

According to another aspect of the present teaching, the leaning vehicle is arranged such that the controller is configured to perform at least one of the transmission control and the rotating electric machine control based on the remaining capacity of the battery.

According to this arrangement, the controller controls the upstream rotating electric machine based on the remaining capacity of the battery. Furthermore, the controller controls the electric motor of the electric-motor-driven automatic-controlled transmission based on the remaining capacity of the battery. In this connection, for example, if the battery runs out while the leaning vehicle accelerates, the upstream rotating electric machine is not able to impart the torque. When the upstream rotating electric machine no longer imparts torque, the followability of the driving force in response to an operation of the accelerator by the rider is decreased. For this reason, the controller controls the electric motor to change the transmission ratio of the electric-motor-driven automatic-controlled transmission before the battery runs out. This makes it possible to improve the followability of the driving force in response to an accelerator operation by the rider. Meanwhile, for example, if the battery is fully charged while the leaning vehicle decelerates, the upstream rotating electric machine is not able to impart the torque. When the upstream rotating electric machine no longer imparts torque, the followability in response to an operation of the accelerator by the rider is decreased. For this reason, the controller controls the electric motor to change the transmission ratio of the electric-motor-driven automatic-controlled transmission before the battery is fully charged. This makes it possible to improve the followability of the driving force in response to an accelerator operation by the rider. To put it differently, the controller is configured to perform at least one of the transmission control and the rotating electric machine control based on the remaining capacity of the battery by utilizing the difference in responsiveness between the electric-motor-driven automatic-controlled transmission and the upstream rotating electric machine. This makes it possible to improve the followability of the driving force in response to an operation of the accelerator by the rider.

According to another aspect of the present teaching, the leaning vehicle is arranged such that, while the leaning vehicle accelerates, (a) if the remaining capacity of the battery is higher than an acceleration lower limit set in advance, the controller simultaneously controls the upstream rotating electric machine and the electric motor of the electric-motor-driven automatic-controlled transmission, (b) if the remaining capacity of the battery is equal to or lower than the acceleration lower limit set in advance, the controller controls the electric motor of the electric-motor-driven automatic-controlled transmission, and while the leaning vehicle decelerates, (c) if the remaining capacity of the battery is lower than a deceleration upper limit set in advance, the controller simultaneously controls the upstream rotating electric machine and the electric motor of the electric-motor-driven automatic-controlled transmission, and (d) if the remaining capacity of the battery is equal to or higher than the deceleration upper limit set in advance, the controller controls the electric motor of the electric-motor-driven automatic-controlled transmission.

According to this arrangement, while the leaning vehicle accelerates, (a) if the remaining capacity of the battery is higher than an acceleration lower limit set in advance, the controller simultaneously controls the upstream rotating electric machine and the electric motor of the electric-motor-driven automatic-controlled transmission. While the leaning vehicle accelerates, (b) if the remaining capacity of the battery is equal to or lower than the acceleration lower limit set in advance, the controller controls the electric motor of the electric-motor-driven automatic-controlled transmission. While the leaning vehicle decelerates, (c) if the remaining capacity of the battery is lower than a deceleration upper limit set in advance, the controller simultaneously controls the upstream rotating electric machine and the electric motor of the electric-motor-driven automatic-controlled transmission. While the leaning vehicle decelerates, (d) if the remaining capacity of the battery is equal to or higher than the deceleration upper limit set in advance, the controller controls the electric motor of the electric-motor-driven automatic-controlled transmission. while the leaning vehicle accelerates, if the controller controls the upstream rotating electric machine while the remaining capacity of the battery is small, the battery is likely to run out during the control of the upstream rotating electric machine. The controller does therefore not control the upstream rotating electric machine, and controls the electric motor so as to change the transmission ratio of the electric-motor-driven automatic-controlled transmission. With this, followability of the driving force in response to an operation of the accelerator by the rider can be improved. Meanwhile, while the leaning vehicle decelerates, if the controller controls the upstream rotating electric machine while the remaining capacity of the battery is large, the battery is likely to be fully charged during control of the upstream rotating electric machine. The controller does therefore not control the upstream rotating electric machine, and controls the electric motor of the electric-motor-driven automatic-controlled transmission so as to change the transmission ratio. With this, followability of the driving force in response to an operation of the accelerator by the rider can be improved. Therefore, full or excessive charging of the battery can be prevented. Furthermore, rapid changes in the driving force are restrained while the leaning vehicle accelerates or decelerates, irrespective of the charging state of the battery.

In this specification, the power transmission path is a path on which power is transmitted from the crankshaft to the driving wheel. The crankshaft is the upstream end of the power transmission path. The driving wheel is the downstream end of the power transmission path.

In this specification, the positive rotational direction of the crankshaft is the same direction as the rotation of the crankshaft when the leaning vehicle advances. The reverse rotational direction of the crankshaft is a direction opposite to the direction in which the crankshaft rotates when the leaning vehicle advances.

In this specification, an operation amount of the accelerator grip is an operation amount of the accelerator grip by the rider. The operation amount of the accelerator grip may be a rotation angle of the accelerator grip or the opening degree of the throttle valve of the engine main body unit.

In this specification, the lubrication space is a space where lubricant is provided and where components provided therein are lubricated by the lubricant. Examples of the lubricant include oil and grease.

In this specification, when a component is exposed to the lubrication space formed by the crankcase member, the space in which the component is provided is not isolated in the lubrication space.

In this specification, the slide portion of the dry belt is a part where the dry belt is in contact with the primary pulley and the secondary pulley.

In this specification, the widths of the two primary pulleys indicate the width of a groove formed by the two primary pulleys.

In this specification, the width of the primary pulley indicates the width of a groove formed by the primary movable sheave and the primary fixed sheave.

In the present specification, an end portion of a member indicates a portion constituted by an end of the member and its surroundings.

In this specification, an expression "members A and B are provided side by side in an X direction" indicates the following state. When the members A and B are viewed in a direction orthogonal to the X direction, the members A and B are both provided on a linear line which is parallel to the X direction. In the present teaching, an expression "members A and B are provided side by side in an X direction when viewed in a Y direction" indicates the following state. When the members A and B are viewed in the Y direction, the members A and B are both provided on a linear line which is parallel to the X direction. In this regard, when the members A and B are viewed in a W direction which is different from the Y direction, at least one of the members A and B may not be provided on the linear line which is parallel to the X direction. The members A and B may be in contact with each other. The members A and B may not be in contact with each other. A member C may be provided between the members A and B.

In this specification, an expression "a member A is provided in front of a member B" indicates the following state. The members A and B are lined up in the front-rear direction and a part of the member A, the part facing the member B, is provided in front of the member B. According to this definition, when a part of the front surface of the member B, the part facing the member A, is the front-most end of the member B, the member A is provided forward of the member B. According to the definition, when a part of the front surface of the member B, the part facing the member A, is not the front-most end of the member B, the member A may or may not be provided forward of the member B. This applies to the directions other than the front-rear direction. (That is to say, this applies to the directions other than "in front of', such as "behind", "straight below", "to the left of', and "to the right of'.) The front surface of the member B is a surface which is viewable when the member B is viewed from the front side. Depending on the shape of the member B, the front surface of the member B may be formed of plural surfaces, instead of a single continuous surface.

In this specification, an expression "a member A is provided in front of a member B when viewed in the left-right direction" indicates the following state. The members A and B are lined up in the front-rear direction when viewed in the left-right direction and a part of the member A, the part facing the member B, is provided in front of the member B when viewed in the left-right direction. According to this definition, the members A and B may not be lined up in the front-rear direction in three dimensions. This applies to the directions other than the front-rear direction. (That is to say, this applies to the directions other than "in front of', such as "behind", "to the left of', and "to the right of'.)

The technical terms in this specification are used only for defining a specific embodiment, and are not used with the intention of restricting the present teaching. The term "and/or" used in this specification encompasses any or all combinations of one constituted feature or a plurality of related constituent features which are listed.

In this specification, the use of the terms "including", "comprising", "having" and their derivatives specify the existence of a feature, a step, an operation, an element, a component, and/or their equivalents, which are described in this specification, but may encompass one or more of a step, an action, an element, a component, and/or a group of each of them. In this specification, the terms "attached", "connected", "coupled", and/or their equivalents are broadly used and encompass both direct and indirect attachment, connection, and coupling. Furthermore, the terms "connected" and "coupled" are not limited to physical or mechanical connection and coupling, and indicate direct or indirect electrical connection or coupling.

Unless otherwise defined, all terms (technical and scientific terms) used in this specification indicate meanings typically understood by a person with ordinary skill in the art in the technical field to which the present teaching belongs. Terms defined in typical dictionaries indicate meanings used in related technologies and in the context of the present disclosure. Unless otherwise clearly defined, the terms are not interpreted ideally or excessively formally. In the description of the present teaching, it is understood that the number of technologies and the number of steps are disclosed. Each of them has an individual advantage, and may be used with at least one of the other disclosed technologies, or with all of the other disclosed technologies in some cases. For the purpose of clarity, the description does not unnecessarily recite possible combinations of the technologies and the steps. It, however, should be borne in mind that all of such combinations fall within the range of the present teaching and specification and claims.

In the description below, many specific details will be given to achieve full understanding of the present teaching, for the purpose of explanation. It is, however, evident that a person with ordinary skill in the art is able to implement the present teaching without such specific details. The disclosure should be considered as an example of the present teaching, and does not intend to restrict the present teaching to a specific embodiment which is described below with reference to drawings.

### [Advantageous Effects]

According to the present teaching, it is possible to provide a leaning vehicle including an electric-motor-driven automatic-controlled transmission, which has improved followability of the driving force in response to an operation of the accelerator by the rider while the leaning vehicle decelerates or accelerates.

### [Brief Description of Drawings]

[FIG. 1] FIG. 1 is a left side view of a motorcycle of First Embodiment.
[FIG. 2] FIG. 2 is a front view showing a state in which the motorcycle of FIG. 1 is turning.
[FIG. 3] FIG. 3 is a block diagram for explaining the outline of the motorcycle of FIG. 1.
[FIG. 4] FIG. 4 is a cross section of an engine unit of the motorcycle of FIG. 1.
[FIG. 5] FIG. 5 is a cross section of an electric-motor-driven automatic-controlled transmission of the motorcycle of FIG. 1.
[FIG. 6] FIG. 6 is a schematic block diagram of an upstream rotating electric machine of the motorcycle of FIG. 1.
[FIG. 7] FIG. 7 is a flowchart showing an example of control by a controller while the motorcycle decelerates.
[FIG. 8] FIGs. 8(a) and 8(b) are graphs each showing an example of changes over time of the opening degree of an accelerator and the driving force of a rear wheel while the motorcycle decelerates.
[FIG. 9] FIG. 9 is a flowchart showing an example of control by a controller while the motorcycle accelerates.
[FIG. 10] FIGs. 10(a) and 10(b) are graphs each showing an example of changes over time of the opening degree of an accelerator and the driving force of a rear wheel while the motorcycle accelerates.
[FIG. 11] FIG. 11 is a left side view of a motorcycle of Second Embodiment.
[FIG. 12] FIG. 12 is a schematic view for explaining the outline of the motorcycle of FIG. 11.
[FIG. 13] FIGs. 13(a) to 13(c) are graphs showing examples of changes over time of the opening degree of an accelerator of the motorcycle, the driving force of a rear wheel, and the engine rotation speed, while the motorcycle accelerates.
[FIG. 14] FIG. 14 is a block diagram for explaining the outline of the leaning vehicle of the embodiment.

### [Description of Embodiments]

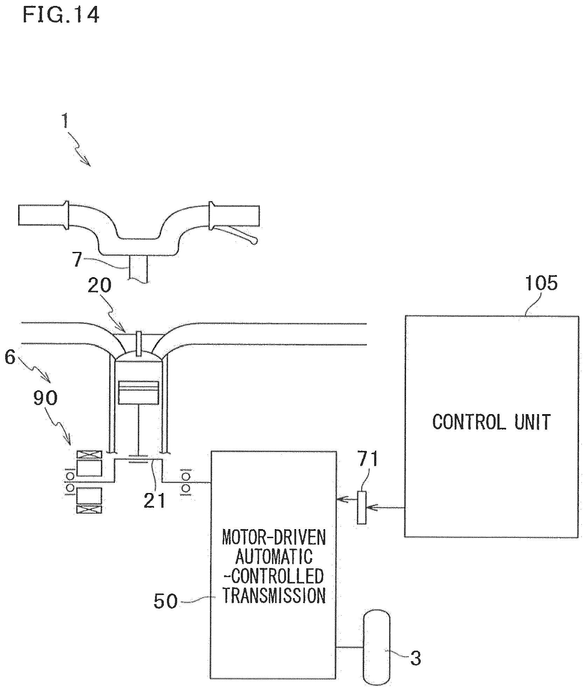

The following describes an embodiment of the present teaching with reference to fig. 14.

As shown in FIG. 14, a leaning vehicle 1 includes an engine main body unit 20, an electric-motor-driven automatic-controlled transmission 50, a driving wheel 3, an upstream rotating electric machine 90, and a controller 105. The leaning vehicle 1 includes a vehicle body frame 7 which is structured to lean rightward of the vehicle when turning right and lean leftward of the vehicle when turning left. The engine main body unit 20 generates engine power while the leaning vehicle 1 accelerates. Furthermore, the engine main body unit 20 generates engine loss while the leaning vehicle 1 decelerates. The engine main body unit 20 includes a crankshaft 21.

The electric-motor-driven automatic-controlled transmission 50 is connected to the crankshaft 21. The electric-motor-driven automatic-controlled transmission 50 is configured to transmit the power of the engine main body unit 20 at a transmission ratio set by an electric motor 71. In other words, power is transmitted via the crankshaft 21 to the electric-motor-driven automatic-controlled transmission 50. The power is either engine power or engine loss. The transmission ratio is, for example, determined by the accelerator opening degree and the vehicle speed. At least one driving wheel 3 is connected to the electric-motor-driven automatic-controlled transmission 50. The at least one driving wheel 3 generates a driving force by means of the power transmitted from the electric-motor-driven automatic-controlled transmission 50. The electric-motor-driven automatic-controlled transmission 50 is configured to control the driving force of the driving wheel 3 by changing the transmission ratio by controlling the electric motor 71.

The upstream rotating electric machine 90 is a rotating electric machine provided upstream of the electric-motor-driven automatic-controlled transmission 50 on a power transmission path on which power is transmitted from the crankshaft 21 to the driving wheel 3. The upstream rotating electric machine 90 imparts torque in the reverse rotational direction of the crankshaft 21 to the upstream of the electric-motor-driven automatic-controlled transmission 50 on the power transmission path, while the leaning vehicle 1 decelerates. The upstream rotating electric machine 90 imparts torque in the positive rotational direction of the crankshaft 21 to the upstream of the electric-motor-driven automatic-controlled transmission 50 on the power transmission path, while the leaning vehicle 1 accelerates. The upstream rotating electric machine 90 generates engine loss by imparting torque in the reverse rotational direction of the crankshaft 21 to the upstream of the electric-motor-driven automatic-controlled transmission 50 on the power transmission path, while the leaning vehicle 1 decelerates. The upstream rotating electric machine 90 increases engine power by imparting torque in the positive rotational direction of the crankshaft 21 to the upstream of the electric-motor-driven automatic-controlled transmission 50 on the power transmission path, while the leaning vehicle 1 accelerates. As the torque in the positive rotational direction of the crankshaft 21 increases, a positive driving force increases. As the torque in the reverse rotational direction of the crankshaft 21 is generated, a negative driving force increases. The upstream rotating electric machine 90 controls the driving force by imparting torque in the reverse rotational direction of the crankshaft 21 or in the positive rotational direction of the crankshaft 21.

The controller 105 is able to perform both the transmission control and the rotating electric machine control while the leaning vehicle 1 accelerates or decelerates. The transmission control is control of changing the transmission ratio by controlling the electric motor 71 of the electric-motor-driven automatic-controlled transmission 50. The rotating electric machine control is control of changing torque imparted to the upstream of the electric-motor-driven automatic-controlled transmission 50 on the power transmission path by controlling the upstream rotating electric machine 90. The controller 105 performs acceleration transmission control or acceleration rotating electric machine control while the leaning vehicle 1 accelerates. The acceleration transmission control is control of changing the transmission ratio by controlling the electric motor 71 of the electric-motor-driven automatic-controlled transmission 50. To be more specific, in the acceleration transmission control, the electric motor 71 of the electric-motor-driven automatic-controlled transmission 50 is controlled so that the transmission ratio is changed to a lower transmission ratio. The acceleration rotating electric machine control is control of changing torque in the positive rotational direction of the crankshaft 21 imparted to the upstream of the electric-motor-driven automatic-controlled transmission 50 on the power transmission path by controlling the upstream rotating electric machine 90. The controller 105 performs deceleration transmission control or deceleration rotating electric machine control while the leaning vehicle 1 decelerates. The deceleration transmission control is control of changing the transmission ratio by controlling the electric motor 71 of the electric-motor-driven automatic-controlled transmission 50. To be more specific, in the deceleration transmission control, the electric motor 71 of the electric-motor-driven automatic-controlled transmission 50 is controlled so that the transmission ratio is changed to a lower transmission ratio. The deceleration rotating electric machine control is control of changing torque in the reverse rotational direction of the crankshaft 21 imparted to the upstream of the electric-motor-driven automatic-controlled transmission 50 on the power transmission path by controlling the upstream rotating electric machine 90.

The leaning vehicle 1 of the present embodiment has the following characteristics. The electric-motor-driven automatic-controlled transmission 50 includes the electric motor 71 and other mechanisms. On this account, in the control of changing the transmission ratio by the electric-motor-driven automatic-controlled transmission 50, there is a constraint due to the mechanism of the electric-motor-driven automatic-controlled transmission 50 including the electric motor 71. In the electric-motor-driven automatic-controlled transmission 50, there is a time lag from the control of changing the transmission ratio based on the transmission ratio set in accordance with an accelerator operation to the actual control of the driving force of the driving wheel 3. Meanwhile, in the upstream rotating electric machine 90, there is no or a small number of mechanisms provided between the machine and the crankshaft 21. For this reason, in the upstream rotating electric machine 90, there is little time lag from the control of changing the torque imparted to the upstream of the electric-motor-driven automatic-controlled transmission 50 on the power transmission path by controlling the upstream rotating electric machine 90 to the actual control of the driving force of the driving wheel 3. As such, the electric-motor-driven automatic-controlled transmission 50 and the upstream rotating electric machine 90 are different from each other in responsiveness regarding the control of the driving force.

When the controller 105 carries out the acceleration rotating electric machine control or the deceleration rotating electric machine control, the upstream rotating electric machine 90 imparts torque to the upstream of the electric-motor-driven automatic-controlled transmission 50 on the power transmission path. The driving force which is equal to the multiplication of the torque of the upstream rotating electric machine 90 by the transmission ratio is transmitted to the driving wheel 3. As a result of this, it is unnecessary to frequently change the transmission ratio by the electric-motor-driven automatic-controlled transmission 50, or an amount of change in the transmission ratio is reduced. It is therefore possible to eliminate or shorten the time lag until the electric-motor-driven automatic-controlled transmission 50 changes the transmission ratio. In other words, the followability of the driving force in response to an operation of the accelerator by the rider can be improved. To put it differently, the followability of the driving force in response to an operation of the accelerator is improved by providing, upstream of the electric-motor-driven automatic-controlled transmission 50 in the power transmission direction, the upstream rotating electric machine 90 which is controllable with higher responsiveness than the electric-motor-driven automatic-controlled transmission 50. It is therefore possible to change the driving force by a small change in engine power or engine loss generated by the upstream rotating electric machine 90. As such, in the leaning vehicle 1 of the present teaching, the followability of the driving force in response to an operation of the accelerator by the rider can be improved in deceleration or acceleration.

As compared to four-wheel vehicles such as automobiles, the leaning vehicle 1 is arranged such that the length in the left-right direction is shorter than the length in the front-rear direction. In consideration of the followability of the driving force in response to an operation of the accelerator, controllability of the leaning vehicle 1 is preferably improved in the left-right direction. For this reason, in the leaning vehicle 1, a heavy load is preferably provided at around the center of the leaning vehicle 1. Power from the crankshaft 21 to the driving wheel 3 is transmitted via the power transmission path. Therefore, the engine main body unit 20 including the crankshaft 21 is provided upstream of the power transmission direction. The driving wheel 3 is provided downstream in the power transmission direction. The engine main body unit 20 which is a heavy load is provided at around the center of the leaning vehicle 1. Meanwhile, the driving wheel 3 is provided at an end portion of the leaning vehicle 1. In this connection, the rotating electric machine is also a heavy load. The rotating electric machine is provided at around the center of the leaning vehicle 1 when the machine is provided upstream of the electric-motor-driven automatic-controlled transmission 50 in the power transmission direction, as compared to a case where the machine is provided downstream. Controllability of the leaning vehicle 1 in the left-right direction is therefore further improved when the upstream rotating electric machine 90 is provided upstream of the electric-motor-driven automatic-controlled transmission 50 in the power transmission direction.

As compared to four-wheel vehicles such as automobiles, the leaning vehicle 1 is small in size. In consideration of the followability of the driving force in response to an operation of the accelerator of the leaning vehicle 1, increase in size of the vehicle 1 is not desirable. The size of the rotating electric machine is therefore preferably small. Furthermore, in the leaning vehicle 1, the upstream rotating electric machine 90 provided upstream of the electric-motor-driven automatic-controlled transmission 50 in the power transmission direction may rotate at a higher rotation speed than a downstream rotating electric machine provided downstream of the electric-motor-driven automatic-controlled transmission 50 in the power transmission direction. Efficiency of a motor depends on its rotation speed. To put it differently, the upstream rotating electric machine 90 provided upstream of the electric-motor-driven automatic-controlled transmission 50 in the power transmission direction may be more efficient as a motor than the downstream rotating electric machine provided downstream of the electric-motor-driven automatic-controlled transmission 50 in the power transmission direction. Typically, a larger rotating electric machine outputs higher power. On this account, when the upstream rotating electric machine 90 provided upstream of the electric-motor-driven automatic-controlled transmission 50 in the power transmission direction is more efficient as a motor than the downstream rotating electric machine provided downstream of the electric-motor-driven automatic-controlled transmission 50 in the power transmission direction, the upstream rotating electric machine can be smaller in size than the downstream rotating electric machine but produce the same power. The increase in size of the leaning vehicle 1 may therefore be restrained by providing the upstream rotating electric machine 90 upstream of the electric-motor-driven automatic-controlled transmission 50 in the power transmission direction.

The following describes a specific embodiment of the present teaching. Motorcycles 1 and 201 of First and Second Embodiments are examples of a leaning vehicle on which an engine unit of the present teaching is mounted. Hereinafter, a vehicle front-rear direction, a vehicle left-right direction, and a vehicle up-down direction indicate a front-rear direction, a left-right direction, and an up-down direction for a rider seated on a later-described seat 8, 208 of the motorcycle 1, 201 respectively. In this regard, it is assumed that the motorcycle is provided on a horizontal plane. The arrows F, B, L, R, U, and D in the figures indicate forward, rearward, leftward, rightward, upward, and downward, respectively. The specific embodiment described below encompasses the entirety of the embodiment shown in FIG. 14. It is noted that items identical to those in the embodiment shown in FIG. 14 are indicated by the same reference numerals.

### (First Embodiment)

### [Overall Structure of Motorcycle]

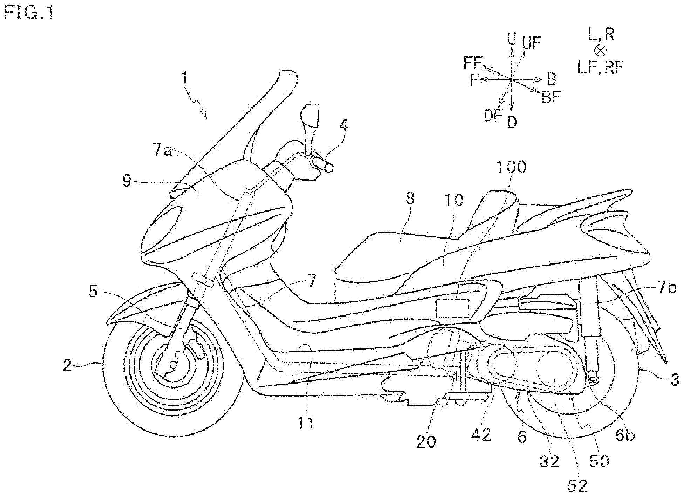

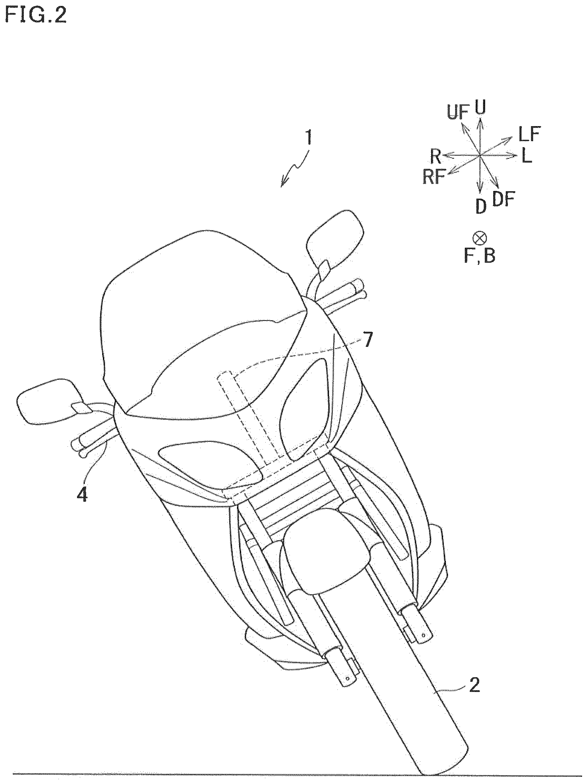

The overall structure of the motorcycle 1 of First Embodiment will be described with reference to FIG. 1 and FIG. 2. FIG. 1 shows the motorcycle 1 which is in an upright state on a horizontal road surface. The motorcycle 1 includes a front wheel 2 and a rear wheel 3 which are wheels, and a vehicle body frame 7. The rear wheel 3 is a driving wheel.

The vehicle body frame 7 is an underbone-type vehicle body frame. The vehicle body frame 7 is structured to lean rightward of the vehicle 1 when turning right and lean leftward of the vehicle 1 when turning left. In FIG. 1, only parts of the vehicle body frame 7 are indicated by dotted lines.

The vehicle body frame 7 includes a head pipe 7a at a front portion. A steering shaft (not illustrated) is rotatably inserted into the head pipe 7a. An upper end portion of the steering shaft is connected to a handle unit 4. Upper end portions of paired front forks 5 are secured to the handle unit 4. A lower end portion of each front fork 5 supports the front wheel 2.

An engine unit 6 is supported by the vehicle body frame 7 to be swingable. The engine unit 6 is provided below an upper end of a later-described seat 8. A rear end portion of the engine unit 6 supports the rear wheel 3. The engine unit 6 is connected to one end portion of a rear suspension 7b at a boss portion 6b. The other end portion of the rear suspension 7b is connected to the vehicle body frame 7.

The seat 8 is supported at an upper part of the vehicle body frame 7. An upper part of each front fork 5 is covered with a front cover 9. Side covers 10 are provided directly below the seat 8. Step boards 11 are provided between the front cover 9 and the side covers 10. The step boards 11 are provided on the left and right sides of a lower part of the motorcycle 1.

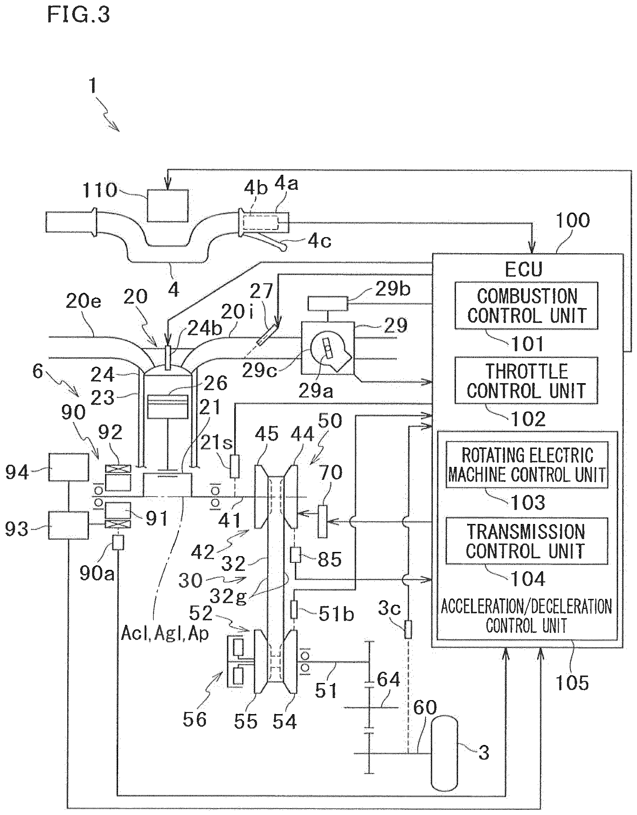

A fuel tank (not illustrated) is provided directly below the seat 8. A battery 94 (see FIG. 3) is mounted on the vehicle body frame 7 to supply electric power to electronic apparatuses such as an ECU (Electronic Control Unit) 100 and later-described sensors. The ECU 100 controls operations of components of the motorcycle 1. The ECU 100 includes a later-described controller of the present teaching.

The handle unit 4, the steering shaft, the front forks 5, and the front wheel 2 are provided to rotate together in the left-right direction. The front wheel 2 is operated by the handle unit 4. When the handle unit 4 is steered in the left-right direction, a plane, which passes the center in the width direction of the front wheel 2, leans relative to the front-rear direction (FB direction) of the vehicle 1.

Arrows UF, DF, FF, BF, LF, and RF in FIG. 1 and FIG. 2 indicate upward, downward, forward, rearward, leftward, and rightward of the vehicle body frame 7, respectively. In FIG. 1 and FIG. 2, an up-down direction (UFDF direction) of the vehicle body frame 7 is in parallel to the axial direction of the head pipe 7a of the vehicle body frame 7. A left-right direction (LFRF direction) of the vehicle body frame 7 is orthogonal to a plane which passes the center in the width direction of the vehicle body frame 7. A front-rear direction (FFBF direction) of the vehicle body frame 7 is orthogonal to both the up-down direction (UFDF direction) of the vehicle body frame 7 and the left-right direction (LFRF direction) of the vehicle body frame 7. In FIG. 1, the vehicle 1 is in an upright state on a horizontal road surface. The left-right direction of the vehicle 1 is therefore identical to the left-right direction of the vehicle body frame 7.

The leaning direction of the vehicle body frame 7 when the motorcycle 1 is turning will be described with reference to FIG. 2. FIG. 2 is a front view showing a state in which the motorcycle of FIG. 1 is turning. In other words, FIG. 2 shows the motorcycle 1 which is provided on a horizontal road surface and the vehicle body frame 7 of the motorcycle 1 leans.

The motorcycle 1 is a leaning vehicle. As shown in FIG. 2, the vehicle body frame 7 is structured to lean rightward of the vehicle 1 when turning right and lean leftward of the vehicle 1 when turning left. When the vehicle body frame 7 leans, the vehicle left-right direction (LR direction) of the motorcycle 1 does not coincide with the left-right direction (LFRF direction) of the vehicle body frame 7 in front view. When the vehicle body frame 7 leans in the left-right direction, the up-down direction (UD direction) of the motorcycle 1 does not coincide with the up-down direction (UFDF direction) of the vehicle body frame 7 in front view. When viewed in the up-down direction, the vehicle front-rear direction (FB direction) of the motorcycle 1 coincides with the front-rear direction (FFBF direction) of the vehicle body frame 7. When the handle unit 4 is rotated, a plane, which passes the center in the width direction of the front wheel 2, leans relative to the vehicle front-rear direction (FB direction) of the motorcycle 1 and the front-rear direction (FFBF direction) of the vehicle body frame 7, when viewed in the up-down direction. The traveling direction of the vehicle 1 may not coincide with the front-rear direction of the vehicle 1.

As shown in FIG. 3, the handle unit 4 includes an accelerator grip 4a and a brake lever 4c. The right grip of the handle unit 4 is the accelerator grip 4a. The accelerator grip 4a is operated by the rider and rotates. The accelerator grip 4a is operated to adjust the output of the engine. The brake lever 4c is provided at the right grip of the handle unit 4. The brake lever 4c is operated by the rider. The brake lever 4c is operated for braking the rotation of the front wheel 2. The handle unit 4 is provided with switches such as a main switch. The handle unit 4 is further provided with a display 110. The display 110 is configured to display vehicle speed, engine rotation speed, and the like. An indicator (indicator lamp) is provided on the display 110.

### [Structure of Engine Unit]

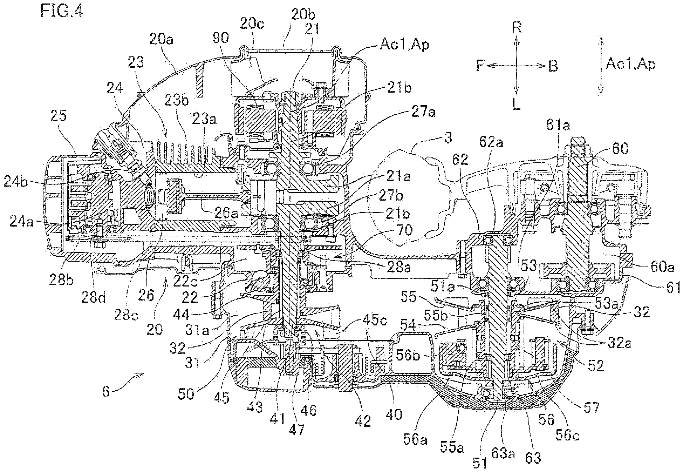

The following will describe the structure of the engine unit 6 with reference to FIG. 3 and FIG. 4. FIG. 3 is a schematic diagram of the motorcycle 1 of First Embodiment. In FIG. 3, lines connecting the crankshaft 21, the upstream rotating electric machine 90, the electric-motor-driven automatic-controlled transmission 50, the clutch 56, and the rear wheel 3 which will be described later are schematically shown as linear lines. These lines are power transmission paths indicating passages of mechanically-transmitted power.

As shown in FIG. 3, the engine unit 6 includes the engine main body unit 20 and the electric-motor-driven automatic-controlled transmission 50. The electric-motor-driven automatic-controlled transmission 50 includes a transmission 40 and a transmission controller 70. The electric-motor-driven automatic-controlled transmission 50 is configured to transmit the power of the engine main body unit 20 to the rear wheel 3. In the present embodiment, the electric-motor-driven automatic-controlled transmission 50 is a continuously variable transmission using a dry belt 32. The transmission 40 includes a primary pulley 42, a secondary pulley 52, and the dry belt 32. As shown in FIG. 1, the primary pulley 42 is provided in front of the secondary pulley 52. As shown in FIG. 1 and FIG. 3, the dry belt 32 is wound onto the primary pulley 42 and the secondary pulley 52.

The following will describe the engine main body unit 20. The single-cylinder engine main body unit 20 is a single-cylinder engine including one cylinder. The engine main body unit 20 is a four-stroke single-cycle engine which repeats an intake process, a compression process, a combustion process (expansion process), and an exhaust process.

As shown in FIG. 4, the engine main body unit 20 includes a crankcase member 22 housing the crankshaft 21, a cylinder body 23, a cylinder head 24, and a head cover 25. The head cover 25 forms an front portion of the engine unit 6. The cylinder head 24 is connected to a rear end portion of the head cover 25. The cylinder body 23 is connected to a rear end portion of the cylinder head 24.

The engine main body unit 20 is a forced air-cooled engine. The engine main body unit 20 includes a shroud 20a. The shroud 20a covers the whole circumferences of the cylinder body 23 and the cylinder head 24. The shroud 20a covers a right side portion of the crankcase member 22. An air inlet 20b is formed in a right part of the shroud 20a. An air outlet (not illustrated) is formed at a front portion of the shroud 20a. The right end portion of the later-described crankshaft 21 protrudes from the crankcase member 22 and is connected to a cooling fan 20c. The cooling fan 20c is rotationally driven by the rotation of the crankshaft 21. Air is introduced into the shroud 20a through the air inlet 20b by drive of the cooling fan 20c. As the air introduced into the shroud 20a makes contact with later-described cooling fins 23b of the cylinder body 23, the cylinder body 23 radiates heat. The air introduced into the shroud 20a is exhausted through the air outlet.

A cylinder hole 23a is formed in the cylinder body 23. The central axis of the cylinder hole 23a is the cylinder axial line. The engine main body unit 20 is mounted on the vehicle body frame 7 (see FIG. 1), with the cylinder axial line significantly leaning forward. The inclination angle of the cylinder axial line with respect to the horizontal direction is 0 degree or more and 45 degrees or less. A piston 26 is slidably housed in the cylinder hole 23a. A combustion chamber 24a is formed by a lower surface of the cylinder head 24, the cylinder hole 23a, and the piston 26. The cylinder head 24 is provided with an ignition plug (ignition device) 24b. The ignition plug 24b is configured to ignite a mixture gas of fuel and air in the combustion chamber 24a.

The crankshaft 21 includes two crank webs 21a and two main shafts 21b. The two crank webs 21a are provided between the two main shafts 21b. The two crank webs 21a are connected to each other by an eccentric shaft (not illustrated). The eccentric shaft is a connection part connecting the two crank webs 21a to each other. The central axis of the eccentric shaft is eccentric from the central axis of the crankshaft. The eccentric shaft of the crankshaft 21 is connected to the piston 26 via a connecting rod 26a. A bearing 27a is provided to the right of the right crank web 21a. A bearing 27b is provided to the left of the left crank web 21a. The crankshaft 21 is supported by the crankcase member 22 via the bearing 27a and the bearing 27b. A driving cam chain sprocket 28a is fitted to the crankshaft 21. A driven cam chain sprocket 28b is provided at the cylinder head 24. A cam chain 28c is provided to bridge the driving cam chain sprocket 28a and the driven cam chain sprocket 28b. The driven cam chain sprocket 28b is attached to a valve driving camshaft 28d. The torque of the crankshaft 21 is transmitted to the valve driving camshaft 28d via the cam chain 28c. In sync with the crankshaft 21, the valve driving camshaft 28d opens and closes an intake valve and an exhaust valve which are not illustrated, at predetermined timings.

As shown in FIG. 3, an intake pipe 20i is connected to the cylinder head 24. An injector 27 is provided on the intake pipe 20i to inject fuel in a fuel tank (not illustrated) into the intake pipe 20i. The injector 27 is connected to the fuel tank via a fuel hose (not illustrated). The fuel in the fuel tank is supplied to the fuel hose with a pressure by a fuel pump (not illustrated). The fuel injected by the injector 27 is supplied to a combustion chamber 24a. The injector 27 is an electronic-controlled fuel supplier. An amount of fuel injected by the injector 27 is controlled by the ECU 100. An exhaust pipe 20e is connected to the cylinder head 24. Exhaust gas generated by the combustion of fuel is exhausted through the exhaust pipe 20e.

The intake pipe 20i is connected to the throttle body 29. A throttle valve 29a is provided inside the throttle body 29. The throttle valve 29a adjusts an amount of air flowing in the throttle body 29. An air cleaner (not illustrated) is provided at an end portion of the intake pipe 20i upstream of the throttle body 29. The air cleaner has an air inlet through which air is sucked from the atmosphere. The atmosphere sucked into the intake pipe 20i through the air inlet flows into the throttle body. Air having passed the throttle valve 29a passes the intake pipe 20i and is supplied to the combustion chamber 24a. The throttle valve 29a is an electronic-controlled throttle. The throttle body 29 is provided with a throttle actuator 29b. The throttle actuator 29b opens or closes the throttle valve 29a by means of electronic control. The throttle actuator 29b includes a motor which is driven by power supplied from the ECU 100. The opening degree of the throttle valve 29a is termed a throttle opening degree. The ECU 100 is configured to control the throttle opening degree by changing the power supplied to the motor.

The piston 26 is connected to the crankshaft 21 provided in the crankcase member 22. The piston 26 reciprocates as a result of combustion of the fuel supplied to the combustion chamber 24a. The crankshaft 21 rotates as a result of the reciprocation of the piston 26.

The upstream rotating electric machine 90 is connected to the crankshaft 21. In other words, the crankshaft 21 and the upstream rotating electric machine 90 are provided to be coaxial. In this regard, when the upstream rotating electric machine 90 and the crankshaft 21 are coaxial, a rotating electric machine rotational axis Ag1 which is the rotational axis of the upstream rotating electric machine 90 is on the same linear line as a crank rotational axis Ac1 which is the rotational axis of the crankshaft 21. The upstream rotating electric machine 90 is a three-phase generator and is a permanent magnet generator. Driving states of the upstream rotating electric machine 90 are a power generation state and a power supply state. To be more specific, a driving state in which the upstream rotating electric machine 90 generates power by imparting torque in the reverse rotational direction of the crankshaft 21 to the crankshaft 21 is the power generation state. To put it differently, in the power generation state, a part of the torque in the positive rotational direction of the crankshaft 21 is imparted from the crankshaft 21 to the upstream rotating electric machine 90 and the upstream rotating electric machine 90 rotates in the same direction as the positive rotational direction of the crankshaft 21. Meanwhile, a driving state in which the upstream rotating electric machine 90 imparts the torque in the positive rotational direction of the crankshaft 21 to the crankshaft 21 by the power supplied from a later-described battery 94 and rotates the crankshaft 21 in the positive rotational direction is the power supply state. When starting the engine, the upstream rotating electric machine 90 is driven in the power supply state as a starter motor. In normal driving after starting the engine, the upstream rotating electric machine 90 is driven in the power supply state or the power generation state. The rotating electric machine is an apparatus integrated with the starter motor. Alternatively, the starter motor and the rotating electric machine may be different apparatuses.

The upstream rotating electric machine 90 includes an inner stator 91 and an outer rotor 92. The outer rotor 92 is attached to the crankshaft 21 to rotate together with the crankshaft 21. The outer rotor 92 is a rotational body for increasing inertia of the crankshaft 21. A permanent magnet unit (not illustrated) formed of a plurality of permanent magnets is provided on the inner circumferential surface of the outer rotor 92. The inner stator 91 is provided to face the permanent magnet unit of the outer rotor 92.

In addition to the above, the upstream rotating electric machine 90 includes an inverter 93 and a battery 94. The inverter 93 controls the upstream rotating electric machine 90 to be turned on or off. By a power supply function, the battery 94 supplies power to the upstream rotating electric machine 90 and drives same. In other words, the battery 94 supplies power to the upstream rotating electric machine 90 to impart torque in the positive rotational direction of the crankshaft 21. Furthermore, by a power generation function, the battery 94 stores power generated by the upstream rotating electric machine 90. In other words, the battery 94 stores power generated by the upstream rotating electric machine 90 by imparting torque in the reverse rotational direction of the crankshaft 21 to the upstream rotating electric machine 90.

As shown in FIG. 4, a dry belt casing 31 is provided behind the cylinder body 23. The dry belt casing 31 is also termed a transmission case. The dry belt casing 31 forms a dry space. The primary pulley 42, the secondary pulley 52, and the dry belt 32 are provided in the dry space. The dry belt casing 31 extends rearward from the rear end portion of the cylinder body 23 to the rear wheel 3. The dry belt casing 31 is rotatably supported by the vehicle body frame 7. An oil filter (not illustrated) is attached to a lower portion of the dry belt casing 31. A lubrication space 22c in which lubricant such as oil for lubricating the crankshaft 21 or the like is provided is formed inside the crankcase member 22.

The transmission 40 includes a primary shaft portion 41, the primary pulley 42, a secondary shaft 51, the secondary pulley 52, and the dry belt 32. The primary shaft portion 41 is formed to be integrated with the crankshaft 21. In other words, a primary rotational axis Ap which is the rotational axis of the primary shaft portion 41 is on the same linear line as the crank rotational axis Ac1 of the crankshaft 21. The primary pulley 42 is provided on the primary shaft portion 41. The primary pulley 42 and the primary shaft portion 41 are rotatable together. The dry belt 32 is formed to be annular in shape. The dry belt 32 is wound onto the primary pulley 42 and the secondary pulley 52. The rotation of the primary pulley 42 is transmitted to the secondary pulley 52 via the dry belt 32. The secondary pulley 52 is provided on the secondary shaft 51. The secondary pulley 52 is rotatable together with the secondary shaft 51. The transmission controller 70 moves a later-described primary movable sheave 44 of the primary pulley 42 in the direction along the primary rotational axis Ap. The transmission controller 70 controls the transmission ratio of the electric-motor-driven automatic-controlled transmission 50. The details of the transmission 40 and the transmission controller 70 will be given later.

As shown in FIG. 3, the secondary pulley 52 is connected to a drive shaft 60 via the clutch 56, the secondary shaft 51, and a main shaft 64. The drive shaft 60 is the axle shaft of the rear wheel 3. The clutch 56 switches between connection and disconnection between the secondary pulley 52 and the secondary shaft 51. The clutch 56 of the present embodiment is an automatic clutch which is automatically connected and disconnected without requiring a clutch operation by the rider. The clutch 56 is a centrifugal clutch. For example, the clutch 56 connects the secondary pulley 52 to the secondary shaft 51 when the engine rotation speed exceeds a predetermined value. The secondary shaft 51 is connected to the main shaft 64 to be able to transmit power to same. The main shaft 64 is connected to the drive shaft 60 to be able to transmit power to same. Power is therefore transmitted from the secondary pulley 52 to the secondary shaft 51, the main shaft 64, and the drive shaft 60. The clutch 56 disconnects the secondary pulley 52 from the secondary shaft 51 when the engine rotation speed is equal to or lower than the predetermined value. Therefore, no power is transmitted from the secondary pulley 52 to the secondary shaft 51, the main shaft 64, and the drive shaft 60.

The following describes sensors of the motorcycle 1. As shown in FIG. 3, the motorcycle 1 includes a vehicle speed sensor 3c, an accelerator sensor 4b, a throttle opening degree sensor 29c, an engine rotation speed sensor 21s, a sheave position detection sensor 85, a secondary pulley rotation speed sensor 51b, and a rotor position detection sensor 90a. These sensors are connected to the ECU 100.

The vehicle speed sensor 3c is provided on the drive shaft 60 of the rear wheel 3. The vehicle speed sensor 3c is configured to output a signal with a frequency corresponding to the rotation speed of the drive shaft 60. The ECU 100 calculates the vehicle speed based on an output signal of the vehicle speed sensor 3c.

The accelerator sensor 4b is configured to detect the rotation angle (hereinafter, accelerator opening degree) of the accelerator grip 4a operated by the rider. The accelerator sensor 4b is, for example, a potentiometer provided at the accelerator grip 4a. The accelerator sensor 4b is configured to output an electrical signal corresponding to the accelerator opening degree set by the rider. The ECU100 is configured to detect the accelerator opening degree set by the rider based on an output signal of the accelerator sensor 4b.

The throttle opening degree sensor (throttle position sensor) 29c is provided in the throttle body 29. The throttle opening degree sensor 29c is configured to detect a throttle opening degree which is the opening degree of the throttle valve 29a. The throttle opening degree sensor 29c is constituted by, for example, a potentiometer. The throttle opening degree sensor 29c is configured to output a voltage signal or a current signal in accordance with the throttle opening degree. The ECU100 is configured to detect the throttle opening degree based on an output signal of the throttle opening degree sensor 29c.

The engine rotation speed sensor 21s is provided in the engine main body unit 20. The engine rotation speed sensor 21s is configured to output a signal with a frequency corresponding to the rotation speed of the crankshaft 21 and the rotation speed of the primary shaft portion 41. The rotation speed of the crankshaft 21 and the rotation speed of the primary shaft portion 41 indicate an engine rotation speed. The ECU 100 is configured to calculate the engine rotation speed based on an output signal of the engine rotation speed sensor 21s.

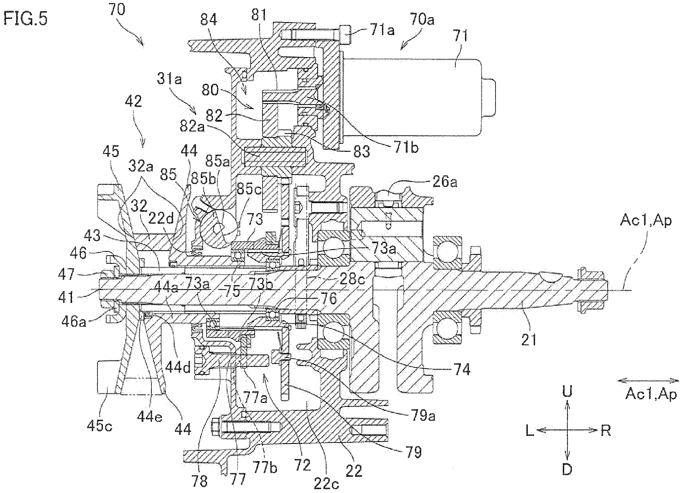

The sheave position detection sensor 85 is provided in the transmission 40. The sheave position detection sensor 85 is configured to detect the transmission ratio of the electric-motor-driven automatic-controlled transmission 50. The transmission ratio corresponds to the position of the primary movable sheave 44 of the primary pulley 42. The sheave position detection sensor 85 is configured to output an electrical signal corresponding to the position of the primary movable sheave 44. As shown in FIG. 5, the sheave position detection sensor 85 is, for example, constituted by a rotation meter formed of a sensor axis 85a and a sensor arm 85b. The details of the sheave position detection sensor 85 will be given later. The ECU 100 is configured to detect the transmission ratio based on an output signal of the sheave position detection sensor 85 and the above-described rotation speed of the crankshaft 21 and the below-described rotation speed of the secondary pulley 52.

The secondary pulley rotation speed sensor 51b is provided in the transmission 40. The secondary pulley rotation speed sensor 51b is configured to output a signal with a frequency corresponding to the rotation speed of the secondary pulley 52. The ECU 100 is configured to calculate the rotation speed of the secondary pulley 52 based on an output signal of the secondary pulley rotation speed sensor 51b. Hereinafter, the rotation speed of the secondary pulley 52 will be referred to as a secondary pulley rotation speed.

The rotor position detection sensor 90a is provided in the upstream rotating electric machine 90. The rotor position detection sensor 90a is configured to detect the rotational position of the outer rotor 92. The rotor position detection sensor 90a is configured to output an electrical signal corresponding to the rotational position of the outer rotor 92. The rotor position detection sensor 90a is configured to calculate the rotation speed and the rotational position of the outer rotor 92 based on an electrical signal from the rotor position detection sensor 90a. The rotation speed of the outer rotor 92 is identical to the rotation speed of the crankshaft 21. The rotor position detection sensor 90a therefore detects the rotation speed of the crankshaft 21 based on an output signal of the rotor position detection sensor 90a.

### [Structure of Motor-Driven Automatic-Controlled Transmission]

The following will detail the electric-motor-driven automatic-controlled transmission 50 with reference to FIG. 4 and FIG. 5. The electric-motor-driven automatic-controlled transmission 50 includes the transmission 40, the transmission controller 70, and the clutch.

The following will describe the transmission 40. As described above, the transmission 40 includes the dry belt 32, the primary shaft portion 41, the primary pulley 42, the secondary shaft 51, and the secondary pulley 52.

As shown in FIG. 4, the primary shaft portion 41 is formed together with the crankshaft 21, at a left end portion of the crankshaft 21 in the vehicle left-right direction. In short, the primary shaft portion 41 is arranged to be coaxial with the crankshaft 21. When the primary shaft portion 41 is coaxial with the crankshaft 21, a primary rotational axis Ap which is the rotational axis of the primary shaft portion 41 and a crank rotational axis Ac1 of the crankshaft 21 are provided on the same linear line (see FIG. 3). The primary shaft portion 41 receives power from the crankshaft 21. The primary shaft portion 41 is a part to the left of the cam chain 28c wound on the crankshaft 21. The diameter of the primary shaft portion 41 is smaller than the diameter of a part of the crankshaft 21 where the cam chain 28c is wound. The primary shaft portion 41 is formed such that the left part in the vehicle left-right direction is smaller in diameter than the right part. The primary shaft portion 41 is formed to penetrate the crankcase member 22. In other words, in the vehicle left-right direction, the right part of the primary shaft portion 41 is provided in the lubrication space 22c formed by the crankcase member 22. The left part of the primary shaft portion 41 is provided in a dry space 31a formed by the dry belt casing 31. In this specification, the lubrication space is a space where lubricant such as oil is provided and is a space where components provided therein are lubricated by the lubricant.

The primary pulley 42 is attached to the primary shaft portion 41. The primary pulley 42 includes a collar member 43, the primary movable sheave 44, and a primary fixed sheave 45. The primary movable sheave 44 and the primary fixed sheave 45 are two primary sheaves. The collar member 43 is provided at the outer circumferential surface of the primary shaft portion 41. The collar member 43 is fastened to the primary shaft portion 41 by a locknut 47 via a spacer 46 and a disc spring 46a to rotate together with the primary shaft portion 41. The collar member 43 is provided to the right of the primary fixed sheave 45 in the vehicle left-right direction. The primary movable sheave 44 and the primary fixed sheave 45 are provided to the left of the crankcase member 22 in the vehicle left-right direction. In other words, the primary movable sheave 44 and the primary fixed sheave 45 are provided in the dry space 31a.

As shown in FIG. 5, a slide member 44a is formed to be integrated with a right end portion of the primary movable sheave 44. In other words, the slide member 44a is connected to the primary movable sheave 44. The slide member 44a is cylindrical in shape. The primary movable sheave 44 and the slide member 44a are attached to the collar member 43. The primary movable sheave 44 and the slide member 44a are supported by the collar member 43 to be movable in the axial direction of the primary shaft portion 41. The primary movable sheave 44 and the slide member 44a are arranged to rotate together with the collar member 43 and the primary shaft portion 41. The primary movable sheave 44 is therefore arranged to be movable together with the slide member 44a in the axial direction of the primary shaft portion 41 and to be rotate together with the slide member 44a. A sealing member 44d is provided between the inner circumferential surface of the primary movable sheave 44 and the collar member 43. A space formed between the slide member 44a and the collar member 43 communicates with the lubrication space 22c. The collar member 43 is therefore exposed to the lubrication space 22c. In this specification, when a component is exposed to the lubrication space formed by the crankcase member 22, the space in which the component is provided is not isolated in the lubrication space. The sealing member 44d prevents oil lubricating the gap between the slide member 44a and the collar member 43 from leaking to the dry space 31a from the lubrication space 22c.

The primary fixed sheave 45 is spline-engaged with the primary shaft portion 41 so as to make contact with the left surface in the vehicle left-right direction of the collar member 43. To the left in the vehicle left-right direction of the primary fixed sheave 45, the spacer 46, the disc spring 46a, and the locknut 47 are provided at the left end portion of the primary shaft portion 41. As the locknut 47 is fastened, the primary fixed sheave 45 is fixed to the primary shaft portion 41 to be immovable in the axial direction. The primary fixed sheave 45 is arranged to rotate together with the primary shaft portion 41. Cooling fins 45c are radially provided on the left surface of the primary fixed sheave 45 in an integrated manner. An air inlet (not illustrated) is formed in a front portion of the dry belt casing 31 (see FIG. 4). The primary fixed sheave 45 is rotationally driven in accordance with the rotation of the primary shaft portion 41. As the cooling fins 45c rotate, air is introduced into the dry belt casing 31 through the air inlet. As the air introduced into the dry belt casing 31 makes contact with the dry belt 32, the primary pulley 42, and the secondary pulley 52, the dry belt 32, the primary pulley 42, and the secondary pulley 52 radiate heat. The air introduced into the dry belt casing 31 is discharged through an air outlet (not illustrated) formed in a rear portion or lower portion of the dry belt casing 31. The cooling fins 45c introduce outside air into the dry belt casing 31.

As shown in FIG. 4, the secondary shaft 51 is arranged to be parallel to the primary shaft portion 41. A gear case 61 is provided to the right of the rear end portion of the dry belt casing 31. The gear case 61 is connected to a case main body 62 which is provided to the right of the gear case 61. The gear case 61 and the case main body 62 constitute a lubrication space 60a which is lubricated by oil. The secondary shaft 51 is formed to penetrate the gear case 61. In other words, in the vehicle left-right direction, a right part of the secondary shaft 51 is provided in the lubrication space 60a formed by the gear case 61 and the case main body 62. The left part of the secondary shaft 51 is provided in the dry space 31a in the dry belt casing 31. The drive shaft 60 for rotating the rear wheel 3 is provided in the lubrication space 60a. The drive shaft 60 is provided to be parallel to the secondary shaft 51. Furthermore, the main shaft 64 (see FIG. 3) is provided in the lubrication space 60a to be parallel to the secondary shaft 51 and the drive shaft 60. A sealing member 51a is provided between the outer circumferential surface of the secondary shaft 51 and the gear case 61. The sealing member 51a prevents oil from leaking to the dry space 31a from the lubrication space 60a.

The secondary shaft 51 is supported by the gear case 61 via a bearing 61a. A right end portion of the secondary shaft 51 is supported by the case main body 62 via a bearing 62a. A left end portion of the secondary shaft 51 is supported by the dry belt casing 31 via a bearing 63 and a spacer 63a.

The secondary pulley 52 is attached to the secondary shaft 51. The secondary pulley 52 includes a collar member 53, a secondary movable sheave 54, and a secondary fixed sheave 55. The collar member 53 is cylindrical in shape. The collar member 53 is rotatably attached to the outer circumferential surface of the secondary shaft 51 via a bearing 55a and a bearing 55b. The collar member 53 is attached to the secondary shaft 51 to be immovable in the axial direction. A slide member 53a is attached to the collar member 53. The slide member 53a is provided between the inner circumferential surface of the secondary movable sheave 54 and the outer circumferential surface of the collar member 53. The slide member 53a and the secondary movable sheave 54 are supported by the collar member 53 to be movable in the direction along the rotational axis of the secondary shaft 51. The slide member 53a and the secondary movable sheave 54 rotate together with the collar member 53 and the secondary shaft 51. As such, the secondary movable sheave 54 is arranged to be movable together with the collar member 53 in the direction along the rotational axis of the secondary shaft 51 and to be rotatable together with the slide member 53a.

The secondary fixed sheave 55 is fitted into and fixed to the collar member 53. In other words, the secondary fixed sheave 55 is attached to the secondary shaft 51 via the collar member 53 to be rotatable and to be immovable in the rotational axis direction.

The centrifugal clutch 56 is provided to the left of the secondary pulley 52. The centrifugal clutch 56 is attached to the secondary shaft 51. The centrifugal clutch 56 includes a weight arm 56a, a weight 56b, and an outer clutch 56c. The weight arm 56a is fitted into and fixed to the collar member 53 to rotate together with the collar member 53. The weight 56b is attached to the weight arm 56a so as to be swingable in the radial direction of the secondary shaft 51. The outer clutch 56c is provided to surround the weight 56b. The outer clutch 56c is fitted into and fixed to the secondary shaft 51 so as to rotate together with the secondary shaft 51. A spring 57 is provided between the secondary movable sheave 54 and the weight arm 56a. The secondary movable sheave 54 is biased by this spring 57 in a direction in which the effective diameter of the secondary pulley 52 increases.

As the rotation speed of the secondary pulley 52 increases, the weight 56b moves outward in the radial direction of the secondary shaft 51 due to the centrifugal force, and makes contact with the inner surface of the outer clutch 56c. As a result, the rotation of the secondary pulley 52 is transmitted to the secondary shaft 51. The rotation of the secondary shaft 51 is then transmitted to the rear wheel 3 via the main shaft 64 and the drive shaft 60.

The dry belt 32 is wound onto the primary pulley 42 and the secondary pulley 52. The dry belt 32 is a transmission belt made of rubber or resin. In FIG. 4, full lines indicate the dry belt 32 at a low-speed position. The low-speed position of the dry belt 32 is termed a low position of the dry belt 32. In FIG. 4, two-dot chain lines indicate the dry belt 32 at a high-speed position. The high-speed position of the dry belt 32 is termed a top position of the dry belt 32. The top position of the dry belt 32 is a position where the width of the primary pulley 42 is the shortest. To put it differently, the top position of the dry belt 32 is a position where the diameter of the dry belt 32 wound onto the primary pulley 42 is the largest and the transmission ratio is the smallest. Meanwhile, the low position of the dry belt 32 is a position where the width of the primary pulley 42 is the longest. To put it differently, the low position of the dry belt 32 is a position where the diameter of the dry belt 32 wound onto the primary pulley 42 is the smallest and the transmission ratio is the largest. In this specification, the width of the primary pulley 42 indicates the width of a groove formed by the primary movable sheave 44 and the primary fixed sheave 45. In the dry belt 32, a slide portion 32a in contact with the primary pulley 42 and the secondary pulley 52 is not lubricated by lubricant. The dry belt 32, the primary pulley 42, and the secondary pulley 52 are provided in the dry space 31a in the dry belt casing 31. The width of the primary pulley 42 is the width of the groove formed by the primary movable sheave 44 and the primary fixed sheave 45.

The following will describe the transmission controller 70. As shown in FIG. 5, the transmission controller 70 includes the electric motor 71, a rotational force conversion mechanism 72, and a rotational force transmission mechanism 80.

The electric motor 71 is provided between the cylinder body 23 and the throttle body 29 (see FIG. 3). The electric motor 71 is fixed to an outer wall of the crankcase member 22 by a bolt 71a. A later-described output gear 81 is formed on a rotational shaft 71b of the electric motor 71. The electric motor 71 is provided in a dry space 70a. The output gear 81 is provided in the lubrication space 22c.

As described above, the slide member 44a is formed to be integrated with the right end portion of the primary movable sheave 44 of the primary pulley 42. The slide member 44a is attached to the collar member 43. The slide member 44a is formed to penetrate the crankcase member 22. A sealing member 22d is provided between the outer circumferential surface of the slide member 44a and the crankcase member 22. The sealing member 22d prevents oil from leaking to the dry space 31a from the lubrication space 22c. A right end portion of the slide member 44a is formed to be smaller in diameter than the other parts. A later-described first bearing 75 is fitted into the outer circumferential surface of the right end portion of the slide member 44a.

The rotational force conversion mechanism 72 includes a relative moving member 73, a rotating member 74, the first bearing 75, a second bearing 76, and a sheave-side gear 79. The rotational force conversion mechanism 72 is configured to convert the rotational force (torque) of the sheave-side gear 79 to the moving force of the primary movable sheave 44 in the axial direction. In other words, the rotational force conversion mechanism 72 converts the rotational force of the later-described electric motor 71 to the moving force in the direction along the primary rotational axis Ap. The rotational force conversion mechanism 72 is provided inside the lubrication space 22c. In detail, the rotational force conversion mechanism 72 is structured as described below.

The relative moving member 73 includes a cylindrical cylinder portion 73a. The right end portion of the slide member 44a is fitted into the cylinder portion 73a via the first bearing 75. The relative moving member 73 is connected to the slide member 44a. The relative moving member 73 is in contact with the later-described rotating member 74. The relative moving member 73 is arranged to be movable relative to the rotating member 74 in the direction along the primary rotational axis Ap, on account of the rotational force of the rotating member 74.

A protrusion 73b is formed on the outer circumferential surface of the cylinder portion 73a. A part of the cylinder portion 73a, which is to the right of the protrusion 73b, is formed to be smaller in diameter than a part of the cylinder portion 73a to the left of the protrusion 73b. A ring member 77 is coupled by pressure with the outer circumferential surface of the part of the cylinder portion 73a to the right of the protrusion 73b. The ring member 77 is immovable to the primary pulley 42 side, on account of the protrusion 73b. The ring member 77 has a rotation stopper 77a which protrudes radially outward. A slit portion 77b is formed at a central part in the circumferential direction of the rotation stopper 77a. The rotation stopper 77a is therefore U-shaped when viewed in the axial direction. A bolt 78 fixed to the crankcase member 22 is inserted into the slit portion 77b of the rotation stopper 77a. The rotation of the ring member 77 is prevented by the bolt 78. In other words, the relative moving member 73 is arranged not to be rotatable on account of the ring member 77. The rotating member 74 is rotatably supported by the primary shaft portion 41 via the second bearing 76. The rotating member 74 is rotated by a rotational force transmitted from the rotational force transmission mechanism 80.

A female screw thread (not illustrated) is formed on the inner circumferential surface of the cylinder portion 73a. A male screw thread (not illustrated) is formed on the outer circumferential surface of the rotating member 74, The female screw thread of the relative moving member 73 and the male screw thread of the rotating member 74 are trapezoidal threads each of which is trapezoidal in cross sections taken along the axial direction. The male screw thread is engaged with the female screw thread of the relative moving member 73. In other words, the rotating member 74 is engaged with the relative moving member 73.

The sheave-side gear 79 is fixed to the rotating member 74. To be more specific, the sheave-side gear 79 is fixed to a right end portion of the rotating member 74. The sheave-side gear 79 is larger in diameter than the primary pulley 42. Bolts 79a are provided at a left surface of the sheave-side gear 79. The bolts 79a rotate together with the sheave-side gear 79. When the primary movable sheave 44 moves from the top position to the low position and the relative moving member 73 moves rightward in the axial direction, the rotation stopper 77a of the ring member 77 hits one of the bolts 79a. As a result, the bolts 79a prevent the relative moving member 73 from moving in the axial direction. The position where the bolts 79a are in contact with the sheave-side gear 79 is the low position of the primary movable sheave 44.

With a left end portion of the outer circumferential surface of the collar member 43, a support member 44e is coupled at a position in contact with the primary fixed sheave 45. The support member 44e is formed to be substantially cylindrical in shape. When the primary movable sheave 44 moves from the low position to the top position and the relative moving member 73 moves leftward in the axial direction, the primary movable sheave 44 makes contact with the support member 44e. The position where the primary movable sheave 44 is in contact with the support member 44e is the top position of the primary movable sheave 44.

The rotational force transmission mechanism 80 includes the output gear 81, a rotational force transmission gear 82, and a rotating member gear 83. The output gear 81, the rotational force transmission gear 82, and the rotating member gear 83 are made of metal. The rotational force transmission mechanism 80 is provided in the lubrication space 22c.

The rotational force transmission mechanism 80 is configured to transmit the rotational force of the electric motor 71 to the sheave-side gear 79 of the primary movable sheave 44. The output gear 81 is formed to be integrated with the rotational shaft 71b. The output gear 81 is engaged with the rotational force transmission gear 82. The rotational force transmission gear 82 is fixed by pressure to a rotational force transmission gear shaft 82a. The rotating member gear 83 is formed to be integrated with the rotational force transmission gear shaft 82a. The rotating member gear 83 is engaged with the sheave-side gear 79. In other words, the rotating member gear 83 is engaged with the sheave-side gear 79 which is a part of the rotational force conversion mechanism 72, and is rotated by the rotational force of the electric motor 71.

The rotational force transmission gear 82 and the rotational force transmission gear shaft 82a constitute a rotational force transmission gear mechanism 84. The end portions of the rotational force transmission gear shaft 82a are supported by the crankcase member 22 to be immovable in the axial direction. The rotational force transmission gear 82 is larger in diameter than the output gear 81. The rotating member gear 83 is smaller in diameter than the rotational force transmission gear 82. The sheave-side gear 79 is larger in diameter than the rotating member gear 83. The rotation speed of the electric motor 71 is decreased by the rotational force transmission gear mechanism 84.

The sheave position detection sensor 85 is provided leftward of the sheave-side gear 79 in the vehicle left-right direction. The sheave position detection sensor 85 is provided in the crankcase member 22. A sensor axis 85a of the sheave position detection sensor 85 is provided to be orthogonal to the primary rotational axis Ap. An end portion of the sensor axis 85a is supported by the crankcase member 22. A sensor arm 85b is attached to the sensor axis 85a. The sensor arm 85b is in contact with the relative moving member 73 and rotates. To be more specific, the sensor arm 85b is provided with a cutout portion 85c at the outer periphery. The cutout portion 85c is in contact with an end portion on the primary pulley 42 side of the relative moving member 73. The end portion on the primary pulley 42 side, which is in contact with the cutout portion 85c, moves in the direction along the primary rotational axis Ap, relative to the rotating member 74. As the relative moving member 73 moves in the axial direction, the cutout portion 85c in contact with the relative moving member 73 moves in the direction along the primary rotational axis Ap, with the result that the sensor arm 85b rotates. In other words, when the primary pulley 42 moves between the low position and the top position, the sensor arm 85b in contact with the relative moving member 73 rotates. In this way, the sheave position detection sensor 85 detects the movement position of the relative moving member 73 in the direction along the primary rotational axis Ap. In other words, the sheave position detection sensor 85 detects the movement distance of the slide member 44a in the direction along the primary rotational axis Ap, relative to the rotating member 74. The sheave position detection sensor 85 is provided in the lubrication space 22c.

As described above, the primary pulley 42 includes the primary movable sheave 44 and the primary fixed sheave 45. The primary movable sheave 44 is arranged to be movable in the direction along the primary rotational axis Ap, on account of the transmission controller 70. In other words, as the electric motor 71 of the transmission controller 70 is driven, the relative moving member 73 moves in the direction along the primary rotational axis Ap, relative to the rotating member 74. The primary movable sheave 44 connected to the relative moving member 73 moves in the direction along the primary rotational axis Ap. The primary fixed sheave 45 is fixed to the primary shaft portion 41. In other words, the primary fixed sheave 45 is provided on the primary shaft portion 41 so that the movement of the primary fixed sheave 45 is restricted in the direction along the primary rotational axis Ap.

As described above, the secondary pulley 52 includes the secondary movable sheave 54 and the secondary fixed sheave 55. The secondary movable sheave 54 is arranged to be movable in the direction along the rotational axis of the secondary shaft 51. The secondary fixed sheave 55 is fixed in the direction along the rotational axis of the secondary shaft 51. In other words, the secondary fixed sheave 55 is provided so that its movement is restricted in the direction along the rotational axis of the secondary shaft 51. The secondary movable sheave 54 is biased toward the secondary fixed sheave 55 by a spring (not illustrated).

The transmission controller 70 structured as described above is able to move the primary movable sheave 44 of the primary pulley 42 in the direction along the primary rotational axis Ap. In other words, the electric-motor-driven automatic-controlled transmission 50 is able to change the widths of the two primary sheaves 44 and 45 by controlling the electric motor 71. As the primary movable sheave 44 of the primary pulley 42 and the secondary movable sheave 54 of the secondary pulley 52 are moved in the directions along the respective rotational axes, the transmission ratio of the electric-motor-driven automatic-controlled transmission 50 is changed. To be more specific, when the primary movable sheave 44 of the primary pulley 42 is moved in the direction along the primary rotational axis Ap, the diameter of the dry belt 32 wound onto the primary pulley 42 is changed. In accordance with the change of the diameter of the dry belt 32 wound onto the primary pulley 42, the secondary movable sheave 54 of the secondary pulley 52 is moved in the rotational axis direction either by the elastic force of the spring or against the elastic force of the spring. The diameter of the dry belt 32 wound onto the secondary pulley 52 also changes.

For example, when the primary movable sheave 44 of the primary pulley 42 moves toward the primary fixed sheave 45 in the direction along the primary rotational axis Ap, the width of the primary pulley 42 decreases. The diameter of the dry belt 32 wound onto the primary pulley 42 increases. At this stage, the secondary movable sheave 54 of the secondary pulley 52 moves away from the secondary fixed sheave 55 in the direction along the rotational axis of the secondary shaft 51. As a result, the width of the secondary pulley 52 increases whereas the diameter of the dry belt 32 wound onto the secondary pulley 52 decreases. Consequently, the transmission ratio of the electric-motor-driven automatic-controlled transmission 50 is changed to the top position.

Meanwhile, when the primary movable sheave 44 of the primary pulley 42 moves away from the primary fixed sheave 45 in the direction along the primary rotational axis Ap, the width of the primary pulley 42 increases. The diameter of the dry belt 32 wound onto the primary pulley 42 decreases. At this stage, the secondary movable sheave 54 of the secondary pulley 52 moves toward the secondary fixed sheave 55 in the direction along the rotational axis of the secondary shaft 51. As a result, the width of the secondary pulley 52 decreases whereas the diameter of the dry belt 32 wound onto the secondary pulley 52 increases. Consequently, the transmission ratio of the electric-motor-driven automatic-controlled transmission 50 is changed to the low position.

As described above, the transmission ratio of the electric-motor-driven automatic-controlled transmission 50 is changed by the movement of the primary movable sheave 44 of the primary pulley 42. In other words, the transmission ratio is changed between the transmission ratio when the primary movable sheave 44 of the primary pulley 42 is maximally close to the primary fixed sheave 45 and the transmission ratio when the primary movable sheave 44 is maximally away from the primary fixed sheave 45.

### [Power Transmission Path]

The following will describe the power transmission path of the engine unit 6 with reference to FIG. 3.

As shown in FIG. 3, the power transmission path is a path on which power is transmitted from the crankshaft 21 to the rear wheel 3. The crankshaft 21 is the upstream end of the power transmission path. The rear wheel 3 is the downstream end of the power transmission path. The upstream rotating electric machine 90 is directly connected to the crankshaft 21. In other words, the upstream rotating electric machine 90 is connected to the crankshaft 21 to be able to transmit power. The electric-motor-driven automatic-controlled transmission 50 is connected to the crankshaft 21 to be able to transmit power thereto, by the primary pulley 42 which is attached to the primary shaft portion 41 coaxially formed with the crankshaft 21. The power of the crankshaft 21 is transmitted to the secondary shaft 51 to which the secondary pulley 52 is attached, the dry belt 32 being wound onto the secondary pulley 52 and the primary pulley 42. The secondary shaft 51, the main shaft 64, and the drive shaft 60 are arranged so that a rotational force can be transmitted to these shafts by the gears. The power of the secondary shaft 51 is transmitted to the rear wheel 3 by the main shaft 64 and the drive shaft 60. From the upstream to the downstream of the power transmission path, the crankshaft 21, the upstream rotating electric machine 90, the electric-motor-driven automatic-controlled transmission 50, and the rear wheel 3 are provided in this order. In other words, on the power transmission path, the upstream rotating electric machine 90 is provided upstream of the electric-motor-driven automatic-controlled transmission 50. The crankshaft 21 is provided upstream of the electric-motor-driven automatic-controlled transmission 50 on the power transmission path.

### [Structure of ECU]

The engine unit 6 includes the ECU 100. The ECU 100 is configured to control the engine unit 6. As shown in FIG. 3, the ECU 100 is connected to sensors such as the vehicle speed sensor 3c, the accelerator sensor 4b, the throttle opening degree sensor 29c, the engine rotation speed sensor 21s, the sheave position detection sensor 85, and the secondary pulley rotation speed sensor 51b. The ECU 100 is further connected to members such as the ignition plug 24b, the injector 27, the throttle actuator 29b, the electric-motor-driven automatic-controlled transmission 50, the upstream rotating electric machine 90, and the display 110.

The ECU 100 is formed of a CPU, a ROM, a RAM, etc. The CPU performs information processing based on programs and data stored in the ROM and the RAM. With this arrangement, the ECU 100 realizes functions of function processors. As shown in FIG. 3, the ECU 100 includes, as function processors, a combustion control unit 101, a throttle control unit 102, and an acceleration/deceleration control unit 105. The acceleration/deceleration control unit 105 includes a rotating electric machine control unit 103 and a transmission control unit 104. The acceleration/deceleration control unit 105 is a controller of the present teaching.

The combustion control unit 101 is configured to control an ignition timing of the ignition plug 24b. The combustion control unit 101 is further configured to control the driving of the injector 27 and a fuel pump. By doing this, the combustion control unit 101 controls a fuel supply amount. The throttle control unit 102 is configured to control a throttle opening degree by operating the throttle actuator 29b based on an operation of the accelerator grip 4a by the rider. The rotating electric machine control unit 103 is configured to control power supply to the upstream rotating electric machine 90. By doing this, the rotating electric machine control unit 103 controls the power generation function and the power supply function. The transmission control unit 104 drives the electric motor 71 of the electric-motor-driven automatic-controlled transmission 50 so as to control the movement of the primary movable sheave 44 of the primary pulley 42. The transmission control unit 104 controls the transmission ratio of the electric-motor-driven automatic-controlled transmission 50.

The combustion control unit 101 is configured to control combustion in the engine main body unit 20 by executing a program stored in a storage unit such as the ROM. The combustion control unit 101 controls combustion in the engine main body unit 20 by causing the ignition plug 24b to perform ignition by discharge. The combustion control unit 101 controls the fuel supply amount by controlling the driving of the injector 27 and the fuel pump, so as to control combustion in the engine main body unit 20. In this specification, the control of the fuel supply amount includes control of an amount of fuel supplied from the fuel pump and control of time of injecting fuel by the injector 27.

For example, the combustion control unit 101 controls the driving of the injector 27 and the fuel pump based on sets of information in addition to the engine rotation speed and the throttle opening degree. The engine rotation speed is calculated based on an output signal of the engine rotation speed sensor 21s. The throttle opening degree is detected by an output signal of the throttle opening degree sensor 29c. The sets of information are calculated based on output signals of sensors such as an engine temperature sensor and an oxygen sensor.

The throttle control unit 102 is configured to control the throttle opening degree based on an accelerator operation by the rider. In other words, the throttle control unit 102 detects the accelerator opening degree which is an operation amount of the accelerator grip 4a by the rider based on an output signal of the accelerator sensor 4b. The throttle control unit 102 controls the throttle opening degree by activating the throttle actuator 29b based on the accelerator opening degree. To put it differently, the throttle control unit 102 activates the throttle actuator 29b by supplying power to the throttle actuator 29b.

For example, the throttle control unit 102 performs feedback control of the throttle opening degree with reference to a map, a relation, etc. in which an accelerator opening degree is associated with a throttle opening degree. In other words, the throttle control unit 102 calculates a target throttle opening degree corresponding to the accelerator opening degree with reference to the map, etc. In order to cause the actual throttle opening degree detected by the throttle opening degree sensor 29c to correspond to the target throttle opening degree, the throttle control unit 102 drives the throttle actuator 29b based on a difference between the throttle opening degree and the target throttle opening degree. The map, etc. in which an accelerator opening degree is associated with a throttle opening degree is stored in the storage unit in advance.

The acceleration/deceleration control unit 105 is able to perform both the transmission control by the transmission control unit 104 and the rotating electric machine control by the rotating electric machine control unit 103, while the motorcycle 1 accelerates or decelerates. The transmission control by the transmission control unit 104 is control of changing the transmission ratio by controlling the electric motor 71 of the electric-motor-driven automatic-controlled transmission 50. The rotating electric machine control by the rotating electric machine control unit 103 is control of changing torque imparted to the upstream of the electric-motor-driven automatic-controlled transmission 50 on the power transmission path by controlling the upstream rotating electric machine 90. The crankshaft 21 is provided upstream of the electric-motor-driven automatic-controlled transmission 50 on the power transmission path.

The rotating electric machine control unit 103 is configured to control driving of the upstream rotating electric machine 90 by controlling power supply to the upstream rotating electric machine 90 by executing a program stored in the storage unit. In other words, the rotating electric machine control unit 103 executes the rotating electric machine control. Driving states of the upstream rotating electric machine 90 are the power generation state and the power supply state as described above. While the motorcycle 1 accelerates, in order for the upstream rotating electric machine 90 to be driven in the power supply state, the rotating electric machine control unit 103 performs acceleration rotating electric machine control. In the acceleration rotating electric machine control, the upstream rotating electric machine 90 is controlled to change the torque in the positive rotational direction of the crankshaft 21 imparted to the crankshaft 21. In other words, in the acceleration rotating electric machine control, the rotating electric machine control unit 103 is controlled to rotate the upstream rotating electric machine 90 in the positive rotational direction of the crankshaft 21 by power supplied from the battery 94. With this, the upstream rotating electric machine 90 generates engine power. The rotation of the crankshaft 21 is assisted in the positive rotational direction by the upstream rotating electric machine 90. While the motorcycle 1 decelerates, in order for the rotating electric machine control unit 103 to drive the upstream rotating electric machine 90 in the power generation state, the rotating electric machine control unit 103 performs deceleration rotating electric machine control. In the deceleration rotating electric machine control, the upstream rotating electric machine 90 is controlled to change the torque in the reverse rotational direction of the crankshaft 21 imparted to the crankshaft 21. To put it differently, in the deceleration rotating electric machine control, the rotating electric machine control unit 103 rotates the upstream rotating electric machine 90 in the positive rotational direction of the crankshaft 21 to cause the upstream rotating electric machine 90 to absorb the torque of the crankshaft 21. With this, the upstream rotating electric machine 90 generates engine loss. A load in the reverse rotational direction is applied by the upstream rotating electric machine 90 to the rotation of the crankshaft 21. The torque of the crankshaft 21 absorbed by the upstream rotating electric machine 90 is stored as power in the battery 94.

The transmission control unit 104 executes a program stored in the storage unit to control the transmission ratio of the electric-motor-driven automatic-controlled transmission 50. In other words, the transmission control unit 104 executes the transmission control. While the motorcycle 1 accelerates, the transmission control unit 104 performs the acceleration transmission control. The acceleration transmission control changes the transmission ratio of the electric-motor-driven automatic-controlled transmission 50 by controlling the electric motor 71. While the motorcycle 1 decelerates, the transmission control unit 104 performs the deceleration transmission control. The deceleration transmission control changes the transmission ratio of the electric-motor-driven automatic-controlled transmission 50 by controlling the electric motor 71, An output signal of the sheave position detection sensor 85 is input to the transmission control unit 104. The transmission control unit 104 detects the currently-set transmission ratio based on an output signal of the sheave position detection sensor 85. The transmission control unit 104 changes the transmission ratio of the electric-motor-driven automatic-controlled transmission 50 by driving the electric motor 71. In other words, the transmission control unit 104 supplies power to the electric motor 71 to drive the electric motor 71.

For example, the transmission control unit 104 calculates the transmission ratio changed by the electric-motor-driven automatic-controlled transmission 50, based on the vehicle speed calculated based on an output signal of the vehicle speed sensor 3c and sets of data such as the throttle opening degree detected by an output signal of the throttle opening degree sensor 29c.

The acceleration/deceleration control unit 105 is configured to perform acceleration control while the motorcycle 1 accelerates. In the acceleration control, the acceleration/deceleration control unit 105 performs the acceleration transmission control by the transmission control unit 104 or the acceleration rotating electric machine control by the rotating electric machine control unit 103 in a switching manner. Alternatively, in the acceleration control, the acceleration/deceleration control unit 105 simultaneously performs the acceleration transmission control of the transmission control unit 104 and the acceleration rotating electric machine control of the rotating electric machine control unit 103. The acceleration/deceleration control unit 105 is configured to perform deceleration control while the motorcycle 1 decelerates. In the deceleration control, the acceleration/deceleration control unit 105 performs the deceleration transmission control by the transmission control unit 104 or the deceleration rotating electric machine control by the rotating electric machine control unit 103 in a switching manner. Alternatively, in the deceleration control, the acceleration/deceleration control unit 105 simultaneously performs the deceleration transmission control by the transmission control unit 104 and the deceleration rotating electric machine control by the rotating electric machine control unit 103.

### [Structure of Rotating Electric Machine]

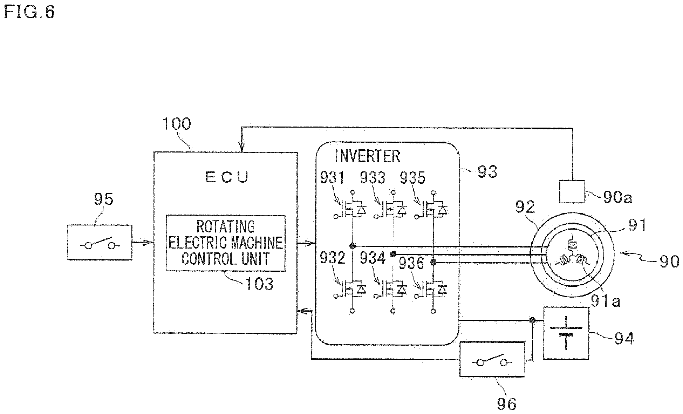

The following will detail the electric structure of the upstream rotating electric machine 90 and the rotating electric machine control unit 103 with reference to FIG. 6. The rotating electric machine control unit 103 is connected to the upstream rotating electric machine 90, the inverter 93, and the battery 94. The rotating electric machine control unit 103 controls the upstream rotating electric machine 90 by driving the inverter 93.

The inner stator 91 includes a plurality of stator coils 91a. Each of the stator coils 91a belongs to one of three phases (U phase, V phase, and W phase). The inverter 93 includes six switching members 931 to 936. The inverter 93 is a three-phase bridge inverter. The switching member 931 and the switching member 932 are connected to one (e.g., U phase) of the three phases of the multi-phased stator coils 91a. The switching member 933 and the switching member 934 are connected to another one (e.g., V phase) of the three phases of the multi-phased stator coils 91a. The switching member 935 and the switching member 936 are connected to another one (e.g., W phase) of the three phases of the multi-phased stator coils 91a. Each of the switching members 931 to 936 includes a switching element. The switching element is, for example, a transistor, to be more specific, is an FET (Field Effect Transistor). Each of the switching members 931 to 936 may not be an FET but a thyristor and an IGBT (Insulated Gate Bipolar Transistor).

The switching members 931 to 936 electrically connect the multi-phased stator coils 91a to the battery 94. In other words, the inverter 93 electrically connects the upstream rotating electric machine 90 to the battery 94. The rotating electric machine control unit 103 of the ECU 100 is connected to the inverter 93. The rotating electric machine control unit 103 controls the switching members 931 to 936 to be switched on or off. In other words, the rotating electric machine control unit 103 switches between conduction and non-conduction of a current between the multi-phased stator coils 91a and the battery 94 by switching on or off the switching members 931 to 936. In other words, the rotating electric machine control unit 103 rectifies a three-phase alternating current output and controls the voltage from the upstream rotating electric machine 90, by controlling timings to switch on and off the switching members 931 to 936. The rotating electric machine control unit 103 is configured to control the driving state of the upstream rotating electric machine 90. To be more specific, when the upstream rotating electric machine 90 is controlled in the power supply state, the rotating electric machine control unit 103 supplies a current to the multi-phased stator coils 91a from the battery 94 via the switching members 931 to 936. When the upstream rotating electric machine 90 is controlled in the power generation state, the rotating electric machine control unit 103 supplies a current to the battery 94 from the multi-phased stator coils 91a via the switching members 931 to 936.

The rotating electric machine control unit 103 is configured to detect the voltage of the battery 94 by switching on the switch 96. The rotating electric machine control unit 103 detects the state of charge (SOC) of the battery 94 by detecting the voltage of the battery 94. To be more specific, the rotating electric machine control unit 103 detects the remaining capacity of the battery 94. The remaining capacity of the battery 94 may be detected based on a parameter different from the voltage of the battery 94. For example, the rotating electric machine control unit 103 may perform the detection based on a current flowing in the battery 94. When the detection is done based on a current flowing between the upstream rotating electric machine 90 and the battery 94, the remaining capacity of the battery 94 can be further accurately detected by adding up the current flowing into the battery 94 and the current flowing out from the battery 94.

The ECU 100 is connected to a starter switch 95 which is used to start the engine main body unit 20. The starter switch 95 is provided on the handle unit 4 (see FIG. 3). The starter switch 95 is operated by the rider when starting the engine main body unit 20.

The upstream rotating electric machine 90 includes the rotor position detection sensor 90a which is configured to detect the position of the outer rotor 92. The outer rotor 92 rotates together with the crankshaft 21. In other words, the rotation speed of the outer rotor 92 is identical to the rotation speed of the crankshaft 21. The rotor position detection sensor 90a may function as an engine rotation speed sensor.

### [Deceleration Control by Acceleration/Deceleration Control Unit (Controller)]

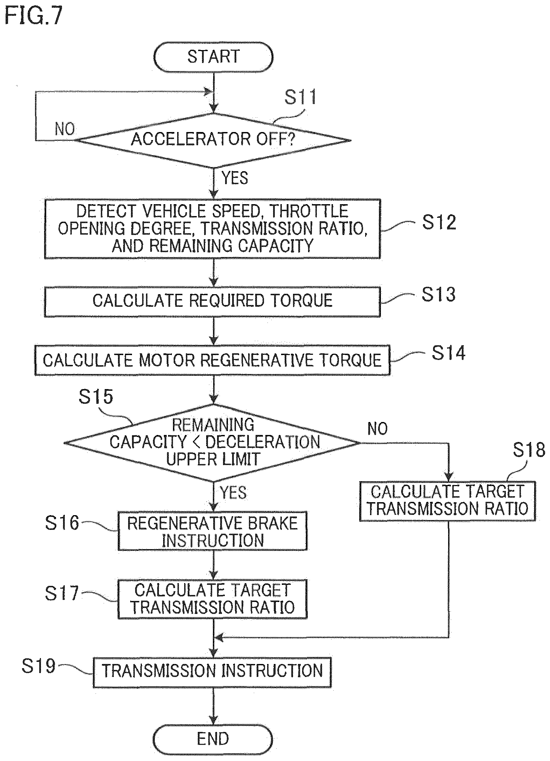

An example of the deceleration control by the acceleration/deceleration control unit (controller) 105 will be described with reference to FIG. 7.

To begin with, the acceleration/deceleration control unit 105 detects the accelerator opening degree based on a signal output from the accelerator sensor 4b. The acceleration/deceleration control unit 105 then determines whether the accelerator has been switched off. In other words, the acceleration/deceleration control unit 105 determines whether the accelerator opening degree has become zero (step S11). When the accelerator opening degree has become zero, the acceleration/deceleration control unit 105 starts the deceleration control (YES in the step S11).

Subsequently, the acceleration/deceleration control unit 105 obtains an output signal from the vehicle speed sensor 3c. The acceleration/deceleration control unit 105 detects the vehicle speed based on the output signal of the vehicle speed sensor 3c. Furthermore, the acceleration/deceleration control unit 105 obtains an output signal from the engine rotation speed sensor 21s. The acceleration/deceleration control unit 105 detects the engine rotation speed based on the output signal from the engine rotation speed sensor 21s. Furthermore, the acceleration/deceleration control unit 105 obtains an output signal from the throttle opening degree sensor 29c. The acceleration/deceleration control unit 105 detects the throttle opening degree based on the output signal of the throttle opening degree sensor 29c. Furthermore, the acceleration/deceleration control unit 105 obtains an output signal from the sheave position detection sensor 85. The acceleration/deceleration control unit 105 detects the transmission ratio based on the output signal of the sheave position detection sensor 85. The detected transmission ratio is a transmission ratio which has been set in advance based on the vehicle speed and the throttle opening degree. Furthermore, the acceleration/deceleration control unit 105 obtains an output signal from the inverter 93. The acceleration/deceleration control unit 105 detects the remaining capacity SOC of the battery 94 based on the output signal of the inverter 93 (step S12).

Based on the vehicle speed detected in the step S12, the acceleration/deceleration control unit 105 calculates a required torque T1R required for the rear wheel 3 with reference to a map, a relation, etc. stored in advance (step S13).

Subsequently, the acceleration/deceleration control unit 105 calculates a motor regenerative torque MR1 based on the transmission ratio and the engine rotation speed detected in the step S12 (step S14). The motor regenerative torque MR1 is a torque in the reverse rotational direction of the crankshaft 21, which is imparted from the upstream rotating electric machine 90 to the crankshaft 21. In other words, the motor regenerative torque MR1 is a torque which is absorbable by the upstream rotating electric machine 90, as a load in the reverse rotational direction of the crankshaft 21 is applied to the upstream rotating electric machine 90.

The acceleration/deceleration control unit 105 then determines if the remaining capacity SOC of the battery 94 detected in the step S12 is less than a deceleration upper limit SOC1R (step S15). The deceleration upper limit SOC1R is calculated based on a predetermined map, relation, or the like.

When the remaining capacity SOC of the battery 94 is less than the deceleration upper limit SOC1R (YES in the step S15), the acceleration/deceleration control unit 105 sends a regenerative brake instruction to the rotating electric machine control unit 103 in order to perform the deceleration rotating electric machine control (step S16). The rotating electric machine control unit 103 which has received the regenerative brake instruction controls the inverter 93 to rotate the upstream rotating electric machine 90 in the positive rotational direction of the crankshaft 21. The rotating electric machine control unit 103 applies, as a torque in the reverse rotational direction of the crankshaft 21, the motor regenerative torque MR1 to the crankshaft 21. The upstream rotating electric machine 90 absorbs the torque of the crankshaft 21 and a load in the reverse rotational direction is applied to the rotation of the crankshaft 21. The upstream rotating electric machine 90 therefore generates an engine loss. The torque of the crankshaft 21 absorbed by the upstream rotating electric machine 90 is stored as power in the battery 94.

The acceleration/deceleration control unit 105 calculates a target transmission ratio G1R based on sets of data such as the throttle opening degree and the vehicle speed detected in step S12 (step S17). The target transmission ratio G1R is a transmission ratio which is lower than, higher than, or identical to the transmission ratio detected in the step S12.

Meanwhile, when the remaining capacity SOC of the battery 94 is equal to or larger than the deceleration upper limit SOC1R (NO in the step S15), the acceleration/deceleration control unit 105 calculates a target transmission ratio GIRL based on sets of data such as the throttle opening degree and the vehicle speed detected in the step S12 (step S18). The target transmission ratio GIRL is identical to or lower than the target transmission ratio G1R. When the target transmission ratio G1R is the lowest transmission ratio, the target transmission ratio GIRL is identical to the target transmission ratio G1R. The acceleration/deceleration control unit 105 then turns on a lamp on the display 110 to indicate that the upstream rotating electric machine 90 cannot be driven. The acceleration/deceleration control unit 105 may not turn on a lamp on the display 110 to indicate that the upstream rotating electric machine 90 cannot be driven.

The acceleration/deceleration control unit 105 performs the deceleration transmission control by controlling the transmission controller 70 by the transmission control unit 104. Then the transmission ratio of the electric-motor-driven automatic-controlled transmission 50 is changed to either the target transmission ratio G1R calculated in step S17 or the target transmission ratio GIRL calculated in step S18 (step S19). When the transmission ratio detected in step S12 is identical to the target transmission ratio G1R or the target transmission ratio GIRL, the acceleration/deceleration control unit 105 does not change the transmission ratio of the electric-motor-driven automatic-controlled transmission 50.

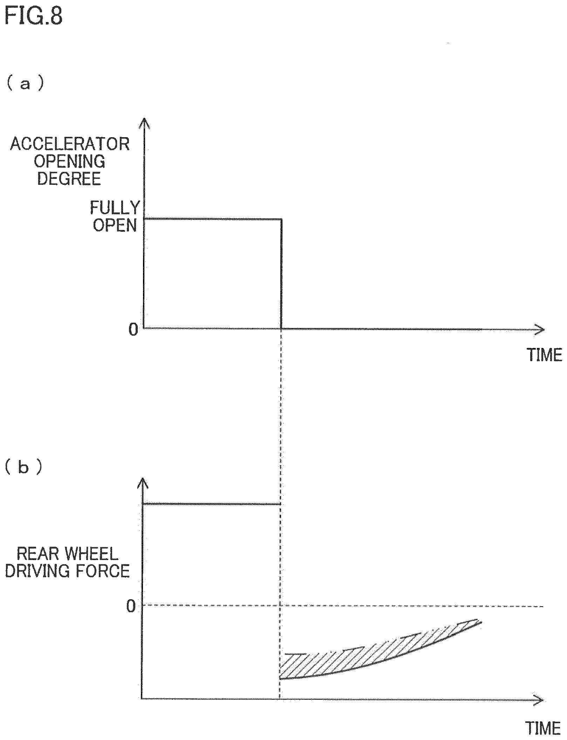

As described above, the motorcycle 1 is controlled as shown in FIGs. 8(a) and 8(b). FIGs. 8(a) and 8(b) are graphs each showing an example of changes over time of the following parameters while the motorcycle decelerates. FIG. 8(a) shows an example of changes of the accelerator opening degree over time. FIG. 8(b) shows an example of changes of the driving force of the rear wheel over time. When the rider performs an accelerator operation for rapid deceleration so as to cause the opening degree (accelerator opening degree) of the accelerator grip 4a to be zero as shown in FIG. 8(a), the acceleration/deceleration control unit 105 performs control as follows. In accordance with the remaining capacity SOC of the battery 94, the acceleration/deceleration control unit 105 either performs the deceleration rotating electric machine control and the deceleration transmission control simultaneously or performs only the deceleration transmission control without performing the deceleration rotating electric machine control. When simultaneously performing the deceleration rotating electric machine control and the deceleration transmission control, the acceleration/deceleration control unit 105 controls the upstream rotating electric machine 90 to apply the torque in the reverse rotational direction to the crankshaft 21 and controls the electric motor 71 of the electric-motor-driven automatic-controlled transmission 50 to change the transmission ratio. When performing the deceleration transmission control without performing the deceleration rotating electric machine control, the acceleration/deceleration control unit 105 does not control the upstream rotating electric machine 90 to apply the torque in the reverse rotational direction to the crankshaft 21 but performs control to change the transmission ratio of the electric-motor-driven automatic-controlled transmission 50.

When the remaining capacity SOC of the battery 94 is smaller than the deceleration upper limit SOC1R, the acceleration/deceleration control unit 105 performs the deceleration rotating electric machine control and the deceleration transmission control simultaneously. The acceleration/deceleration control unit 105 controls the upstream rotating electric machine 90 to apply the torque in the reverse rotational direction to the crankshaft 21 and performs control to change the transmission ratio of the electric-motor-driven automatic-controlled transmission 50. In this case, the acceleration/deceleration control unit 105 controls the upstream rotating electric machine 90 to apply the motor regenerative torque MR1 which is the torque in the reverse rotational direction to the crankshaft 21. The upstream rotating electric machine 90 absorbs the torque from the crankshaft 21 and generates engine loss. As a result, a load in the reverse rotational direction is applied by the upstream rotating electric machine 90 to the crankshaft 21. Furthermore, the acceleration/deceleration control unit 105 performs control so as to change the transmission ratio of the electric-motor-driven automatic-controlled transmission 50 to the target transmission ratio G1R which is determined based on the throttle opening degree and the speed. As a result, as indicated by the full line in FIG. 8(b), a negative driving force, which is calculated by multiplying the motor regenerative torque MR1 which is the torque in the reverse rotational direction applied from the upstream rotating electric machine 90 to the crankshaft 21 by the target transmission ratio G1R, is generated in the rear wheel 3. In FIG. 8(b), a two-dot chain line indicates a driving force generated in the rear wheel 3 when the upstream rotating electric machine 90 does not apply the torque in the reverse rotational direction to the crankshaft 21. Because the accelerator opening degree is zero, engine loss is generated in the engine main body unit 20. On this account, in the rear wheel 3, a negative driving force calculated by multiplying the torque on account of the engine loss in the engine main body unit 20 by the transmission ratio is generated. Therefore, a negative driving force based on not only the engine loss generated in the engine main body unit 20 but also on the engine loss generated by the upstream rotating electric machine 90 is generated in the rear wheel 3. The two-dot chain line in FIG. 8(b) therefore indicates the negative driving force generated in the rear wheel 3 based on the engine loss generated in the engine main body unit 20.

Meanwhile, when the remaining capacity SOC of the battery 94 is equal to or larger than the deceleration upper limit SOC1R, the acceleration/deceleration control unit 105 does not perform the deceleration rotating electric machine control and performs only the deceleration transmission control. The acceleration/deceleration control unit 105 performs control to change the transmission ratio of the electric-motor-driven automatic-controlled transmission 50. In this case, the acceleration/deceleration control unit 105 performs control so as to change the transmission ratio of the electric-motor-driven automatic-controlled transmission 50 to the target transmission ratio GIRL which is determined based on the throttle opening degree and the speed. The target transmission ratio GIRL is lower than the target transmission ratio G1R. Because the accelerator opening degree is zero, engine loss is generated in the engine main body unit 20. On this account, in the rear wheel 3, a negative driving force calculated by multiplying the torque on account of the engine loss in the engine main body unit 20 by the target transmission ratio G1R is generated. In other words, when the remaining capacity SOC of the battery 94 is equal to or larger than the deceleration upper limit SOC1R, the acceleration/deceleration control unit 105 changes the transmission ratio to the target transmission ratio GIRL which is lower than the target transmission ratio G1R. Therefore, a negative driving force which is larger than the negative driving force when the acceleration/deceleration control unit 105 sets the transmission ratio at the target transmission ratio G1R is generated in the rear wheel 3. In other words, a negative driving force larger than the negative driving force indicated by the two-dot chain line in FIG. 8(b) is generated in the rear wheel 3. As such, a negative driving force equivalent to the negative driving force indicated by the two-dot chain line in FIG. 8(b) can be generated in the rear wheel 3.

### [Acceleration Control by Acceleration/Deceleration Control Unit (Controller)]

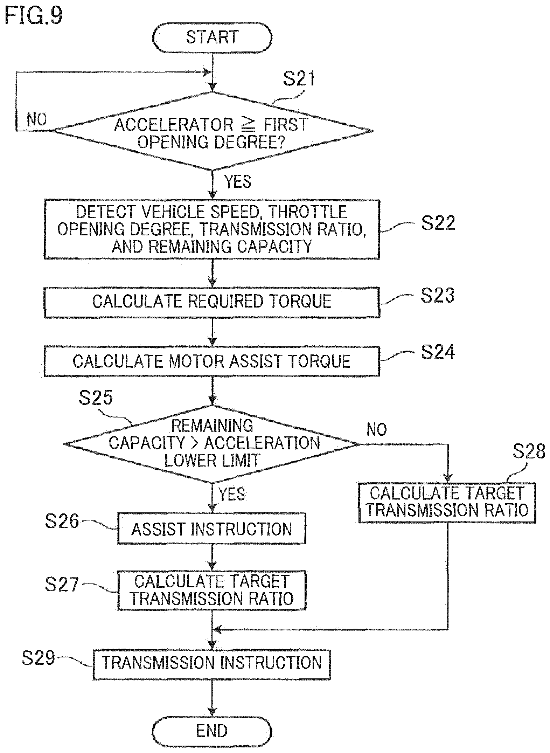

An example of the acceleration control by the acceleration/deceleration control unit (controller) 105 will be described with reference to FIG. 9.

To begin with, the acceleration/deceleration control unit 105 detects the accelerator opening degree based on a signal output from the accelerator sensor 4b. The acceleration/deceleration control unit 105 then determines whether the accelerator opening degree is not smaller than a predetermined first opening degree (step S21). When the accelerator opening degree is equal to or larger than the predetermined first opening degree, the acceleration control starts (YES in the step S21). The predetermined first opening degree is stored in the acceleration/deceleration control unit 105 in advance. Cases when the accelerator opening degree is equal to or larger than the predetermined first opening degree are, for example, when the accelerator opening degree is changed from zero to the maximum.

Subsequently, the acceleration/deceleration control unit 105 obtains an output signal from the vehicle speed sensor 3c. The acceleration/deceleration control unit 105 detects the vehicle speed based on the output signal of the vehicle speed sensor 3c. Furthermore, the acceleration/deceleration control unit 105 obtains an output signal from the engine rotation speed sensor 21s. The acceleration/deceleration control unit 105 detects the engine rotation speed based on the output signal from the engine rotation speed sensor 21s. Furthermore, the acceleration/deceleration control unit 105 obtains an output signal from the throttle opening degree sensor 29c. The acceleration/deceleration control unit 105 detects the throttle opening degree based on the output signal of the throttle opening degree sensor 29c. Furthermore, the acceleration/deceleration control unit 105 obtains an output signal from the sheave position detection sensor 85. The acceleration/deceleration control unit 105 detects the transmission ratio based on the output signal of the sheave position detection sensor 85. The detected transmission ratio is a transmission ratio which has been set in advance based on the vehicle speed and the throttle opening degree. Furthermore, the acceleration/deceleration control unit 105 obtains an output signal from the inverter 93. The acceleration/deceleration control unit 105 detects the remaining capacity SOC of the battery 94 based on the output signal of the inverter 93 (step S22).

Based on the vehicle speed and the accelerator opening degree detected in the step S22, the acceleration/deceleration control unit 105 calculates a torque T1A required for the rear wheel 3 with reference to a map, a relation, etc. stored in advance (step S23).

Subsequently, the acceleration/deceleration control unit 105 calculates a motor assist torque MA1 based on the transmission ratio and the engine rotation speed detected in the step S22 (step S24). The motor assist torque MA1 is a torque in the positive rotational direction of the crankshaft 21, which is imparted from the upstream rotating electric machine 90 to the crankshaft 21. To put it differently, the motor assist torque MA1 is a torque which is able to rotate the crankshaft 21 directly connected to the upstream rotating electric machine 90 by rotating the upstream rotating electric machine 90 in the positive rotational direction of the crankshaft 21 by the power supplied from the battery 94.

The acceleration/deceleration control unit 105 then determines whether the remaining capacity SOC of the battery 94 detected in the step S22 is larger than an acceleration lower limit SOC1A (step S25). The acceleration lower limit SOC1A is calculated based on a predetermined map, relation, or the like.

When the remaining capacity SOC of the battery 94 is larger than the acceleration lower limit SOC1A (YES in the step S25), the acceleration/deceleration control unit 105 sends an assist instruction to the rotating electric machine control unit 103 in order to perform the acceleration rotating electric machine control (step S26). The rotating electric machine control unit 103 which has received the assist instruction controls the inverter 93 to rotate the upstream rotating electric machine 90 in the positive rotational direction of the crankshaft 21. The rotating electric machine control unit 103 applies, as a torque in the positive rotational direction of the crankshaft 21, the motor assist torque MA1 to the crankshaft 21. Then the torque is applied to the crankshaft 21 directly connected to the upstream rotating electric machine 90 by the power supplied from the battery 94.

The acceleration/deceleration control unit 105 calculates a target transmission ratio G1A based on sets of data such as the accelerator opening degree detected in step S21 and the throttle opening degree and the vehicle speed detected in the step S22 (step S27). The target transmission ratio G1A is a transmission ratio which is lower than, higher than, or identical to the transmission ratio detected in step S22.

Meanwhile, when the remaining capacity SOC of the battery 94 is equal to or smaller than the acceleration lower limit SOC1A (NO in the step S25), the acceleration/deceleration control unit 105 calculates a target transmission ratio G1AL based on sets of data such as the throttle opening degree and the vehicle speed detected in step S22 (step S28). The target transmission ratio G1AL is identical to or lower than the target transmission ratio G1A. When the target transmission ratio G1A is the lowest transmission ratio, the target transmission ratio G1AL is identical to the target transmission ratio G1A. The acceleration/deceleration control unit 105 then turns on a lamp on the display 110 to indicate that the upstream rotating electric machine 90 cannot be driven. The acceleration/deceleration control unit 105 may not turn on a lamp on the display 110 to indicate that the upstream rotating electric machine 90 cannot be driven.

The acceleration/deceleration control unit 105 performs the acceleration transmission control by controlling the transmission controller 70 by the transmission control unit 104. Then the transmission ratio of the electric-motor-driven automatic-controlled transmission 50 is changed to either the target transmission ratio G1R calculated in step S27 or the target transmission ratio G1AL calculated in the step S28 (step S29). When the transmission ratio detected in step S22 is identical to the target transmission ratio G1R or the target transmission ratio GIRL, the acceleration/deceleration control unit 105 does not change the transmission ratio of the electric-motor-driven automatic-controlled transmission 50.

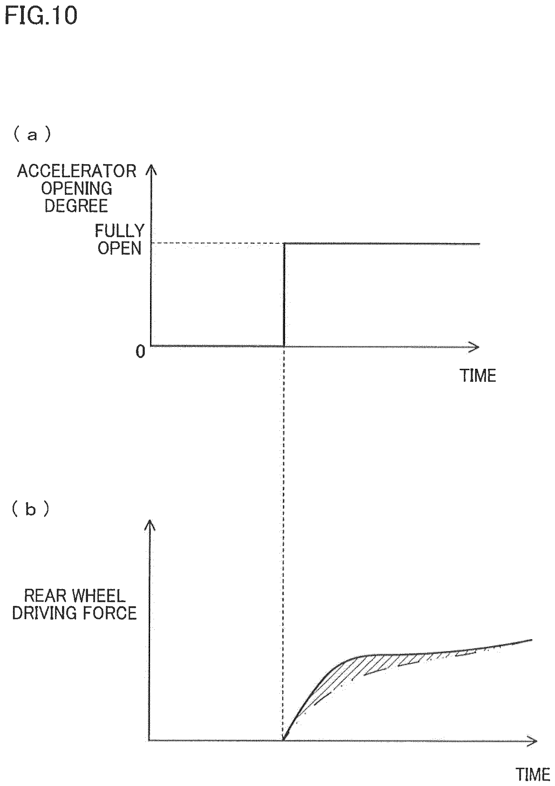

As described above, the motorcycle 1 is controlled as shown in FIGs. 10(a) and 10(b). FIGs. 10(a) and 10(b) are graphs each showing an example of changes over time of the following parameters while the motorcycle accelerates. FIG. 10(a) shows an example of changes of the accelerator opening degree over time. FIG. 10(b) shows an example of changes of the driving force of the rear wheel over time, When the rider performs an accelerator operation for acceleration so as to cause the accelerator opening degree of the accelerator grip 4a to be equal to or higher than the first opening degree as shown in FIG. 10(a), the acceleration/deceleration control unit 105 performs control as follows. In accordance with the remaining capacity SOC of the battery 94, the acceleration/deceleration control unit 105 either performs the acceleration rotating electric machine control and the acceleration transmission control simultaneously or performs only the acceleration transmission control without performing the acceleration rotating electric machine control. When simultaneously performing the acceleration rotating electric machine control and the acceleration transmission control, the acceleration/deceleration control unit 105 controls the upstream rotating electric machine 90 to apply the torque in the positive rotational direction to the crankshaft 21 by the power supplied from the battery 94 and controls the electric motor 71 of the electric-motor-driven automatic-controlled transmission 50 to change the transmission ratio. When performing the acceleration transmission control without performing the acceleration rotating electric machine control, the acceleration/deceleration control unit 105 does not control the upstream rotating electric machine 90 to apply the torque in the positive rotational direction to the crankshaft 21 but performs control to change the transmission ratio of the electric-motor-driven automatic-controlled transmission 50.

When the remaining capacity SOC of the battery 94 is larger than the acceleration lower limit SOC1A, the acceleration/deceleration control unit 105 performs the acceleration rotating electric machine control and the acceleration transmission control simultaneously. The acceleration/deceleration control unit 105 performs control so that the upstream rotating electric machine 90 applies the torque in the positive rotational direction to the crankshaft 21 by the power supplied from the battery 94 to rotate the crankshaft 21 in the positive rotational direction, and the transmission ratio of the electric-motor-driven automatic-controlled transmission 50 is changed. In this case, the acceleration/deceleration control unit 105 controls the upstream rotating electric machine 90 to apply the motor assist torque MA1 which is the torque in the positive rotational direction to the crankshaft 21. The upstream rotating electric machine 90 applies the torque to the crankshaft 21 and generates engine power. Furthermore, the acceleration/deceleration control unit 105 performs control of the electric-motor-driven automatic-controlled transmission 50 so as to change the transmission ratio of the electric-motor-driven automatic-controlled transmission 50 to the target transmission ratio G1A which is determined based on the throttle opening degree and the speed. As a result, as indicated by the full line in FIG. 10(b), a positive driving force, which is calculated by multiplying the motor assist torque MA1 which is the torque in the positive rotational direction applied from the upstream rotating electric machine 90 to the crankshaft 21 by the target transmission ratio G1A, is generated in the rear wheel 3. In FIG. 10(b), a two-dot chain line indicates a driving force generated in the rear wheel 3 when the upstream rotating electric machine 90 does not apply the torque in the positive rotational direction to the crankshaft 21. At this stage, engine power is generated in the engine main body unit 20. On this account, in the rear wheel 3, a positive driving force calculated by multiplying the torque on account of the engine power generated in the engine main body unit 20 by the transmission ratio is generated. Therefore a positive driving force based on not only the engine power generated in the engine main body unit 20 but also engine power generated by the upstream rotating electric machine 90 is generated in the rear wheel 3, and hence the positive driving force is increased. The two-dot chain line in FIG. 10(b) therefore indicates the positive driving force generated in the rear wheel 3 based on the engine power generated in the engine main body unit 20.

Meanwhile, when the remaining capacity SOC of the battery 94 is equal to or smaller than the acceleration lower limit SOC1A, the acceleration/deceleration control unit 105 does not perform the acceleration rotating electric machine control but performs only the acceleration transmission control. The acceleration/deceleration control unit 105 performs control to change the transmission ratio of the electric-motor-driven automatic-controlled transmission 50. In this case, the acceleration/deceleration control unit 105 performs control so as to change the transmission ratio of the electric-motor-driven automatic-controlled transmission 50 to the target transmission ratio G1AL which is determined based on the throttle opening degree and the speed. The target transmission ratio G1AL is lower than the target transmission ratio G1A. At this stage, the engine power is generated in the engine main body unit 20. On this account, in the rear wheel 3, a positive driving force calculated by multiplying the torque on account of the engine power generated in the engine main body unit 20 by the target transmission ratio G1A is generated. In other words, when the remaining capacity SOC of the battery 94 is equal to or smaller than the acceleration lower limit SOC1A, the acceleration/deceleration control unit 105 changes the transmission ratio to the target transmission ratio G1AL which is lower than the target transmission ratio G1A. Therefore, a positive driving force which is larger than the negative driving force when the acceleration/deceleration control unit 105 sets the transmission ratio to the target transmission ratio G1A is generated in the rear wheel 3.

In the motorcycle 1 of First Embodiment, the transmission 40 is connected to the crankshaft 21 to be able to transmit power thereto. In other words, the electric-motor-driven automatic-controlled transmission 50 is connected to the crankshaft 21. The electric-motor-driven automatic-controlled transmission 50 is configured to transmit the power of the engine main body unit 20 at a transmission ratio set by an electric motor 71. In other words, power is transmitted via the crankshaft 21 to the electric-motor-driven automatic-controlled transmission 50. The crankshaft 21 is therefore provided upstream of the electric-motor-driven automatic-controlled transmission 50 on the power transmission path. The rear wheel 3 which is a driving wheel is connected to the electric-motor-driven automatic-controlled transmission 50. The rear wheel 3 generates a driving force by means of the power transmitted from the electric-motor-driven automatic-controlled transmission 50. The electric-motor-driven automatic-controlled transmission 50 is configured to control the driving force of the rear wheel 3 by changing the transmission ratio by controlling the electric motor 71. Meanwhile, the upstream rotating electric machine 90 is directly connected to the crankshaft 21. The upstream rotating electric machine 90 is a rotating electric machine provided upstream of the electric-motor-driven automatic-controlled transmission 50 on a power transmission path on which power is transmitted from the crankshaft 21 to the rear wheel 3. The upstream rotating electric machine 90 applies the torque in the reverse rotational direction to the crankshaft 21 while the motorcycle 1 decelerates. The upstream rotating electric machine 90 generates engine loss by applying the torque in the reverse rotational direction to the crankshaft 21 while the motorcycle 1 decelerates. The upstream rotating electric machine 90 generates engine power by applying the torque in the positive rotational direction to the crankshaft 21 while the motorcycle 1 accelerates. As the torque in the positive rotational direction of the crankshaft 21 increases, a positive driving force increases. As the torque in the reverse rotational direction of the crankshaft 21 is generated, a negative driving force increases. The upstream rotating electric machine 90 controls the driving force by imparting torque in the positive rotational direction of the crankshaft 21 or in the reverse rotational direction of the crankshaft 21.

In connection with the above, the electric-motor-driven automatic-controlled transmission 50 and the upstream rotating electric machine 90 are different from each other in responsiveness regarding the control of the driving force. The electric-motor-driven automatic-controlled transmission 50 performs control to change the transmission ratio. The electric-motor-driven automatic-controlled transmission 50 includes the electric motor 71, the rotational force conversion mechanism 72, and the rotational force transmission mechanism 80. To put it differently, in the control of changing the transmission ratio by the electric-motor-driven automatic-controlled transmission 50, there is a constraint due to the mechanism of the electric-motor-driven automatic-controlled transmission 50 including the electric motor 71. On this account, there is a time lag from the control of changing the transmission ratio based on the transmission ratio set in accordance with an accelerator operation, which is performed for the electric-motor-driven automatic-controlled transmission 50 by the transmission control unit 104, to the actual control of the driving force. Meanwhile, the upstream rotating electric machine 90 is connected to the crankshaft 21. For this reason, in the upstream rotating electric machine 90, there is little time lag from the control of changing the torque imparted to the upstream of the electric-motor-driven automatic-controlled transmission 50 on the power transmission path by controlling the upstream rotating electric machine 90 to the actual control of the driving force. As such, the electric-motor-driven automatic-controlled transmission 50 and the upstream rotating electric machine 90 are different from each other in responsiveness regarding the control of the driving force.

In addition to the above, the electric-motor-driven automatic-controlled transmission 50 is a continuously variable transmission using a dry belt 32. In the dry belt 32, the slide portion 32a in contact with the primary pulley 42 and the secondary pulley 52 is not lubricated by lubricant. The dry belt 32 is provided in the dry space 31a. The dry belt 32 is made of rubber or resin. Meanwhile, when a belt is provided in a lubrication space lubricated by lubricant, the belt is made of metal or is a metal chain. On this account, in the electric-motor-driven automatic-controlled transmission 50 employing the dry belt, friction with the primary pulley and the secondary pulley tends to occur at the slide portion as compared to an electric-motor-driven automatic-controlled transmission employing a metal belt. On this account, responsiveness of control of the driving force is low in the electric-motor-driven automatic-controlled transmission 50 employing the dry belt, as compared to the electric-motor-driven automatic-controlled transmission employing the metal belt. To put it differently, in the electric-motor-driven automatic-controlled transmission 50 employing the dry belt, there is a long time lag from the start of the control of changing the transmission ratio to the actual control of the driving force.

Meanwhile, the upstream rotating electric machine 90 is directly connected to the crankshaft 21 and there is no mechanism between the upstream rotating electric machine 90 and the crankshaft 21. For this reason, in the upstream rotating electric machine 90, there is little time lag from the control of changing the torque imparted to the upstream of the electric-motor-driven automatic-controlled transmission 50 on the power transmission path by controlling the upstream rotating electric machine 90 by the rotating electric machine control unit 103 to the control of the driving force. The responsiveness of the control of the driving force by the upstream rotating electric machine 90 is therefore better than the responsiveness of the control of the driving force by the electric-motor-driven automatic-controlled transmission 50. To put it differently, the electric-motor-driven automatic-controlled transmission 50 and the upstream rotating electric machine 90 are different from each other in responsiveness regarding the control of the driving force.

The acceleration/deceleration control unit 105 is able to perform both the transmission control by the transmission control unit 104 and the rotating electric machine control by the rotating electric machine control unit 103, while the motorcycle 1 accelerates or decelerates. The transmission control unit 104 of the acceleration/deceleration control unit 105 changes the transmission ratio by controlling the electric motor 71 of the electric-motor-driven automatic-controlled transmission 50. Furthermore, the rotating electric machine control unit 103 of the acceleration/deceleration control unit 105 changes the torque imparted to the upstream of the electric-motor-driven automatic-controlled transmission 50 on the power transmission path by controlling the upstream rotating electric machine 90. While the motorcycle 1 accelerates, the acceleration/deceleration control unit 105 performs the acceleration transmission control by the transmission control unit 104 or the acceleration rotating electric machine control by the rotating electric machine control unit 103. In the acceleration transmission control, the transmission control unit 104 changes the transmission ratio by controlling the electric motor 71 of the electric-motor-driven automatic-controlled transmission 50. In the acceleration rotating electric machine control, the rotating electric machine control unit 103 changes the torque in the positive rotational direction of the crankshaft 21 which is applied to the crankshaft 21, by controlling the upstream rotating electric machine 90. While the motorcycle 1 decelerates, the acceleration/deceleration control unit 105 performs the deceleration transmission control by the transmission control unit 104 or the deceleration rotating electric machine control by the rotating electric machine control unit 103. In the deceleration transmission control, the transmission control unit 104 changes the transmission ratio by controlling the electric motor 71 of the electric-motor-driven automatic-controlled transmission 50. In the deceleration rotating electric machine control, the rotating electric machine control unit 103 changes the torque in the reverse rotational direction of the crankshaft 21 which is applied to the crankshaft 21, by controlling the upstream rotating electric machine 90. In connection with the above, the electric-motor-driven automatic-controlled transmission 50 and the upstream rotating electric machine 90 are different from each other in responsiveness regarding the control of the driving force. On this account, the controllability of the driving force is improved because the acceleration/deceleration control unit 105 controls the electric-motor-driven automatic-controlled transmission 50 and the upstream rotating electric machine 90. Furthermore, in the power transmission direction from the crankshaft 21 to the rear wheel 3, the upstream rotating electric machine 90 is provided upstream of the electric-motor-driven automatic-controlled transmission 50. In other words, on the power transmission path, the upstream rotating electric machine 90 is provided upstream of the electric-motor-driven automatic-controlled transmission 50. The driving force calculated by multiplying the torque imparted by the upstream rotating electric machine 90 by the transmission ratio of the electric-motor-driven automatic-controlled transmission 50 is transmitted to the rear wheel 3. As a result of this, it is unnecessary to frequently change the transmission ratio by the electric-motor-driven automatic-controlled transmission 50, or an amount of change in the transmission ratio is reduced. It is therefore possible to eliminate or shorten the time lag until the electric-motor-driven automatic-controlled transmission 50 changes the transmission ratio. In other words, the followability of the driving force in response to an operation of the accelerator by the rider can be improved. To put it differently, the followability of the driving force in response to an operation of the accelerator can be improved by providing, upstream of the electric-motor-driven automatic-controlled transmission 50 in the power transmission direction, the upstream rotating electric machine 90 which is controllable with higher responsiveness than the electric-motor-driven automatic-controlled transmission 50. It is therefore possible to change the driving force by a small change in engine power or engine loss generated by the upstream rotating electric machine 90. As such, in the motorcycle 1 of the present embodiment, the followability of the driving force in response to an operation of the accelerator by the rider is improved in deceleration or acceleration.

As compared to four-wheel vehicles such as automobiles, the motorcycle 1 is arranged such that the length in the left-right direction is shorter than the length in the front-rear direction. In consideration of the followability of the driving force in response to an operation of the accelerator of the motorcycle 1, the controllability of the motorcycle 1 is preferably improved in the left-right direction. For this reason, in the motorcycle 1, a heavy load is preferably provided at around the center of the motorcycle 1. Power from the crankshaft 21 to the rear wheel 3 is transmitted via the power transmission path. Therefore, the engine main body unit 20 including the crankshaft 21 is provided upstream of the power transmission direction. The rear wheel 3 is provided downstream in the power transmission direction. The engine main body unit 20 which is a heavy load is provided at around the center of the motorcycle 1. Meanwhile, the rear wheel 3 is provided at an end portion of the motorcycle 1. In this connection, the rotating electric machine is also a heavy load. The rotating electric machine is provided at around the center of the motorcycle 1 when the machine is provided upstream of the electric-motor-driven automatic-controlled transmission 50 in the power transmission direction, as compared to a case where the machine is provided downstream. The controllability of the motorcycle 1 in the left-right direction is therefore improved when the upstream rotating electric machine 90 is provided upstream of the electric-motor-driven automatic-controlled transmission 50 in the power transmission direction.

As compared to four-wheel vehicles such as automobiles, the motorcycle 1 is small in size. In consideration of the followability of the driving force in response to an operation of the accelerator of the motorcycle 1, increase in size of the vehicle is not preferable. The size of the rotating electric machine is therefore preferably small. Furthermore, in the motorcycle 1, the upstream rotating electric machine 90 provided upstream of the electric-motor-driven automatic-controlled transmission 50 in the power transmission direction may rotate at a higher rotation speed than a downstream rotating electric machine provided downstream of the electric-motor-driven automatic-controlled transmission 50 in the power transmission direction. The efficiency of a motor depends on its rotation speed. In the upstream rotating electric machine 90 provided upstream of the electric-motor-driven automatic-controlled transmission 50 in the power transmission direction may be more efficient as a motor than the downstream rotating electric machine provided downstream of the electric-motor-driven automatic-controlled transmission 50 in the power transmission direction. Typically, a larger rotating electric machine outputs higher power. On this account, when the upstream rotating electric machine 90 provided upstream of the electric-motor-driven automatic-controlled transmission 50 in the power transmission direction is more efficient as a motor than the downstream rotating electric machine provided downstream of the electric-motor-driven automatic-controlled transmission 50 in the power transmission direction, the upstream rotating electric machine can be smaller in size than the downstream rotating electric machine but produce the same power. The increase in size of the motorcycle 1 may therefore be restrained by providing the upstream rotating electric machine 90 upstream of the electric-motor-driven automatic-controlled transmission 50 in the power transmission direction.

While the motorcycle 1 accelerates, the acceleration/deceleration control unit 105 performs the acceleration transmission control by the transmission control unit 104 or the acceleration rotating electric machine control by the rotating electric machine control unit 103 in a switching manner. Furthermore, while the motorcycle 1 accelerates, the acceleration/deceleration control unit 105 performs the acceleration transmission control by the transmission control unit 104 and the acceleration rotating electric machine control by the rotating electric machine control unit 103 simultaneously. Meanwhile, while the motorcycle 1 decelerates, the acceleration/deceleration control unit 105 performs the deceleration transmission control by the transmission control unit 104 or the deceleration rotating electric machine control by the rotating electric machine control unit 103 in a switching manner. Furthermore, while the motorcycle 1 decelerates, the acceleration/deceleration control unit 105 performs the deceleration transmission control by the transmission control unit 104 and the deceleration rotating electric machine control by the rotating electric machine control unit 103 simultaneously. The acceleration/deceleration control unit 105 is able to perform control in accordance with the responsiveness of the control of the driving force by switching between the control of the electric-motor-driven automatic-controlled transmission 50 and the control of the upstream rotating electric machine 90. This makes it possible to improve the responsiveness of the control of the driving force. The acceleration/deceleration control unit 105 is able to improve the responsiveness of the control of the driving force by simultaneously performing the control of the electric-motor-driven automatic-controlled transmission 50 and the control of the upstream rotating electric machine 90. In the motorcycle 1, the followability of the driving force in response to an operation of the accelerator by the rider can be improved in deceleration or acceleration.

In addition to the above, the acceleration/deceleration control unit 105 controls the driving of the upstream rotating electric machine 90 based on the remaining capacity SOC of the battery 94. Alternatively, the acceleration/deceleration control unit 105 controls the electric motor 71 of the electric-motor-driven automatic-controlled transmission 50 in accordance with the remaining capacity SOC of the battery 94. To be more specific, while the motorcycle 1 accelerates, the acceleration/deceleration control unit 105 controls the upstream rotating electric machine 90 by the rotating electric machine control unit 103 and controls the electric motor 71 of the electric-motor-driven automatic-controlled transmission 50 by the transmission control unit 104 simultaneously, (a) when the remaining capacity of the battery 94 is larger than the predetermined acceleration lower limit. Meanwhile, while the motorcycle 1 accelerates, the acceleration/deceleration control unit 105 controls the electric motor 71 of the electric-motor-driven automatic-controlled transmission 50 by the transmission control unit 104, (b) when the remaining capacity of the battery 94 is equal to or smaller than the predetermined acceleration lower limit. While the motorcycle 1 decelerates, the acceleration/deceleration control unit 105 controls the upstream rotating electric machine 90 by the rotating electric machine control unit 103 and controls the electric motor 71 of the electric-motor-driven automatic-controlled transmission 50 by the transmission control unit 104 simultaneously, (c) when the remaining capacity of the battery 94 is smaller than the predetermined deceleration upper limit. Meanwhile, while the motorcycle 1 decelerates, the acceleration/deceleration control unit 105 controls the electric motor 71 of the electric-motor-driven automatic-controlled transmission 50, (d) when the remaining capacity of the battery 94 is equal to or larger than the predetermined deceleration upper limit. While the motorcycle 1 accelerates, if the acceleration/deceleration control unit 105 controls the upstream rotating electric machine 90 while the remaining capacity of the battery 94 is small, the battery 94 is likely to run out during the control of the upstream rotating electric machine 90. The acceleration/deceleration control unit 105 therefore does not control the upstream rotating electric machine 90, and controls the electric motor 71 of the electric-motor-driven automatic-controlled transmission 50 by the transmission control unit 104 so as to change the transmission ratio. With this, followability of the driving force in response to an operation of the accelerator by the rider can be improved. While the motorcycle 1 decelerates, if the acceleration/deceleration control unit 105 controls the upstream rotating electric machine 90 while the remaining capacity of the battery 94 is large, the battery 94 is likely to be fully charged during the control of the upstream rotating electric machine 90. The acceleration/deceleration control unit 105 does therefore not control the upstream rotating electric machine 90, and controls the electric motor 71 of the electric-motor-driven automatic-controlled transmission 50 by the transmission control unit 104 so as to change the transmission ratio. With this, followability of the driving force in response to an operation of the accelerator by the rider can be improved. With this, full or excessive charging of the battery 94 can be prevented. Furthermore, rapid changes in the driving force are restrained while the motorcycle 1 accelerates or decelerates, irrespective of the charging state of the battery 94.

While the motorcycle 1 accelerates or decelerates, the acceleration/deceleration control unit 105 calculates a target transmission ratio based on sets of data such as the accelerator opening degree calculated based on an output signal of the accelerator sensor 4b, the throttle opening degree calculated based on an output signal of the throttle opening degree sensor 29c, and the vehicle speed calculated based on an output signal of the vehicle speed sensor 3c. The target transmission ratio is a transmission ratio changed by the electric-motor-driven automatic-controlled transmission 50. The motorcycle 1 of the present embodiment is therefore able to calculate the target transmission ratio based on the vehicle state of the motorcycle 1. On this account, when the vehicle state of the motorcycle 1 is the same, the motorcycle 1 is able to run in the same manner. To put it differently, in the motorcycle 1 of the present embodiment, while the motorcycle 1 accelerates or decelerates, the reproducibility is improved and hence the followability of the driving force in response to an operation of the accelerator by the rider is improved.

While the motorcycle 1 accelerates or decelerates, the acceleration/deceleration control unit 105 calculates the torque applied from the upstream rotating electric machine 90 to the crankshaft 21 based on an output signal of the engine rotation speed sensor 21s and an output signal of the sheave position detection sensor 85. The motorcycle 1 of the present embodiment is therefore able to calculate the torque applied from the upstream rotating electric machine to the crankshaft based on the vehicle state of the motorcycle 1. On this account, when the vehicle state of the motorcycle 1 is the same, the motorcycle 1 is able to run in the same manner. To put it differently, in the motorcycle 1, while the motorcycle 1 accelerates or decelerates, the reproducibility is improved and hence the followability of the driving force in response to an operation of the accelerator by the rider is improved.

The rotating electric machine rotational axis Ag1 which is the rotational axis of the upstream rotating electric machine 90 is provided on the same linear line as the crankshaft rotational axis Ac1 which is the rotational axis of the crankshaft 21. The upstream rotating electric machine 90 is able to directly apply the torque to the crankshaft 21 upstream of the electric-motor-driven automatic-controlled transmission 50 on the power transmission path. In other words, the upstream rotating electric machine 90 is able to improve the responsiveness of the control of the driving force. In the motorcycle 1 of the present embodiment, the followability of the driving force in response to an operation of the accelerator by the rider can be improved in deceleration or acceleration.

The acceleration/deceleration control unit 105 includes the transmission control unit 104 configured to perform the transmission control and the rotating electric machine control unit 103 configured to perform the rotating electric machine control. The transmission control unit 104 and the rotating electric machine control unit 103 are formed in the same ECU 100. This makes it possible to downsize the acceleration/deceleration control unit 105. The increase in size of the motorcycle 1 is therefore restrained.

### (Second Embodiment)

### [Overall Structure of Motorcycle]

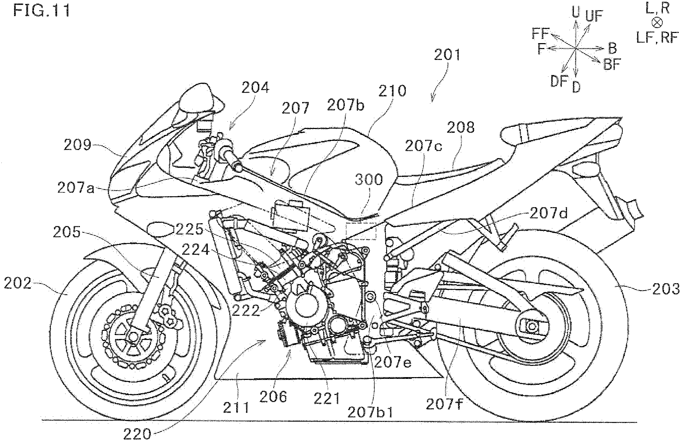

The overall structure of a motorcycle 201 of Second Embodiment will be described with reference to FIG. 11. FIG. 11 shows the motorcycle 201 in an upright state on a horizontal road surface. The motorcycle 201 includes a front wheel 202 and a rear wheel 203 which are wheels and a vehicle body frame 207. The rear wheel 203 is a driving wheel.

The motorcycle 201 is a so-called motorcycle-type motorcycle. The vehicle body frame 207 is structured to lean rightward of the vehicle 201 when turning right and lean leftward of the vehicle 201 when turning left.

The vehicle body frame 207 includes a head pipe 207a, a main frame 207b, seat rails 207c, and seat pillar tubes 207d. The main frame 207b extends rearward and downward from the head pipe 207a. The seat rails 207c are provided on the left and right sides and extend rearward and upward from an intermediate portion of the main frame 207b. The seat pillar tubes 207d are provided on the left and right sides and are connected to a rear end portion of the main frame 207b and intermediate portions of the seat rails 207c. The head pipe 207a is formed at a front portion of the vehicle body frame 207. A steering shaft (not illustrated) is rotatably inserted into the head pipe 207a. An upper end portion of the steering shaft is connected to a handle unit 204. Upper end portions of paired front forks 205 are secured to the handle unit 204. A lower end portion of each front fork 205 supports the front wheel 202.

Paired left and right rear arm brackets 207b1 are provided at the rear end portion of the main frame 207b. Each rear arm bracket 207b1 protrudes downward from the rear end portion of the main frame 207b. A pivot shaft 207e is provided at the rear arm brackets 207b1. A front end portion of a rear arm 207f is swingably supported by the pivot shaft 207e. The rear wheel 203 is supported at a rear end portion of the rear arm 207f. The rear arm brackets 207b1 are parts of the vehicle body frame 207.

An engine unit 206 for driving the rear wheel 203 is supported by the vehicle body frame 207. A part of the engine unit 206 is covered with a front cowling 209 and leg shields 211 which will be described later. For the sake of explanation, the engine unit 206 is depicted by full lines whereas the front cowling 209 and the leg shields 211 are depicted by two-dot chain lines in FIG. 11. The engine unit 206 is provided below an upper end of a later-described seat 208. The engine unit 206 is supported in a state of hanging down from the main frame 207b.

The seat 208 and a fuel tank 210 are supported at an upper portion of the vehicle body frame 207. The seat 208 extends from a rear end portion of the fuel tank 210 toward a rear end portion of each seat rail 207c. The fuel tank 210 is provided above a front half portion of each seat rail 207c.

An upper part of each front fork 205 is covered with the front cowling 209. The leg shields 211 are provided below the front cowling 209. The leg shields 211 are provided on the left and right sides of a lower portion of the motorcycle 201. Each leg shield 211 is a cover member covering the leg of the rider.

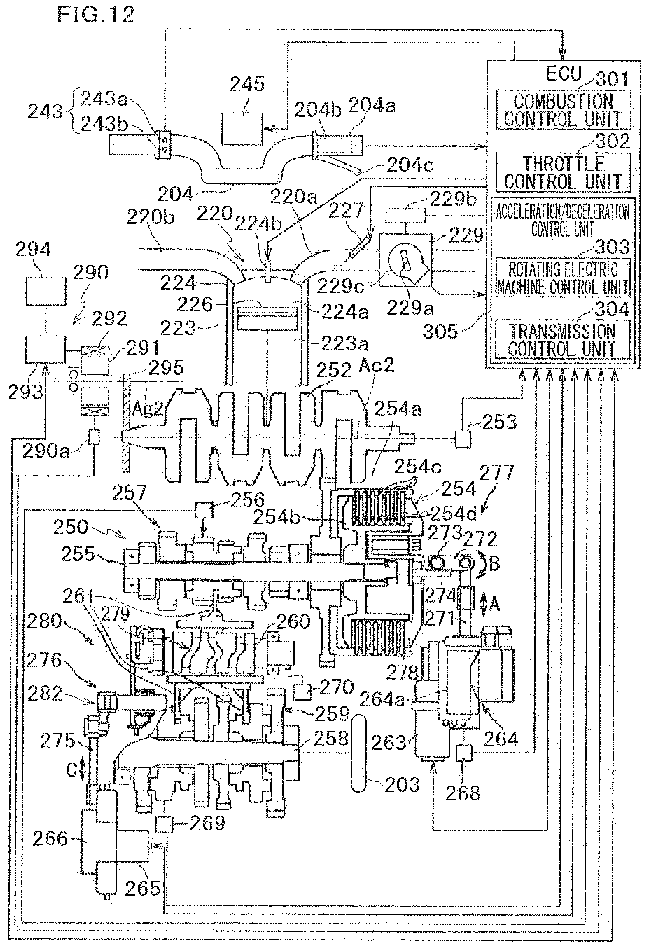

The vehicle body frame 207 supports a battery 294 (see FIG. 12) which is configured to supply power to electronic apparatuses such as sensors and an ECU (controller) 300. The ECU 300 controls operations of components of the motorcycle 201.

The handle unit 204, the steering shaft, the front forks 205, and the front wheel 202 are provided to rotate together in the left-right direction. The front wheel 202 is operated by the handle unit 204. When the handle unit 204 is steered in the left-right direction, a plane, which passes the center in the width direction of the front wheel 202, leans relative to the front-rear direction (FB direction) of the vehicle 201.

As shown in FIG. 11 and FIG. 12, the handle unit 204 includes an accelerator grip 204a and a brake lever 204c. The right grip of the handle unit 204 is the accelerator grip 204a. The accelerator grip 204a is rotated by an operation of the rider. The accelerator grip 204a is operated to adjust the output of the engine. An accelerator sensor 204b is provided at the accelerator grip 204a. The accelerator sensor 204b is configured to detect the opening degree (hereinafter, accelerator opening degree) of the accelerator grip 204a operated by the rider. The accelerator sensor 204b is, for example, a potentiometer provided at the accelerator grip 204a, and is configured to output an electrical signal corresponding to the accelerator opening degree set by the rider. The ECU 300 is configured to detect the accelerator opening degree set by the rider based on an output signal of the accelerator sensor 204b. The brake lever 204c is provided at the right grip of the handle unit 204. The brake lever 204c is operated by the rider. The brake lever 204c is operated for braking the rotation of the front wheel 202. The handle unit 204 is provided with switches such as a main switch.

Shift switches 243 are provided at a left part of the handle unit 204. The shift switches 243 are constituted by a shift-up switch 243a and a shift-down switch 243b, and are manually operated so that the gear position is increased or decreased between the neutral and the highest gear (6th speed in this case). The handle unit 204 is further provided with a display 245. The display 245 is configured to display vehicle speed, engine rotation speed, gear position, and the like. An indicator (indicator lamp) is provided on the display 245.

The leaning direction of the vehicle body frame 207 when the motorcycle 201 which is a leaning vehicle is turning is identical to that of the motorcycle 1 of First Embodiment which has been described with reference to FIG. 2. The explanation is therefore omitted.

### [Structure of Engine Unit]

The following will describe the structure of the engine unit 206 with reference to FIG. 12. FIG. 12 is a block diagram for explaining the outline of the motorcycle 201 of Second Embodiment. In FIG. 12, lines connecting a crankshaft 252, an upstream rotating electric machine 290, a drive shaft 258 of a gearbox 280, and the rear wheel 203, which will be described later, are schematically shown as linear lines. These lines are power transmission paths indicating passages of mechanically-transmitted power.

The single-cylinder engine main body unit 220 is a single-cylinder engine including one cylinder. The engine main body unit 20 is a four-stroke single-cycle engine which repeats an intake process, a compression process, a combustion process (expansion process), and an exhaust process.

The engine main body unit 220 includes a crankcase member 221 and a cylinder member 222. The crankcase member 221 houses a crankshaft 252. The cylinder member 222 includes a cylinder body 223, a cylinder head 224, and a head cover 225 (see FIG. 11). The head cover 225 forms an front portion of the engine unit 206. The cylinder head 224 is connected to a rear end portion of the head cover 225. The cylinder body 223 is connected to a rear end portion of the cylinder head 224.

As shown in FIG. 12, a cylinder hole 223a is made in the cylinder body 223. The central axis of the cylinder hole 223a is the cylinder axial line. The engine main body unit 220 is mounted on the vehicle body frame 207 so that the cylinder axial line extends in the vertical direction. The engine main body unit 220 is mounted on the vehicle body frame 207 so that the cylinder axial line inclines forward. The inclination angle of the cylinder axial line with respect to the horizontal direction is 0 degree or more and 90 degrees or less. A piston 226 is slidably housed in the cylinder hole 223a. A combustion chamber 224a is formed by a lower surface of the cylinder head 224, the cylinder hole 223a, and the piston 226. The cylinder head 224 is provided with an ignition plug (ignition device) 224b. The ignition plug 224b is configured to ignite a mixture gas of fuel and air in the combustion chamber 224a.

An intake pipe 220a is connected to the cylinder head 224. An injector 227 is provided on the intake pipe 220a to inject fuel in a fuel tank (not illustrated) into the intake pipe 220a. The fuel injected by the injector 227 is supplied to a combustion chamber 224a. The injector 227 is an electronic-controlled fuel supplier. An amount of fuel injected by the injector 227 is controlled by the ECU 300. An exhaust pipe 220b is connected to the cylinder head 224. Exhaust gas generated by the combustion of fuel is exhausted through the exhaust pipe 220b.

The intake pipe 220a is connected with the throttle body 229. A throttle valve 229a is provided inside the throttle body 229. The throttle valve 229a adjusts an amount of air flowing in the throttle body 229. An air cleaner (not illustrated) is provided at an end portion of the intake pipe 220a upstream of the throttle body 229. The air cleaner has an air inlet through which air is sucked from the atmosphere. The atmosphere sucked into the intake pipe 220a through the air inlet flows into the throttle body. Air having passed the throttle valve 229a passes the intake pipe 220a and is supplied to the cylinder body 223. The throttle valve 229a is an electronic-controlled throttle. The throttle body 229 is provided with a throttle actuator 229b. The throttle actuator 229b opens or closes the throttle valve 229a by means of electronic control. The throttle actuator 229b includes a motor which is driven by power supplied from the ECU 300. The opening degree of the throttle valve 229a is termed a throttle opening degree. The ECU 300 is configured to control the throttle opening degree by changing the power supplied to the motor.

The piston 226 is connected to the crankshaft 252 provided in the crankcase member 221. The piston 226 reciprocates as a result of combustion of the fuel supplied to the combustion chamber 224a. The crankshaft 252 rotates as a result of the reciprocation of the piston 226.

The crankshaft 252 is connected to a power transmission mechanism 295. The power transmission mechanism 295 is connected to the upstream rotating electric machine 290. The rotating electric machine rotational axis Ag2 which is the rotational axis of the upstream rotating electric machine 290 is provided to be parallel to the rotating electric machine rotational axis Ac2 which is the rotational axis of the crankshaft 252. The power transmission mechanism 295 is a gear, a chain, etc. Power is transmitted between the crankshaft 252 and the upstream rotating electric machine 290 via the power transmission mechanism 295. The upstream rotating electric machine 290 is a three-phase generator and is a permanent magnet generator. Driving states of the upstream rotating electric machine 290 are a power generation state and a power supply state. To be more specific, a driving state in which the upstream rotating electric machine 290 generates power by imparting torque in the reverse rotational direction of the crankshaft 252 to the crankshaft 252 is the power generation state. To put it differently, in the power generation state, a part of the torque in the positive rotational direction of the crankshaft 252 is imparted from the crankshaft 252 to the upstream rotating electric machine 290 and the upstream rotating electric machine 290 rotates in the same direction as the positive rotational direction of the crankshaft 252. Meanwhile, a driving state in which the upstream rotating electric machine 290 imparts the torque in the positive rotational direction of the crankshaft 252 to the crankshaft 252 by the power supplied from a later-described battery 294 and rotates the crankshaft 252 in the positive rotational direction is the power supply state. When starting the engine, the upstream rotating electric machine 290 is driven in the power supply state as a starter motor. In normal driving after start of the engine, the upstream rotating electric machine 290 is driven in the power supply state or the power generation state. The upstream rotating electric machine 290 is an apparatus integrated with the starter motor. The starter motor and the rotating electric machine may be independent from each other.

An engine rotation speed sensor 253 is provided at an unillustrated end portion of the crankshaft 252. The crankshaft 252 is connected to a main shaft 255 via a clutch 254. The clutch 254 is a wet multiplate clutch. The clutch 254 includes a clutch housing 254a, a clutch boss 254b, and a pressure plate 278. The clutch housing 254a is attached to be rotatable relative to the main shaft 255. Friction plates 254c are attached to the clutch housing 254a. The clutch boss 254b rotates together with the main shaft 255. Clutch plates 254d are attached to the clutch boss 254b. Each clutch plate 254d is provided between neighboring friction plates 254c. The pressure plate 278 is provided to be able to make contact with the friction plates 254c. The pressure plate 278 is provided with a spring. This spring biases the pressure plate 278 in the direction in which the friction plates 254c are pressed onto the clutch plates 254d. As the friction plates 254c are pressed onto the clutch plates 254d, the rotational force of the crankshaft 252 is transmitted to the main shaft 255. The clutch 254, however, is not limited to a wet multiplate clutch. For example, the clutch 254 may be a dry clutch or a single plate clutch.

Multistage (6 stages in FIG. 12) transmission gears 257 are attached to the main shaft 255. A main shaft rotation speed sensor 256 is provided on the main shaft 255. The transmission gears 257 attached to the main shaft 255 are engaged with transmission gears 259 attached to the drive shaft 258. The drive shaft 258 is provided to be parallel to the main shaft 255. The drive shaft 258 is the axle shaft of the rear wheel 203. For the sake of convenience, the transmission gears 257 are separated from the transmission gears 259 in FIG. 12.

### [Structure of Motor-Driven Automatic-Controlled Transmission]

The following will detail the electric-motor-driven automatic-controlled transmission 250 with reference to FIG. 4 and FIG. 5. The electric-motor-driven automatic-controlled transmission 250 includes the gearbox 280, a gearbox control unit 282, and an automatic clutch device 277.

The gearbox 280 is a stepped gearbox constituted by the transmission gears 257, the transmission gears 259, and a later-described shift cam 279. Apart from selected gears, either the transmission gears 257 or the transmission gears 259 are attached to the main shaft 255 or the drive shaft 258 in an idling state. In other words, the power transmission from the main shaft 255 to the drive shaft 258 is only performed through the selected pair of transmission gears. A state in which a pair of transmission gears 257 and 259 are engaged with each other to be able to transmit the driving force from the main shaft 255 to the drive shaft 258 is termed a gear-in state.

In the gearbox 280, an operation to select the transmission gear 257 and the transmission gear 259 to change the transmission ratio is performed by the shift cam 279. Plural cam grooves 260 are formed in the shift cam 279. Three cam grooves 260 are formed in the example shown in FIG. 12. A shift fork 261 is attached to each cam groove 260. Some of the shift forks 261 are engaged with predetermined transmission gears 257 on the main shaft 255. The remaining shift forks 261 are engaged with predetermined transmission gears 259 on the drive shaft 258. As the shift cam 279 rotates, the shift forks 261 move in the axial direction along the cam grooves 260. In sync with the movement of the shift forks 261, the predetermined transmission gears 257 and 259 spline-engaged with the main shaft 255 and the drive shaft 258 move in the axial direction. As the transmission gear 257 and the transmission gear 259 having moved in the axial direction are engaged with another transmission gear 257 and another transmission gear 259 attached to the main shaft 255 and the drive shaft 258 in an idling state, the transmission ratio is changed. The gearbox 280 is driven by a shift actuator 265. The shift actuator 265 is an electric motor 265.

The automatic clutch device 277 includes the clutch 254, a clutch actuator 263, a hydraulic transmission mechanism 264, a rod 271, a lever 272, a pinion 273, and a rack 274. The pressure plate 278 of the clutch 254 is driven by the clutch actuator 263 in the direction opposite to the direction of the biasing force of the spring. The clutch actuator 263 is connected to the pressure plate 278 of the clutch 254 via the hydraulic transmission mechanism 264, the rod 271, the lever 272, the pinion 273, and the rack 274. The hydraulic transmission mechanism 264 includes members such as a hydraulic cylinder 264a, an oil tank (not illustrated), and a piston (not illustrated). The hydraulic transmission mechanism 264 is a mechanism configured to generate a hydraulic pressure by the driving of the clutch actuator 263 and to transmit the hydraulic pressure to the rod 271. The rod 271 is connected to the lever 272 to be rotatable. As the clutch actuator 263 is driven, the rod 271 reciprocates as indicated by an arrow A and the lever 272 rotates as indicated by an arrow B. The lever 272 is connected to the rack 274 via the pinion 273. As the lever 272 rotates as indicated by the arrow B, the rack 274 connected to the pressure plate 278 of the clutch 254 is moved. As a result, the pressure plate 278 of the clutch 254 is switched between a state of pressing the friction plates 254c and a state of not pressing the plates, in accordance with the moving direction of the rack 274. In other words, in accordance with the moving direction of the rack 274, the clutch 254 is switched between a connection state in which the rotation of the crankshaft 252 is transmitted to the main shaft 255 and a cut-off state in which the rotation is not transmitted. The clutch actuator 263 is formed of an electric motor. While the electric motor is employed as the clutch actuator 263 in the present embodiment, a solenoid, an electromagnetic valve, etc. may be employed. While the automatic clutch device 277 employs the hydraulic transmission mechanism 264, gears, cams, etc. may be employed.

The gearbox control unit 282 is constituted by the shift actuator 265, a speed reducer 266, a rod 275, and a link mechanism 276. The shift actuator 265 is connected to the shift cam 279 via the speed reducer 266, the rod 275, and the link mechanism 276. The shift actuator 265 is connected to the speed reducer 266. The speed reducer 266 includes plural reduction gears (not illustrated). The speed reducer 266 is connected to the rod 275. The speed reducer 266 decelerates the rotation of the shift actuator 265 formed of the electric motor and transmits the decelerated rotation to the rod 275. The rod 275 converts the rotational force of the speed reducer 266 to reciprocal movement. The rod 275 is connected to the link mechanism 276. The link mechanism 276 is connected to the shift cam 279 and converts the reciprocal movement of the rod 275 to the rotational force of the shift cam 279.

The following will describe an operation when the gearbox control unit 282 changes the transmission ratio of the electric-motor-driven automatic-controlled transmission 250. When the transmission ratio of the electric-motor-driven automatic-controlled transmission 250 is changed, to begin with, the rod 275 reciprocates as indicated by an arrow C by the driving of the shift actuator 265 which is the electric motor. The shift cam 279 is rotated via the link mechanism 276 by a predetermined angle. As a result, the shift forks 261 move by a predetermined distance in the axial direction along the cam grooves 260. The paired transmission gears 257 and 259 are fixed to the main shaft 255 and the drive shaft 258, respectively. Consequently, the power is transmitted from the main shaft 255 to the drive shaft 258.

A clutch position sensor 268 is provided in the hydraulic transmission mechanism 264 connected to the clutch actuator 263. The clutch position sensor 268 is configured to detect a clutch position by detecting the movement distance of the piston of the hydraulic transmission mechanism 264. The movement distance of the piston of the hydraulic transmission mechanism 264 is identical to the distance between the friction plates 254c and the clutch plates 254d. While in the present embodiment the clutch position sensor 268 is configured to detect a clutch position by detecting the movement distance of the piston of the hydraulic transmission mechanism 264, the disclosure is not limited to this arrangement. The clutch position sensor 268 may detect the position of a transmission mechanism provided between the clutch actuator 263 and the clutch 254. For example, the clutch position sensor 268 may detect the position of the rod 271 or the rack 274. The clutch position sensor 268 may not indirectly obtain the clutch position based on the movement distance of the piston of the hydraulic transmission mechanism 264. The clutch position sensor 268 may directly detect the clutch position. In other words, the clutch position sensor 268 may be configured to directly measure the distance between the friction plates 254c and the clutch plates 254d. A vehicle speed sensor 269 is provided on the drive shaft 258. Furthermore, a gear position sensor 270 is provided on the shift cam 279 to detect a gear position. The gear position indicates the rotation amount of the shift cam 279.

The transmission ratio of the electric-motor-driven automatic-controlled transmission 250 is changed in the following two cases. The first case is a case where the ECU 300 controls the driving of the clutch actuator 263 and the shift actuator 265 in accordance with an operation of the shift-up switch 243a or the shift-down switch 243b. The second case is a case where an acceleration/deceleration control unit 305 automatically controls the driving of the clutch actuator 263 and the shift actuator 265 while the motorcycle 201 accelerates or decelerates. When the transmission ratio is changed while the motorcycle is running, a series of operations below are performed based on a predetermined program or map. To begin with, the clutch actuator 263 disconnects the clutch 254. Then the shift actuator 265 moves the transmission gears 257 and 259 in the axial direction. Then the clutch actuator 263 connects the clutch 254.

### [Power Transmission Path]

The following will describe the power transmission path of the engine unit 206 with reference to FIG. 12.

As shown in FIG. 12, the power transmission path is a path on which power is transmitted from the crankshaft 252 to the rear wheel 203. The crankshaft 252 is the upstream end of the power transmission path. The rear wheel 203 is the downstream end of the power transmission path. The upstream rotating electric machine 290 is connected to the crankshaft 252 via the power transmission mechanism 295 to be able to transmit power to the crankshaft 252. The electric-motor-driven automatic-controlled transmission 250 is connected to the crankshaft 252 so as to transmit power thereto by a pair of transmission gears 257 and 259 selected by the shift cam 279. The power of the crankshaft 252 is transmitted to the rear wheel 203 via the electric-motor-driven automatic-controlled transmission 250, by the main shaft 255 and the drive shaft 258 engaged with the predetermined transmission gears 257 and 259. From the upstream to the downstream of the power transmission path, the crankshaft 252, the upstream rotating electric machine 290, the electric-motor-driven automatic-controlled transmission 250, and the rear wheel 203 are provided in this order. In other words, in the power transmission path from the crankshaft 252 to the rear wheel 203, the upstream rotating electric machine 290 is provided upstream of the electric-motor-driven automatic-controlled transmission 250. The crankshaft 252 is provided upstream of the electric-motor-driven automatic-controlled transmission 250 on the power transmission path.

### [Structure of ECU]

The engine unit 206 includes the ECU 300. The ECU 300 is configured to control the engine unit 206. As shown in FIG. 12, the ECU 300 is connected to sensors such as the accelerator sensor 204b, a throttle opening degree sensor 229c, the engine rotation speed sensor 253, the main shaft rotation speed sensor 256, the clutch position sensor 268, the vehicle speed sensor 269, and the gear position sensor 270. The ECU 100 is further connected to members such as an ignition plug 224b, an injector 227, a throttle actuator 229b, the shift-up switch 243a, the shift-down switch 243b, the clutch actuator 263, the shift actuator 265, the upstream rotating electric machine 290, and the display 245.

The ECU 300 is formed of a CPU, a ROM, a RAM, etc. The CPU performs information processing based on programs and data stored in the ROM and the RAM. With this arrangement, the ECU 300 realizes functions of function processors. As shown in FIG. 12, the ECU 300 includes, as function processors, a combustion control unit 301, a throttle control unit 302, and an acceleration/deceleration control unit 305. The acceleration/deceleration control unit 305 includes a rotating electric machine control unit 303 and a transmission control unit 304. The acceleration/deceleration control unit 305 is a controller of the present teaching.

The combustion control unit 301 is configured to control an ignition timing of the ignition plug 224b. The combustion control unit 301 is further configured to control the driving of the injector 227 and a fuel pump. By doing this, the combustion control unit 301 controls a fuel supply amount. The throttle control unit 302 is configured to control a throttle opening degree by operating the throttle actuator 229b based on an operation of the accelerator grip 204a by the rider. The rotating electric machine control unit 303 is configured to control power supply to the upstream rotating electric machine 290. By doing this, the rotating electric machine control unit 303 controls the power generation function and the power supply function. The transmission control unit 304 activates an electric motor 265 of the electric-motor-driven automatic-controlled transmission 250 to control a change of the transmission ratio of the electric-motor-driven automatic-controlled transmission 250.

The combustion control unit 301 is configured to control combustion in the engine main body unit 220 by executing a program stored in a storage unit such as the ROM. The combustion control unit 301 controls the combustion in the engine main body unit 220 by causing the ignition plug 224b to perform ignition by discharge. The combustion control unit 301 controls the fuel supply amount by controlling the driving of the injector 227 and the fuel pump, so as to control the combustion in the engine main body unit 220. In this specification, the control of the fuel supply amount includes control of an amount of fuel supplied from the fuel pump and control of time of injecting fuel by the injector 227.

For example, the combustion control unit 301 controls the driving of the injector 227 and the fuel pump based on sets of information in addition to the engine rotation speed and the throttle opening degree. The engine rotation speed is calculated based on an output signal of the engine rotation speed sensor 253. The throttle opening degree is detected by an output signal of the throttle opening degree sensor 229c. The sets of information are calculated based on output signals of sensors such as an engine temperature sensor and an oxygen sensor.

The throttle control unit 302 is configured to control the throttle opening degree based on an accelerator operation by the rider. In other words, the throttle control unit 302 detects the accelerator opening degree which is an operation amount of the accelerator grip 204a by the rider based on an output signal of the accelerator sensor 204b. The throttle control unit 302 controls the throttle opening degree by activating the throttle actuator 229b based on the accelerator opening degree. To put it differently, the throttle control unit 302 activates the throttle actuator 229b by supplying power to the throttle actuator 229b.

For example, the throttle control unit 302 performs feedback control of the throttle opening degree with reference to a map, a relation, etc. in which an accelerator opening degree is associated with a throttle opening degree. In other words, the throttle control unit 302 calculates a target throttle opening degree corresponding to the accelerator opening degree with reference to the map, etc. In order to cause the actual throttle opening degree detected by the throttle opening degree sensor 229c to correspond to the target throttle opening degree, the throttle control unit 302 drives the throttle actuator 229b based on a difference between the throttle opening degree and the target throttle opening degree. The map, etc. in which an accelerator opening degree is associated with a throttle opening degree is stored in the storage unit in advance.

The acceleration/deceleration control unit 305 is able to achieve both the transmission control by the transmission control unit 304 and the rotating electric machine control by the rotating electric machine control unit 303, while the motorcycle 201 accelerates or decelerates. The transmission control by the transmission control unit 304 is control of changing the transmission ratio by controlling the electric motor 265 of the electric-motor-driven automatic-controlled transmission 250. The rotating electric machine control by the rotating electric machine control unit 103 is control of changing torque imparted to the upstream of the electric-motor-driven automatic-controlled transmission 250 on the power transmission path by controlling the upstream rotating electric machine 290. The crankshaft 252 is provided upstream of the electric-motor-driven automatic-controlled transmission 250 on the power transmission path.

The rotating electric machine control unit 303 is configured to control the upstream rotating electric machine 290 by controlling power supply to the upstream rotating electric machine 290 by executing a program stored in the storage unit. In other words, the rotating electric machine control unit 303 executes the rotating electric machine control. Driving states of the upstream rotating electric machine 90 are the power generation state and the power supply state as described above. While the motorcycle 201 accelerates and the upstream rotating electric machine 290 is driven in the power supply state, the rotating electric machine control unit 303 performs acceleration rotating electric machine control. In the acceleration rotating electric machine control, the upstream rotating electric machine 290 is controlled to change the torque in the positive rotational direction of the crankshaft 252 imparted to the crankshaft 252 via the power transmission mechanism 295. In other words, in the acceleration rotating electric machine control, the rotating electric machine control unit 303 is controlled to rotate the upstream rotating electric machine 290 in the positive rotational direction of the crankshaft 252 by power supplied from the battery 294. With this, the upstream rotating electric machine 290 generates engine power. The rotation of the crankshaft 252 is assisted in the positive rotational direction by the upstream rotating electric machine 290. While the motorcycle 201 decelerates and the rotating electric machine control unit 303 drives the upstream rotating electric machine 290 in the power generation state, the rotating electric machine control unit 303 performs deceleration rotating electric machine control. In the deceleration rotating electric machine control, the upstream rotating electric machine 290 is controlled to change the torque in the reverse rotational direction of the crankshaft 21 imparted to the crankshaft 21, via the power transmission mechanism 295. To put it differently, in the deceleration rotating electric machine control, the rotating electric machine control unit 103 rotates the upstream rotating electric machine 90 in the positive rotational direction of the crankshaft 252to cause the upstream rotating electric machine 290 to absorb the torque of the crankshaft 21. With this, the upstream rotating electric machine 290 generates engine loss. A load in the reverse rotational direction is applied by the upstream rotating electric machine 290 to the rotation of the crankshaft 252. The torque of the crankshaft 252 absorbed by the upstream rotating electric machine 290 is stored as power in the battery 294.

The transmission control unit 304 is configured to control the transmission ratio of the electric-motor-driven automatic-controlled transmission 250 in accordance with an input signal from the shift-up switch 243a or the shift-down switch 243b. Alternatively, the transmission control unit 304 executes a program stored in the storage unit to automatically control the transmission ratio of the electric-motor-driven automatic-controlled transmission 250, while the motorcycle 201 accelerates or decelerates. In other words, the transmission control unit 304 executes the transmission control. While the motorcycle 201 accelerates, the transmission control unit 304 performs the acceleration transmission control. The acceleration transmission control changes the transmission ratio by controlling the electric motor 265 of the electric-motor-driven automatic-controlled transmission 250. While the motorcycle 201 decelerates, the transmission control unit 304 performs the deceleration transmission control. The deceleration transmission control changes the transmission ratio by controlling the electric motor 265 of the electric-motor-driven automatic-controlled transmission 250. Output signals of the clutch position sensor 268 and the gear position sensor 270 are input to the transmission control unit 304. The transmission control unit 304 drives the clutch actuator 263 based on an output signal of the clutch position sensor 268 to control the automatic clutch device 277. Furthermore, the transmission control unit 304 detects the currently-set transmission ratio based on an output signal of the gear position sensor 270. The transmission control unit 104 changes the transmission ratio of the electric-motor-driven automatic-controlled transmission 250 by driving the shift actuator 265 which is an electric motor. To put it differently, the transmission control unit 304 activates the clutch actuator 263 and the shift actuator 265 by supplying power thereto.

For example, the transmission control unit 304 calculates the transmission ratio changed by the electric-motor-driven automatic-controlled transmission 250, based on the vehicle speed calculated based on an output signal of the vehicle speed sensor 269 and based on sets of data such as the throttle opening degree detected by an output signal of the throttle opening degree sensor 229c.

The acceleration/deceleration control unit 305 is configured to perform acceleration control while the motorcycle 201 accelerates. In the acceleration control, the acceleration/deceleration control unit 305 performs the acceleration transmission control of the transmission control unit 304 or the acceleration rotating electric machine control of the rotating electric machine control unit 303 in a switching manner. Alternatively, in the acceleration control, the acceleration/deceleration control unit 305 simultaneously performs the acceleration transmission control by the transmission control unit 304 and the acceleration rotating electric machine control by the rotating electric machine control unit 303. The acceleration/deceleration control unit 305 is configured to perform deceleration control while the motorcycle 201 decelerates. In the deceleration control, the acceleration/deceleration control unit 305 performs the deceleration transmission control of the transmission control unit 304 or the deceleration rotating electric machine control of the rotating electric machine control unit 303 in a switching manner. Alternatively, in the deceleration control, the acceleration/deceleration control unit 305 simultaneously performs the deceleration transmission control by the transmission control unit 304 and the deceleration rotating electric machine control by the rotating electric machine control unit 303.

### [Structure of Rotating Electric Machine]

The upstream rotating electric machine 290, an inner stator 291, an outer rotor 292, an inverter 293, the battery 294, and a rotor position detection sensor 290a of Second Embodiment are identical to the upstream rotating electric machine 90, the inner stator 91, the outer rotor 92, the inverter 93, the battery 94, and the rotor position detection sensor 90a of First Embodiment, and hence the explanations of these members are omitted.

### [Deceleration Control and Acceleration Control by Acceleration/Deceleration Control Unit 305]

The example of the deceleration control and acceleration control by the acceleration/deceleration control unit 305 in Second Embodiment is identical to the example of the deceleration control and acceleration control by the acceleration/deceleration control unit 105 in First Embodiment, and hence the explanations of the example are omitted. The acceleration/deceleration control unit 305 of Second Embodiment is equivalent to the acceleration/deceleration control unit 105 of First Embodiment. The rotating electric machine control unit 303 and the transmission control unit 304 of Second Embodiment are equivalent to the rotating electric machine control unit 103 and the transmission control unit 104 of First Embodiment. The accelerator sensor 204b, the vehicle speed sensor 269, the engine rotation speed sensor 253, the throttle opening degree sensor 229c, and the gear position sensor 270 of Second Embodiment are equivalent to the accelerator sensor 4b, the vehicle speed sensor 3c, the engine rotation speed sensor 21s, the throttle opening degree sensor 29c, and the sheave position detection sensor 85 of First Embodiment, respectively. The crankshaft 252, the electric-motor-driven automatic-controlled transmission 250, and the electric motor 265 of Second Embodiment are equivalent to the crankshaft 21, the electric-motor-driven automatic-controlled transmission 50, and the electric motor 71 of First Embodiment, respectively. The upstream rotating electric machine 290, the inverter 293, and the battery 294 of Second Embodiment are equivalent to the upstream rotating electric machine 90, the inverter 93, and the battery 94 of First Embodiment, respectively. The display 245 of Second Embodiment is equivalent to the display 110 of First Embodiment.

In addition to the characteristics of the motorcycle 1 of First Embodiment, the motorcycle 201 of Second Embodiment has the following characteristics.

The electric-motor-driven automatic-controlled transmission 250 is a stepped transmission including the shift actuator 265 and the transmission gears. The actuator is driven by the electric motor. The transmission gears are arranged to be selectable by the actuator. The stepped gearbox controls the actuator by the electric motor to select one of the transmission gears so as to set the transmission ratio. Furthermore, when a change of the transmission ratio is controlled by the electric-motor-driven automatic-controlled transmission 250, connection and disconnection of the clutch 254 are performed by the clutch actuator 263. There is a constraint due to the mechanism of the electric-motor-driven automatic-controlled transmission 250 including the shift actuator 265. For this reason, in the electric-motor-driven automatic-controlled transmission 250, there is a time lag from the control of changing the transmission ratio based on the transmission ratio set in accordance with an accelerator operation to the actual control of the driving force. The acceleration/deceleration control unit 305 is able to improve the responsiveness of the control of the driving force by enabling both the transmission control of the transmission control unit 304 and the rotating electric machine control of the rotating electric machine control unit 303. In the motorcycle 201 of Second Embodiment, the followability of the driving force in response to an operation of the accelerator by the rider can be improved in deceleration or acceleration.

The rotating electric machine rotational axis Ag2 which is the rotational axis of the upstream rotating electric machine 290 is provided to be parallel to the crank rotational axis Ac2 which is the rotational axis of the crankshaft 252. The upstream rotating electric machine 290 is connected to the crankshaft 252 via the power transmission mechanism 295. The upstream rotating electric machine 290 is able to directly apply the torque to the crankshaft 252 upstream of the electric-motor-driven automatic-controlled transmission 250 on the power transmission path, via the power transmission mechanism 295. In other words, the upstream rotating electric machine 290 is able to improve responsiveness of the control of the driving force. In the motorcycle 201 of Second Embodiment, the followability of the driving force in response to an operation of the accelerator by the rider can be improved in deceleration or acceleration.

Preferred embodiments of the present teaching have been described above. However, the present teaching is not limited to the above-described embodiments, and various changes can be made within the scope of the claims. Further, modifications described below may be used in combination as needed.

In the embodiments above, in the controller, when the remaining capacity of the battery is larger than the acceleration lower limit at the time of the acceleration of the leaning vehicle, the rotating electric machine control unit controls the driving of the upstream rotating electric machine and then the transmission control unit changes the transmission ratio of the electric-motor-driven automatic-controlled transmission. However, the control performed while the leaning vehicle of the present teaching accelerates is not limited to this arrangement. For example, the controller may be arranged such that, at the time of the acceleration of the leaning vehicle, the transmission control unit changes the transmission ratio of the electric-motor-driven automatic-controlled transmission and then the rotating electric machine control unit controls the driving of the upstream rotating electric machine. Meanwhile, in the controller, when the remaining capacity of the battery is smaller than the deceleration upper limit at the time of the deceleration of the leaning vehicle, the rotating electric machine control unit controls the driving of the upstream rotating electric machine and then the transmission control unit changes the transmission ratio of the electric-motor-driven automatic-controlled transmission. However, the control performed while the leaning vehicle decelerates is not limited to this arrangement. For example, the controller may be arranged such that, while the leaning vehicle decelerates, the transmission control unit changes the transmission ratio of the electric-motor-driven automatic-controlled transmission and then the rotating electric machine control unit drives the upstream rotating electric machine.

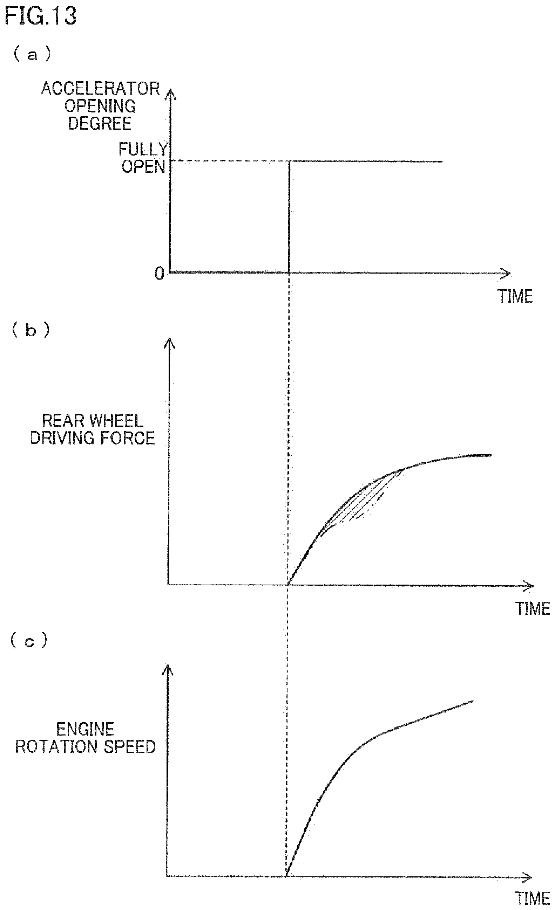

In the embodiments above, in the controller, when the remaining capacity of the battery is larger than the acceleration lower limit at the time of acceleration of the leaning vehicle, the rotating electric machine control by the rotating electric machine control unit and the transmission control by the transmission control unit are simultaneously performed. However, the control performed while the leaning vehicle of the present teaching accelerates is not limited to this arrangement. For example, while the leaning vehicle accelerates, the controller may perform control as shown in FIG. 13. FIGs. 13(a) to 13(c) are graphs each showing an example of changes over time of the following parameters while the leaning vehicle decelerates. FIG. 13(a) shows an example of changes of the accelerator opening degree over time. FIG. 13(b) shows an example of changes of the driving force of the driving wheel over time. FIG. 13(c) shows an example of changes of the engine rotation speed over time. The transmission ratio of the electric-motor-driven automatic-controlled transmission is changed by the transmission control unit. When the engine rotation number increases as shown in FIG. 13(c), the driving force on the driving wheel is rapidly decreased by inertia as indicated by a two-dot chain line in FIG. 13(b). When engine loss is generated in the leaning vehicle by inertia, the controller may impart torque in the positive rotational direction of the crankshaft to the upstream of the electric-motor-driven automatic-controlled transmission on the power transmission path by controlling the driving of the upstream rotating electric machine by the rotating electric machine control unit. In other words, as shown in FIG. 13(b), the engine power generated by the upstream rotating electric machine can be added to the engine loss generated by inertia. It is therefore possible to generate a positive driving force by the torque in the positive rotational direction of the crankshaft imparted by the upstream rotating electric machine, so as to cancel out a negative driving force generated on the driving wheel. Therefore, the followability of the driving force in response to an operation of the accelerator by the rider can be improved.

In the embodiments above, while the leaning vehicle accelerates or decelerates, the controller is configured to simultaneously perform the rotating electric machine control by the rotating electric machine control unit and the transmission control by the transmission control unit or performs only the transmission control by the transmission control unit, in accordance with the remaining capacity of the battery. The disclosure, however, is not limited to this arrangement. The leaning vehicle of the present teaching may be arranged such that, while the leaning vehicle accelerates or decelerates, the controller is configured to perform only the rotating electric machine control by the rotating electric machine control unit, in accordance with the remaining capacity of the battery.

In the deceleration control by the controller in the embodiments above, the controller is configured to calculate the target transmission ratio when the deceleration rotating electric machine control is not performed with a low-speed transmission ratio as compared to the target transmission ratio when the deceleration rotating electric machine control is performed. Alternatively, the leaning vehicle of the present teaching may be arranged such that the controller is configured to calculate the target transmission ratio when the deceleration rotating electric machine control is not performed with a high-speed transmission ratio as compared to the target transmission ratio when the deceleration rotating electric machine control is performed. Alternatively, the leaning vehicle of the present teaching may be arranged such that the controller is configured to calculate the target transmission ratio when the deceleration rotating electric machine control is not performed with the same transmission ratio as the target transmission ratio when the deceleration rotating electric machine control is performed. Likewise, in the acceleration control by the controller in the embodiments above, the controller is configured to calculate the target transmission ratio when the acceleration rotating electric machine control is not performed with a low-speed transmission ratio as compared to the target transmission ratio when the acceleration rotating electric machine control is performed. Alternatively, the leaning vehicle of the present teaching may be arranged such that the controller is configured to calculate the target transmission ratio when the acceleration rotating electric machine control is not performed with a high-speed transmission ratio as compared to the target transmission ratio when the acceleration rotating electric machine control is performed. Alternatively, the leaning vehicle of the present teaching may be arranged such that the controller is configured to calculate the transmission ratio when the acceleration rotating electric machine control is not performed with the same transmission ratio as the target transmission ratio when the acceleration rotating electric machine control is performed.

In the embodiments above, the controller is configured to perform the acceleration transmission control or the acceleration rotating electric machine control while the leaning vehicle accelerates. Alternatively, the controller may neither perform the acceleration transmission control nor the acceleration rotating electric machine control while the leaning vehicle accelerates. The controller performs the deceleration transmission control or the deceleration rotating electric machine control while the leaning vehicle decelerates. Alternatively, the controller may neither perform the deceleration transmission control nor the deceleration rotating electric machine control while the leaning vehicle decelerates.

The leaning vehicle of First Embodiment calculates the vehicle speed based on an output signal of the vehicle speed sensor. However, the method of calculating the vehicle speed of the leaning vehicle of the present teaching is not limited to this arrangement. The leaning vehicle of the present teaching may calculate the vehicle speed based on an output signal of the rotor position detection sensor. Alternatively, the leaning vehicle of the present teaching may calculate the vehicle speed based on an output signal of the secondary pulley rotation speed sensor. The leaning vehicle of Second Embodiment calculates the vehicle speed based on an output signal of the vehicle speed sensor. However, the method of calculating the vehicle speed of the leaning vehicle of the present teaching is not limited to this arrangement. The leaning vehicle of the present teaching may calculate the vehicle speed based on an output signal of the main shaft rotation speed sensor.

In the leaning vehicle of the embodiments above, the throttle valve is an electronic-controlled throttle. In the leaning vehicle of the present teaching, however, the throttle valve may not be an electronic-controlled throttle. The throttle valve may be connected to an accelerator grip by a wire. No accelerator sensor is provided in this case. A shaft which rotates in accordance with an operation of the accelerator grip is provided in the throttle body. The throttle opening degree sensor outputs an electrical signal corresponding to a rotation amount of the shaft. The throttle valve is preferably an electronic-controlled throttle. When the throttle valve is an electronic-controlled throttle, the controller is configured to be able to control the driving force based on output signals of the accelerator sensor and the throttle opening degree sensor. In other words, the reproducibility of the controllability of the driving force is improved in the leaning vehicle in deceleration or acceleration,

In the leaning vehicle of the embodiments above, the controller is arranged such that the combustion control unit, the throttle control unit, the rotating electric machine control unit, and the transmission control unit are formed in a single device which is not electrically connected. Alternatively, in the leaning vehicle of the present teaching, a device constituting the combustion control unit and the throttle control unit may be electrically connected to another device constituting the rotating electric machine control unit and the transmission control unit. Alternatively, in the leaning vehicle of the present teaching, as the controller, a device constituting the rotating electric machine control unit may be electrically connected to another device constituting the transmission control unit. With these arrangements, the layout of the controller is less constrained. The increase in size of the leaning vehicle is therefore restrained.

In the leaning vehicle of First Embodiment, the transmission control unit is provided in the lubrication space. Alternatively, the transmission control unit may be provided in a dry space.

The leaning vehicle 1 of the above embodiments includes a single battery. Alternatively, the leaning vehicle of the present teaching may include a plurality of batteries.

In the leaning vehicle of First Embodiment, the crankshaft rotational axis is on the same line as the rotating electric machine rotational axis and the crankshaft is directly connected to the rotating electric machine. Alternatively, the leaning vehicle of the present teaching may be arranged such that the crankshaft rotational axis is arranged to be parallel to the rotating electric machine rotational axis and the upstream rotating electric machine is connected to the crankshaft via the power transmission mechanism.

The leaning vehicle of Second Embodiment is arranged such that the crankshaft rotational axis is arranged to be parallel to the rotating electric machine rotational axis and the upstream rotating electric machine is connected to the crankshaft via the power transmission mechanism. Alternatively, in the leaning vehicle of First Embodiment, the crankshaft rotational axis may be on the same line as the rotating electric machine rotational axis, and the upstream rotating electric machine may be directly connected to the crankshaft.

In the leaning vehicle of the embodiments above, the upstream rotating electric machine is integrated with the starter motor. Alternatively, in the leaning vehicle of the present teaching, the upstream rotating electric machine and the starter motor may be separated from each other.

In the leaning vehicle of the embodiments above, the rear wheel is a driving wheel. Alternatively, in the leaning vehicle of the present teaching, the front wheel may be a driving wheel. The leaning vehicle of the above embodiments includes one front wheel and one rear wheel. Alternatively, the leaning vehicle of the present teaching may include a plurality of front wheels. Alternatively, the leaning vehicle of the present teaching may include a plurality of rear wheels.

In the leaning vehicle of the embodiments above, the primary shaft portion is integrated with the crankshaft in the continuously variable transmission. Alternatively, in the leaning vehicle of the present teaching, the primary shaft portion and the crankshaft may be separated from each other.

In the leaning vehicle of the present teaching, the continuously variable transmission may be different from the continuously variable transmission of the above embodiments. In the leaning vehicle of the present teaching, the continuously variable transmission may be variously arranged on condition that a primary pulley, a secondary pulley, and a dry belt are included. It is noted that, in the continuously variable transmission of the present teaching, the primary pulley includes two primary sheaves and the widths of the two primary sheaves are changed by an electric motor. The dry belt is wound onto the primary pulley and the secondary pulley, and a slide portion in contact with the primary pulley and the secondary pulley is not lubricated by lubricant. The controller changes the transmission ratio by changing the widths of the two primary sheaves by controlling the electric motor.

In the leaning vehicle of the present teaching, the stepped gearbox may be different from the stepped gearbox of the above embodiments. The stepped gearbox may be variously arranged in the leaning vehicle of the present teaching. In the leaning vehicle of the present teaching, the stepped gearbox preferably includes an actuator driven by an electric motor and transmission gears selectable by the actuator. With this arrangement, the stepped gearbox of the present teaching is arranged such that the controller controls the actuator by the electric motor to select one of the transmission gears, so as to change the transmission ratio.

In the leaning vehicle of the present teaching, the engine main body unit of the engine unit may be a multi-cylinder engine including plural cylinders. In the leaning vehicle of the present teaching, the engine main body unit of the engine unit may be a two-stroke engine. In the leaning vehicle of the present teaching, the engine main body unit of the engine unit may be a natural air-cooled engine. In the leaning vehicle of the present teaching, the engine main body unit of the engine unit may be a water-cooled engine.

The motorcycle has been described as an example of the leaning vehicle of the above embodiments. The leaning vehicle of the present teaching may be of any type on condition that the leaning vehicle includes a vehicle body frame which leans rightward of the vehicle when turning right and leans leftward of the vehicle when turning left. The leaning vehicle of the present teaching may be a straddled vehicle which is not a motorcycle. The straddled vehicle indicates all types of vehicles on which a rider rides in a manner of straddling a saddle. The straddled vehicle encompasses motorcycles, tricycles, personal water crafts, snowmobiles, and the like. The leaning vehicle of the present teaching may not be a straddled vehicle. Furthermore, no rider may ride the leaning vehicle of the present teaching. Furthermore, the leaning vehicle of the present teaching may run without any rider or passenger. In these cases, the forward direction of the leaning vehicle indicates the direction in which the leaning vehicle advances.

### [Reference Signs List]

1, 201 motorcycle (leaning vehicle)
3, 203 rear wheel (driving wheel)
6, 206 engine unit
7, 207 vehicle body frame
20, 220 engine main body unit
21, 252 crankshaft
31a dry space
32 dry belt
42 primary pulley
50 electric-motor-driven automatic-controlled transmission (continuously variable transmission)
52 secondary pulley
71 electric motor
90, 290 upstream rotating electric machine
103, 303 rotating electric machine control unit
104, 304 transmission control unit
105, 305 acceleration/deceleration control unit (controller)
250 electric-motor-driven automatic-controlled transmission (stepped gearbox)
257 259 transmission gear
265 shift actuator (electric motor)
295 power transmission mechanism
Ac1, Ac2 crank rotational axis
Ag1, Ag2 rotating electric machine rotational axis

## Claims

1. A leaning vehicle comprising a vehicle body frame which is structured to lean rightward of the leaning vehicle when turning right and to lean leftward of the leaning vehicle when turning left;
an engine main body unit which includes a crankshaft;
an electric-motor-driven automatic-controlled transmission which is connected to the crankshaft and is configured to transmit power of the engine main body unit at a transmission ratio set by an electric motor;
at least one driving wheel which is connected to the electric-motor-driven automatic-controlled transmission and is configured to generate a driving force by the power transmitted from the electric-motor-driven automatic-controlled transmission;
an upstream rotating electric machine which is a rotating electric machine provided upstream of the electric-motor-driven automatic-controlled transmission on a power transmission path on which the power is transmitted from the crankshaft to the at least one driving wheel, and which is configured to impart a torque in a reverse rotational direction of the crankshaft and to impart a torque, to the upstream of the electric-motor-driven automatic-controlled transmission on the power transmission path; and
a controller which is able to perform both transmission control of changing the transmission ratio by controlling the electric motor of the electric-motor-driven automatic-controlled transmission and rotating electric machine control of changing the torque imparted to the upstream of the electric-motor-driven automatic-controlled transmission on the power transmission path by controlling the upstream rotating electric machine, while the leaning vehicle accelerates or decelerates, wherein (1) while the leaning vehicle accelerates, the controller is configured to perform either acceleration transmission control of changing the transmission ratio by controlling the electric motor of the electric-motor-driven automatic-controlled transmission or acceleration rotating electric machine control of changing a torque in a positive rotational direction of the crankshaft imparted to the upstream of the electric-motor-driven automatic-controlled transmission on the power transmission path by controlling the upstream rotating electric machine, or (2) while the leaning vehicle decelerates, the controller is configured to perform either deceleration transmission control of changing the transmission ratio by controlling the electric motor of the electric-motor-driven automatic-controlled transmission or deceleration rotating electric machine control of changing the torque in the reverse rotational direction of the crankshaft imparted to the upstream of the electric-motor-driven automatic-controlled transmission on the power transmission path by controlling the upstream rotating electric machine.

2. The leaning vehicle according to claim 1, wherein the controller is configured to
(1) perform the acceleration transmission control and the acceleration rotating electric machine control in a switching manner or simultaneously performs the acceleration transmission control and the acceleration rotating electric machine control, while the leaning vehicle accelerates, and
(2) perform the deceleration transmission control and the deceleration rotating electric machine control in a switching manner or simultaneously performs the deceleration transmission control and the deceleration rotating electric machine control, while the leaning vehicle decelerates.

3. The leaning vehicle according to claim 1 or 2, wherein the electric-motor-driven automatic-controlled transmission is a continuously variable transmission including a primary pulley which includes two primary sheaves and is arranged to change the widths of the two primary sheaves by the electric motor, a secondary pulley, and a dry belt which is wound onto the primary pulley and the secondary pulley and has a slide portion which is a part in contact with the primary pulley and the secondary pulley and not lubricated by lubricant, and
the controller is configured to change the transmission ratio by changing the widths of the two primary sheaves by controlling the electric motor.

4. The leaning vehicle according to any one of claims 1 to 3, wherein
the electric-motor-driven automatic-controlled transmission is a stepped gearbox including an actuator driven by the electric motor and transmission gears selectable by the actuator, and the controller is configured to select one of the transmission gears by controlling the actuator by the electric motor, so as to change the transmission ratio.

5. The leaning vehicle according to any one of claims 1 to 4, wherein
a rotating electric machine rotational axis which is a rotational axis of the upstream rotating electric machine is provided on the same linear line as a crankshaft rotational axis which is a rotational axis of the crankshaft, and
the upstream rotating electric machine is connected to the crankshaft.

6. The leaning vehicle according to any one of claims 1 to 4, wherein
a rotating electric machine rotational axis which is a rotational axis of the upstream rotating electric machine is provided to be parallel to a crankshaft rotational axis which is a rotational axis of the crankshaft, and
the upstream rotating electric machine is connected to the crankshaft via a power transmission mechanism which is configured to transmit the power.

7. The leaning vehicle according to any one of claims 1 to 6, wherein while the leaning vehicle accelerates or decelerates, the controller is configured to calculate the torque imparted by the upstream rotating electric machine based on at least one of an engine rotation speed which is a rotation speed of the crankshaft, a rotating electric machine rotation speed which is a rotation speed of the upstream rotating electric machine, and the transmission ratio of the electric-motor-driven automatic-controlled transmission.

8. The leaning vehicle according to any one of claims 1 to 7, wherein while the leaning vehicle accelerates or decelerates, the controller is configured to calculate the transmission ratio changed by the electric-motor-driven automatic-controlled transmission, based on at least one of an operation amount of an accelerator grip and the speed of the leaning vehicle.

9. The leaning vehicle according to any one of claims 1 to 8, wherein
the controller includes a transmission control unit configured to perform the transmission control and a rotating electric machine control unit configured to perform the rotating electric machine control, and
the transmission control unit and the rotating electric machine control unit are formed in a single apparatus.

10. The leaning vehicle according to any one of claims 1 to 8, wherein
the controller includes a transmission control unit configured to perform the transmission control and a rotating electric machine control unit configured to perform the rotating electric machine control, and
the transmission control unit and the rotating electric machine control unit are formed in two different apparatuses, respectively.

## Amended claims

### Amended claims under Art. 19.1 PCT

1. A leaning vehicle comprising a vehicle body frame which is structured to lean rightward of the leaning vehicle when turning right and to lean leftward of the leaning vehicle when turning left;
an engine main body unit which includes a crankshaft;
an electric-motor-driven automatic-controlled transmission which is connected to the crankshaft and is configured to transmit power of the engine main body unit at a transmission ratio set by an electric motor;
at least one driving wheel which is connected to the electric-motor-driven automatic-controlled transmission and is configured to generate a driving force by the power transmitted from the electric-motor-driven automatic-controlled transmission;
an upstream rotating electric machine which is a rotating electric machine provided upstream of the electric-motor-driven automatic-controlled transmission on a power transmission path on which the power is transmitted from the crankshaft to the at least one driving wheel, and which is configured to impart a torque in a reverse rotational direction of the crankshaft and to impart a torque in a positive rotational direction of the crankshaft, to the upstream of the electric-motor-driven automatic-controlled transmission on the power transmission path; and
a controller which is able to perform both transmission control of changing the transmission ratio by controlling the electric motor of the electric-motor-driven automatic-controlled transmission and rotating electric machine control of changing the torque imparted to the upstream of the electric-motor-driven automatic-controlled transmission on the power transmission path by controlling the upstream rotating electric machine, while the leaning vehicle accelerates or decelerates, wherein (1) while the leaning vehicle accelerates, the controller is configured to perform either acceleration transmission control of changing the transmission ratio by controlling the electric motor of the electric-motor-driven automatic-controlled transmission or acceleration rotating electric machine control of changing a torque in a positive rotational direction of the crankshaft imparted to the upstream of the electric-motor-driven automatic-controlled transmission on the power transmission path by controlling the upstream rotating electric machine, or (2) while the leaning vehicle decelerates, the controller is configured to perform either deceleration transmission control of changing the transmission ratio by controlling the electric motor of the electric-motor-driven automatic-controlled transmission or deceleration rotating electric machine control of changing the torque in the reverse rotational direction of the crankshaft imparted to the upstream of the electric-motor-driven automatic-controlled transmission on the power transmission path by controlling the upstream rotating electric machine.

2. The leaning vehicle according to claim 1, wherein the controller is configured to
(1) perform the acceleration transmission control and the acceleration rotating electric machine control in a switching manner or simultaneously performs the acceleration transmission control and the acceleration rotating electric machine control, while the leaning vehicle accelerates, and
(2) perform the deceleration transmission control and the deceleration rotating electric machine control in a switching manner or simultaneously performs the deceleration transmission control and the deceleration rotating electric machine control, while the leaning vehicle decelerates.

3. The leaning vehicle according to claim 1 or 2, wherein the electric-motor-driven automatic-controlled transmission is a continuously variable transmission including a primary pulley which includes two primary sheaves and is arranged to change the widths of the two primary sheaves by the electric motor, a secondary pulley, and a dry belt which is wound onto the primary pulley and the secondary pulley and has a slide portion which is a part in contact with the primary pulley and the secondary pulley and not lubricated by lubricant, and
the controller is configured to change the transmission ratio by changing the widths of the two primary sheaves by controlling the electric motor.

4. The leaning vehicle according to any one of claims 1 to 3, wherein
the electric-motor-driven automatic-controlled transmission is a stepped gearbox including an actuator driven by the electric motor and transmission gears selectable by the actuator, and
the controller is configured to select one of the transmission gears by controlling the actuator by the electric motor, so as to change the transmission ratio.

5. The leaning vehicle according to any one of claims 1 to 4, wherein
a rotating electric machine rotational axis which is a rotational axis of the upstream rotating electric machine is provided on the same linear line as a crankshaft rotational axis which is a rotational axis of the crankshaft, and
the upstream rotating electric machine is connected to the crankshaft.

6. The leaning vehicle according to any one of claims 1 to 4, wherein
a rotating electric machine rotational axis which is a rotational axis of the upstream rotating electric machine is provided to be parallel to a crankshaft rotational axis which is a rotational axis of the crankshaft, and
the upstream rotating electric machine is connected to the crankshaft via a power transmission mechanism which is configured to transmit the power.

7. The leaning vehicle according to any one of claims 1 to 6, wherein while the leaning vehicle accelerates or decelerates, the controller is configured to calculate the torque imparted by the upstream rotating electric machine based on at least one of an engine rotation speed which is a rotation speed of the crankshaft, a rotating electric machine rotation speed which is a rotation speed of the upstream rotating electric machine, and the transmission ratio of the electric-motor-driven automatic-controlled transmission.

8. The leaning vehicle according to any one of claims 1 to 7, wherein while the leaning vehicle accelerates or decelerates, the controller is configured to calculate the transmission ratio changed by the electric-motor-driven automatic-controlled transmission, based on at least one of an operation amount of an accelerator grip and the speed of the leaning vehicle.

9. The leaning vehicle according to any one of claims 1 to 8, wherein
the controller includes a transmission control unit configured to perform the transmission control and a rotating electric machine control unit configured to perform the rotating electric machine control, and
the transmission control unit and the rotating electric machine control unit are formed in a single apparatus.

10. The leaning vehicle according to any one of claims 1 to 8, wherein
the controller includes a transmission control unit configured to perform the transmission control and a rotating electric machine control unit configured to perform the rotating electric machine control, and
the transmission control unit and the rotating electric machine control unit are formed in two different apparatuses, respectively.
